# EUROPEAN PATENT SPECIFICATION

(11) **EP 1 296 991 B1**
(45) Date of publication and mention of the grant of the patent: **15.05.2013**
(21) Application number: 01946460.1
(22) Date of filing: 18.06.2001
(51) Int. Cl.: C07F 7/18

(54) **SILOXY SUBSTITUTED COCATALYST ACTIVATORS FOR OLEFIN POLYMERIZATION**
SILOXY SUBSTITUIERTE COKATALYSATORAKTIVATOREN FÜR OLEFINPOLYMERISATION
ACTIVATEURS DE COCATALYSTE A SUBSTITUTION SILOXY POUR LA POLYMERISATION DE L'OLEFINE

(30) Priority: 23.06.2000 US 602289; 23.06.2000 US 599909
(43) Date of publication of application: 02.04.2003
(73) Proprietor: ExxonMobil Chemical Patents Inc., Baytown, TX 77520-5200 (US)
(72) Inventor: RODRIGUEZ, George, Houston, TX 77059 (US)
(74) Representative: Mareschal, Anne
(86) International application number: PCT/US2001/019392
(87) International publication number: WO 2002/000666

(56) References cited:
- WO-A-96/28480
- WO-A-97/19959
- US-A- 5 502 017

## Description

### TECHNICAL FIELD

This invention relates to polymerization cocatalyst compounds containing weakly coordinating Group 13 element anions and to the preparation of olefin polymers using ionic catalyst systems based on organometallic transition metal cationic compounds stabilized by these anions.

### BACKGROUND ART

The term "noncoordinating anion" is now accepted terminology in olefin and vinyl monomer polymerization. See, for example, EP 0 277 003, EP 0 277 004, U.S. patent 5,198,401, U.S. patent 5,278,119, and Baird, Michael C., et al, J. Am. Chem. Soc. 1994, 116, 6435-6436. The noncoordinating anions are described to function as electronic stabilizing cocatalysts, or counterions, for essentially cationic metallocene complexes that are polymerization active. The term noncoordinating anion encompasses truly noncoordinating anions and coordinating anions that coordinate weakly enough at the insertion site to be replaced by olefinically or acetylenically unsaturated monomers. These noncoordinating anions can be effectively introduced into a polymerization medium, or mixed with an organometallic catalyst before they are introduced into the polymerization medium, as Bronsted acid salts containing charge-balancing countercations. See also, the review articles by S. H. Strauss, "The Search for Larger and More Weakly Coordinating Anions", Chem. Rev., 93, 927-942 (1993).

Olefin solution polymerization is generally conducted in aliphatic solvents that serve to maintain reaction temperature and solvate the polymer products. But aryl-group-containing activators, such as those having phenyl derivatives and other fused or pendant aryl-group substituents, are at best sparingly soluble in aliphatic solvents and typically are introduced in aryl solvents such as toluene. This introduces aryl-containing contaminants into the solution polymerization (and the product) that should be removed. Alternatively, relatively insoluble catalyst components can be introduced via slurry methods, but such methods required specialized handling and pumping procedures that complicate and harms industrial scale plant design and operation. Low solubility also harms low temperature operation, such as typical adiabatic processes, carried out in areas subject to low ambient temperatures. Moreover, separating or counteracting aromatic-solvent build up in the recycle system is another problem. At the same time, maintenance of high polyolefin molecular weights while operating at desired high polymerization (economically preferred) temperatures and high production rates is desired. Thus, olefin polymerization cocatalyst activators that are more aliphatic-solvent soluble particularly at elevated temperatures are desired.

U.S. patent 5,502,017, to Marks et al., addresses ionic metallocene olefin polymerization catalysts containing a weakly coordinating anion comprising boron substituted with halogenated aryl substituents preferably containing silylalkyl substitution, such as a t-butyldimethyl-silyl substitution. Marks et al. disclose the weakly coordinating anion as the cocatalyst. The silylalkyl substitution is said to increase the solubility and thermal stability of the resulting metallocene salts. Examples 3-5 describes synthesis of and polymerization with the cocatalyst compound triphenylcarbenium tetrakis (4-dimethyl-t-butylsilyl-2, 3, 5, 6-tetrafluorophenyl) borate.

In view of the above, there is a continuing need for activating cocatalyst compounds both to improve the industrial economics of solution polymerization and to provide alternative activators for olefin polymerization catalyst systems.

### BRIEF SUMMARY

The invention provides anion-containing cocatalyst precursors that can be combined with organometallic catalyst precursors to form active olefin polymerization catalysts. Olefin polymerization can be conducted by contacting an activated catalyst with a suitable monomer or mixture of monomers, i.e. those having accessible olefinic, acetylenic, or other unsaturation. The catalyst can be activated, *in situ,* essentially concurrent with, or before, contacting the monomer. Invention catalyst systems can prepare polymers and copolymers from olefinically and acetylenically unsaturated monomers. Cocatalyst precursor anions [A]⁻ contain a central Group-13 core connected to fluoroaryl ligands. At least one of the fluoroaryl ligands is substituted in its para-position (para-substituted) with a siloxy group represented by the symbols -OSiR₃. R represents one or more alkyl or alkylsilyl groups. When the anions are to be used with anilinium or ammonium cations, the R-groups are secondary, or even tertiary, alkyl or alkylsilyl groups as long as the R-group's bulk does not cause steric problems.

WO 96/28480 discloses a supported catalyst component comprising an activator compound comprising a cation which is capable of reacting with a transition metal compound and a compatible anion having up to 100 non-hydrogen atoms and containing at least one substituent comprising an active hydrogen moiety.

WO-A-97/19959 discloses supported catalysts for addition polymerizations comprising (i) an inorganic oxide material and (ii) an activator compound comprising a cation which is capable of reacting with a transition metal compound to form a catalytically active transition metal complex and a compatible anion containing at least one substituent capable of reacting with the inorganic oxide to covalently bond the compatible anion to the support.

Preferred invention cocatalyst activators can be represented by the following formula:

[Ct]⁺ [M(ArF)ₙ((ArF)OSiR₃)₄₋ₙ]⁻,

where [Ct]⁺ is a cation capable of abstracting an alkyl group, or breaking a carbon-metal connection from organometallic compounds containing that type of connection. Such a cation is known as an activating cation. M is a Group-13 element, preferably boron or aluminum, ArF is a fluorinated aryl group, each R is independently selected from C₁-C₃₀ hydrocarbyl or hydrocarbylsilyl substituents, preferably attached to the Si atom through a secondary or tertiary carbon atom, and n is 0 or 3.

### DETAILED DESCRIPTION

Exemplary ArF ligands and substituents specifically include fluorinated aryl groups, preferably perfluorinated aryl groups, and include substituted ArF groups having substituents other than the fluorine substitution, such as fluorinated hydrocarbyl groups. Preferred fluorinated aryl groups include phenyl, biphenyl, napthyl, indenyl, fluorenyl, anthracenyl, pyrenyl, and their derivatives. The disclosures of U.S. patents 5,198,401, 5,296,433, 5,278,119, 5,447,895, 5,688,634, 5,895,771, WO 93/02099, WO 97/29845, WO 99/43717, and WO 99/42467 are particularly instructive as to suitable ArF chemical groups. In some embodiments, one-third of the hydrogen atoms on aromatic-ligand carbon atoms are replaced by fluorine atoms, and, preferably, the aryl ligands are perfluorinated. Perfluorinated means that each aryl hydrogen atom, unless substituted with an invention siloxy substituent, is substituted with fluorine or fluorocarbyl substituents, e.g., trifluoromethyl. The term "perfluorinated" also encompasses those aryl ligands in which all but one hydrogen atom in the para position is replaced with fluorine and the para-position hydrogen is replaced with an invention siloxy group.

The chart below shows additional suitable size ligands. 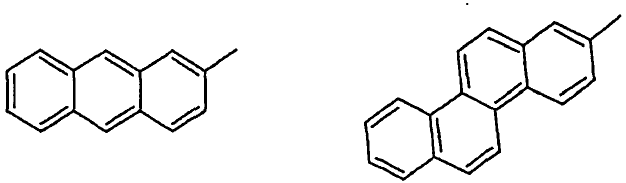 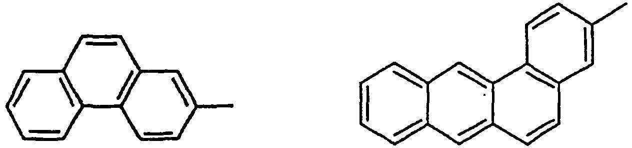 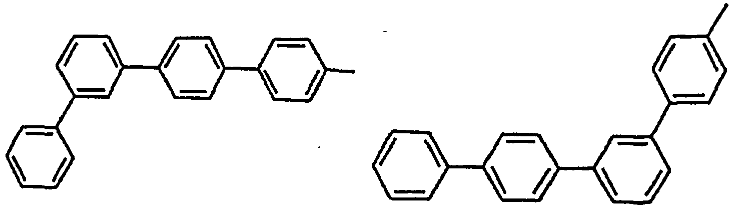 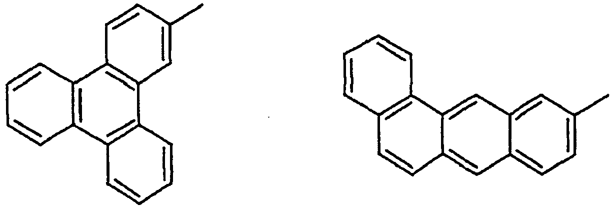 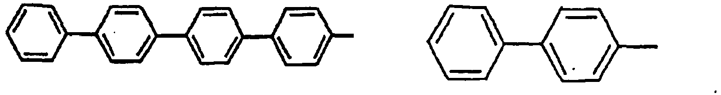 Essentially any of the defined R groups will be effective for olefin polymerization such as by solution, bulk, slurry and gas-phase processes. Exemplary R groups include methyl, ethyl, n-propyl, iso-propyl, n-butyl, tert-butyl, cyclohexyl, benzyl, methyltrimethylsilyl, methyltriethylsilyl. The R groups may be the same or different; in other words, mixed alkyl groups may be located on the siloxy silicon. Preferably, each R is a C₁₋₂₀ hydrocarbyl or hydrocarbylsilyl substituent, attached to the Si of the -O-Si- group using a secondary or tertiary carbon. Tertiary-carbon-containing substituents can be advantageously employed where the other R groups are less bulky, that is lower alkyl (C₁-C₄) primary or secondary alkyl substituents, to minimize steric hindrance. Counter to this, the R groups must be bulky enough to inhibit reaction between the siloxy group and the activated catalyst

Selecting R such that the cocatalyst anion is effectively soluble in aliphatic solvent is particular advantageous. "Effective solubility", and equivalent phraseology, means soluble enough to provided aliphatic-dissolved cocatalyst that is concentrated enough to activate industrially useful amounts of organometallic catalyst compounds without using slurries or aromatic solvents. For example, the selection of C₂ or higher carbon-number alkyl or silylalkyl groups on the silicon atom, provides effective solubility.

Effective cations (Ct⁺) can be any of those capable of abstracting monoanionic hydride, alkyl, or other hydrocarbyl or hydrocarbylsilyl ligands from organometallic polymerization catalysts, or cutting covalent metal-carbon η¹ or η² bonds in such catalysts. These are referred to as activating cations. Preferably, the cation essentially doesn't interfere with the ionic catalyst complexes formed from the catalyst precursor compounds. Suitable cations include nitrogen-containing cations such as the anilinium and ammonium salts of U.S. patent 5,198,401, and WO 97/35893, the trityl carbenium cations of US patent 5,387,568, metal cations, e.g., Ag⁺, the silylium cations of WO 96/08519, and hydrated Group-1 or -2 metal cations of US patent 5,767,208. Additionally, suitable cations include nitrogen- and carbon-based cations described in WO 97/35893, and in US patents 6,476,164 and 6,822,057. Thus hydrocarbyl, hydrocarbyl-amine, hydrocarbyl-silyl, C₁-C₂₀, and Group-1,-2,-11 and -12-based cations are suitable. An example of a hydrocarbyl-amine is N-pentafluorophenyl pyrrolidinium.

Invention cocatalysts may be prepared by synthetic methods as known in the art. In a typical procedure, bromo-tetrafluorophenol is converted to its siloxy-substituted counterpart by reacting it with a strong base such as potassium hydride. After that reaction, the resulting phenoxide is reacted with a trialkylchlorosilane. The reaction product is then reacted with BuLi and an appropriate amount of a boron or aluminum trihalide. The resulting lithium salt can then be converted to an activating cocatalyst salt by cation exchange with a halide salt, for example anilinium or ammonium salts. This reaction sequence is illustrated below.

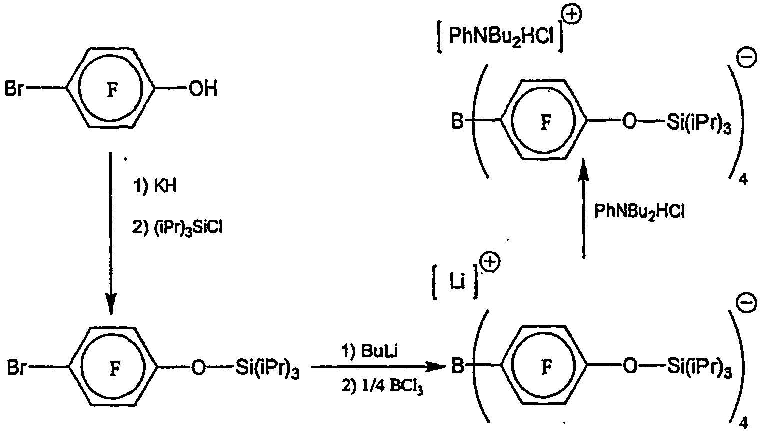

Organometallic precursors compounds suitable as olefin polymerization catalysts by coordination or insertion polymerization will include the known organometallic, transition metal compounds useful in traditional Ziegler-Natta coordination polymerization, particularly the metallocene compounds known to be useful in coordination polymerization, when such compounds are capable of catalytic activation by the cocatalyst activators described for the invention. These will typically include Group-3-10 transition metal compounds containing at least one metal ligand abstractable by the cocatalyst activators, e.g., hydride, hydrocarbyl, and hydrocarbylsilyl, and lower alkyl-substituted (C₁-C₁₀) derivatives of those. Examples include hydride, methyl, benzyl, dimethyl-butadiene. Abstractable ligands and transition metal compounds comprising them include those metallocenes described in the background art,' see for example US patents 5,198,401 and WO 92/00333. Syntheses of these compounds is well known from the published literature. Additionally, where the metal ligands include non-abstractable halogen, amido, or alkoxy ligands (for example, biscyclopentadienyl zirconium dichloride), which do not allow for ready abstraction with the invention cocatalysts, the ligands can be converted into abstractable ones via known alkylation reactions with organometallic compounds such as lithium or aluminum hydrides or alkyls, alkylalumoxanes, Grignard reagents. This treatment also modifies the ligand to facilitate olefin insertion during polymerization. See also EP 0 500 944 and EP 0 570 982 for the reaction of organoaluminum compounds with dihalo-substituted metallocene compounds before adding activators.

The patent literature describes yet other metallocene compounds suitable for use in this invention and with invention activators, e.g., EP-A-0 129 368, US patents 4,871,705, 4,937,299, 5,324,800, 5,470,993, 5,491,246, 5,512,693, EP-A-0 418 044, EP-A-0 591 756, WO-A-92/00333, WO-A-94/01471 and WO 97/22635. Suitable metallocene compounds are those that are activable into a cationic catalyst by a ligand abstraction. In addition to containing abstractable ligands, the metallocene can alternatively contain ligands that are made abstractable by alkylating the metallocene. For this invention, metallocenes or metallocene compounds mean mono- or biscyclopentadienyl-substituted Group-3, -4, -5, or -6 transition metal compounds in which the ancillary ligands may be substituted with one or more groups and may be bridged to each other, or through a heteroatom to the transition metal. (Ancillary ligands are Cp ligands, bridges between Cp ligands, or other coordinating ligands not directly involved in the polymerization reaction. Ancillary ligands, in general, control the sterics and environment around the metal center. It is believed that ancillary ligands are not abstracted to activate the metal center. Moreover, it is believed that ancillary ligands are not subject to monoolefin insertion into the ancillary ligand/metal center bond during the polymerization reaction). These ligands and bridging elements' size and constituency should be selected in the literature-described manner to enhance the desired polymerization activity and characteristics. In some embodiments, the cyclopentadienyl rings (including substituted cyclopentadienyl-based, fused ring systems, such as indenyl, fluorenyl, azulenyl, or their substituted analogs), when bridged to each other, will be lower-alkyl-substituted (C₁-C₆) in the 2 position (with or without a similar 4-position substituent in the fused ring systems) and can additionally comprise alkyl, cycloalkyl, aryl, alkylaryl, or arylalkyl substituents, the latter as linear, branched, or cyclic structures including multi-ring structures, for example, those of U.S. patents 5,278,264 and 5,304,614. Such substituents should each have essentially hydrocarbyl characteristics and will typically contain up to 30 carbon atoms, but may be heteroatom-containing with 1-5 non-hydrogen/carbon atoms, e.g., N, S, O, P, Ge, B and Si.

Further, metallocene compounds suitable for polyethylene or ethylene-containing copolymers (where copolymer means comprising at least two different monomers) are essentially any of those known in the art, see again WO-A-92/00333 and U.S. patents 5,001,205, 5,198,401, 5,324,800, 5,304,614 and 5,308,816, for specific listings. Selecting and making isotactic or syndiotactic polypropylene-producing metallocenes, see for example Journal of Organometallic Chemistry, 369, 359-370 (1989). Typically those catalysts are stereorigid asymmetric, chiral or bridged chiral metallocenes. See, for example, U.S. patent 4,892,851, U.S. patent 5,017,714, U.S. patent 5,296,434, U.S. patent 5,278,264, WO-A-(PCT/US92/10066) WO-A-93/19103, EP-A2-0 577 581, EP-A1-0 578 838, and academic literature "The Influence of Aromatic Substituents on the Polymerization Behavior of Bridged Zirconocene Catalysts", Spaleck, W., et al, Organometallics 1994, 13, 954-963, and "ansa-Zirconocene Polymerization Catalysts with Annelated Ring Ligands-Effects on Catalytic Activity and Polymer Chain Lengths", Brinzinger, H., et al, Organometallics 1994, 13, 964-970. Though many of the references above are directed to alumoxane activated catalyst systems, analogous metallocenes will be useful with invention co-catalyst activators for active coordination catalyst systems, when the halogen amide, or alkoxy-containing metal ligands (where occurring) are replaced with abstractable ligands as discussed above. See additional description in G. G. Hlatky, "Metallocene catalysts for olefin polymerization Annual review of 1996", Coordination Chemistry Reviews, 181, 243-296 (Elsevier Science, 1999).

Some representative metallocene compounds have the formula:

L^{A} L^{B} L^{C}ᵢ McDE

In this formula, Mc is a Group-3-6 metal. L^{A} is a substituted or unsubstituted cyclopentadienyl ligand connected to Mc. L^{B} is a member of the ligands class defined for L^{A} or L^{B} is heteroatom ligand, designated J, which is connected to Mc. The L^{A} and L^{B} ligands may bridge or connect each other through one or more Group-13-16 element-containing linking groups: L^{C}ᵢ is an optional neutral, non-oxidizing ligand connected to Mc (i=0 to 3). Finally, D and E are independent labile ligands connected to Mc. D & E are optionally bridged to each other or L^{A} or L^{B}. This connection can be broken by the activator and monomer can insert into this bond for polymerization. Also, the use of hetero-atom containing rings or fused rings, where a non-carbon Group 13, 14, 15 or 16 atom replaces one of the ring carbons is considered for this specification to be within the terms "cyclopentadienyl", "indenyl", and "fluorenyl". See, for example, the background and teachings of WO 98/37106, having common priority with U.S. Ser. No. 08/999,214, filed 12/29/97, and WO 98/41530, having common priority with U.S. Ser. No. 09/042,378, filed 3/13/98. Substituted cyclopentadienyl structures means that one or more hydrogen atoms is replaced with hydrocarbyl, hydrocarbylsilyl, or similar heteroatom-containing structures. The hydrocarbyl structures specifically include C₁-C₃₀ linear, branched, cyclic alkyl and cycloaromatic fused and pendent rings. These rings may also be substituted with similar structures.

Representative metallocene compounds include mono-cyclopentadienyl compounds such as pentamethylcyclopentadienyltitanium isopropoxide, pentamethylcyclopentadienyltribenzyl titanium, dimethylsilyltetramethylcyclopentadienyl-tert-butylamido titanium dichloride, pentamethylcyclopentadienyl titanium trimethyl, dimethylsilyltetramethylcyclopentadienyl-tert-butylamido zircconium dimethyl, dimethylsilyltetramethylcyclopentadienyl-dodecylamido hafnium dihydride, dimethylsilyltetramethylcyclopentadienyl-dodecylamido hafnium dimethyl, unbridged biscyclopentadienyl compounds such as bis(1,3-butyl, methylcyclopentadienyl) zircconium dimethyl, pentamethylcyclopentadienyl-cyclopentadienyl zirconium dimethyl, (tetramethylcyclopentadienyl)(n-propylcyclopentadienyl)zirconium dimethyl; bridged bis-cyclopentadienyl compounds such as dimethylsilyl-bis(tetrahydroindenyl) zirconium dichloride and silacyclobutyl(tetramethylcyclopentadienyl)(n-propyl-cyclopentadienyl) zirconium dimethyl; bridged bisindenyl compounds such as dimethylsilylbisindenyl zirconium dichloride, dimethylsilylbisindenyl hafnium dimethyl, dimethylsilylbis(2-methylbenzindenyl) zirconium dichloride, dimethylsilylbis(2-methylbenzindenyl) zirconium dimethyl; and fluorenyl ligand-containing compounds, e.g. diphenylmethyl(fluorenyl)(cyclopentadienyl)zirconium dimethyl; and the additional mono- and biscyclopentadienyl compounds such as those listed and described in U.S. patents 5,017,714, 5,324,800, WO 92/00333 and EP-A-0 591 756. Particular advantage in solution polymerization can be achieved by the use of aliphatic solvent-soluble precursor compounds, e.g., bis(para-triethylsilyl-phenyl) methylene (2, 7-(di-*tert*-butyl) fluorenyl)(cyclopentadienyl) hafnium dimethyl, however, the solubilizing effect of the aliphatic solvent-soluble anion compounds of the invention will tend to offset poor solubility for typical organometallic compound cations useful in olefin polymerization. See U.S. patents 6,528,670 and 6,214,593 for background as to soluble catalysts and specific metallocene and precursor cocatalyst cations useful with the current invention.

Representative traditional Ziegler-Natta transition metal compounds include tetrabenzyl zirconium, tetra bis(trumethylsiylmethyl) zirconium, oxo-tris(trimethlsilylmethyl) vanadium, tetrabenzyl hafnium, tetrabenzyl titanium, bis(hexamethyl disilazido)dimethyl titanium, tris(trimethyl silyl methyl) niobium dichloride, tris(trimethylsilylmethyl) tantalum dichloride. The important features of such compositions for coordination polymerization are the abstractable ligand and that ligand into which the ethylene (olefinic) group can be inserted. These features enable ligand abstraction from the transition metal compound and the concomitant formation of the invention catalysts.

Additional organometallic transition metal compounds suitable as olefin polymerization catalysts in accordance with the invention will be any of those Group 3-10 that can be converted by ligand abstraction or bond scission into a catalytically active cation and that can be stabilized or charge balanced in that active state by a noncoordinating or weakly coordinating anion. The non-coordinating anion should be sufficiently labile to be displaced by an olefinically unsaturated monomer such as ethylene.

Exemplary compounds include those described in the patent literature. International patent publications WO 96/23010, WO 97/48735 and Gibson, et. aL, Chem. Comm., pp. 849-850 (1998), disclose diimine-based ligands for Group-8-10 metal compounds shown to be suitable for ionic activation and olefin polymerization. See also WO 97/48735. Polymerization catalyst systems from Group-5-10 metals wherein the active transition metal center is in a high oxidation state and stabilized by low coordination number polyanionic ancillary ligand systems are described in U.S. patent 5,502,124 and patent 5,504,049. See also the Group-5 organometallic catalyst compounds of U.S. patent 5,851,945 and the tridentate-ligand-containing Group-5-10 organometallic catalyst compounds of U.S. patent 6,294,495. Group-11 catalyst precursor compounds, activable (capable of activation) with ionizing cocatalysts, useful for olefins and vinyl-group-containing polar monomers are described and exemplified in WO 99/30822 copending U.S. Patent Application Serial Number 08/991,160. (Filed 16 December 1997; allowed 14 March 2001).

U.S. patent 5,318,935 describes bridged and unbridged, bisamido catalyst compounds of Group-4 metals capable of α-olefins polymerization. Bridged bis(arylamido) Group-4 compounds for olefin polymerization are described by D. H. McConville. et al., in Organometallics 1995, 14, 5478-5480. Synthetic methods and compound characterization are presented. Further work appearing in D. H. McConville, et al, Macromolecules 1996, 29, 5241-5243, describes bridged bis(arylamido) Group-4 compounds that are polymerization catalysts for 1-hexene. Additional invention-suitable transition metal compounds include those described in WO 96/40805. Cationic Group-3- or Lanthanide-metal olefin polymerization complexes are disclosed in copending U.S. application Ser. No. 09/408050. (Filed 29 September 1999). A monoanionic bidentate ligand and two monoanionic ligands stabilize those catalyst precursors, which are activable with invention ionic cocatalyst.

The literature contains many additional descriptions of suitable catalyst-precursor compounds. Compounds that contain abstractable ligands or that can be alkylated to contain abstractable ligands are suitable for the practice of this invention. See, for instance, V. C. Gibson, et al; "The Search for New-Generation Olefin Polymerization Catalysts: Life Beyond Metallocenes", Angew. Chem. Int. Ed., 38, 428-447 (1999).

When using the above catalysts, the catalyst system will generally employ one or more scavenging agents to remove polar impurities from the reaction environment and to increase catalyst activity. Any polymerization reaction components, particularly solvents, monomers, and catalyst feedstreams, can inadvertently introduce impurities and adversely affect catalyst activity and stability. Impurities decrease or even eliminate catalytic activity, particularly with ionizing-anion-activated catalyst systems. Polar impurities (or catalyst poisons) include water, oxygen, metal impurities. Preferably, these impurities are removed from or reduced in the reaction components before the components enter the reaction vessel. Impurities can be removed by chemically treating the components or by impurity-separation steps. Such treatment or separation can occur during or after component synthesis. In any case, the polymerization process will normally employ minor scavenging agent amounts. Typically, these scavengers will be organometallic such as the Group-13 compounds of U.S. Patents 5,153,157; 5,241,025; WO-A-91/09882; WO-A-94/03506; WO-A-93/14132; and WO 95/07941. Exemplary compounds include triethyl aluminum, triethyl borane, triisobutyl aluminum, methylalumoxane, and isobutyl alumoxane. In some embodiments, compounds having bulky or C6-C20 linear hydrocarbyl substituents connected to the metal or metalloid center are used because they coordinate to the active catalyst more weakly. Examples include triethylaluminum; bulky compounds, such as triisobutylaluminum; triisoprenylaluminum, and long-chain, linear-alkyl-substituted aluminum compounds, such as tri-n-hexylaluminum, tri-n-octylaluminum, or tri-n-dodecylaluminum. When alumoxane is used as the activator, any excess over that needed to activate the catalyst can act as a scavenger and additional organometallic scavengers may be unnecessary. Alumoxanes also may be used as scavengers with other activators, e.g., methylalumoxane and triisobutyl-alumoxane with boron-based activators. The scavenger amount is limited to that amount effective to enhance activity (and with that amount necessary for activation when used in a dual role) since excess amounts can poison the catalyst

Invention catalyst systems can polymerize unsaturated molecules that are conventionally recognized as metallocene polymerizable. Typical conditions include solution, slurry, gas-phase, and high-pressure polymerization. The catalysts may be supported, such as on inorganic oxide or polymeric supports and as such will be useful in those operating modes employing fixed-bed, moving-bed, fluid-bed, slurry, or solution processes conducted in single, series, or parallel reactors. Invention cocatalysts can also function in catalyst pre-polymerization. WO 98/55518 describes an invention support method for gas-phase or slurry polymerization.

The catalyst system of the present invention is employed in olefin polymerization methods in liquid phase (solution, slurry, suspension, bulk phase, or combinations thereof), in high-pressure liquid or supercritical fluid phase, or in gas phase. These processes may also be employed in singular, parallel, or series reactors. The liquid processes comprise contacting olefin molecules with the catalyst system in a suitable diluent or solvent and allowing those molecules to react long enough to produce the invention polymers. The term polymer encompasses both homo- and copolymers. Both aliphatic and aromatic hydrocarbyl solvents are suitable, e.g., hexane. In bulk and slurry processes, the supported catalysts typically contact a liquid monomer slurry. Gas-phase processes use a supported catalyst and follow any manner suitable for ethylene polymerization. Illustrative examples may be found in U.S. Patents 4,543,399; 4,588,790; 5,028,670; 5,382,638; 5352,749; 5,408,017; 5,436,304; 5,453,471; and 5,463,999; 5,767,208; and WO 95/07942.

The minimum polymerization reaction temperature is 40°C or 60°C. The temperature can go as high as 250°C. Alternatively, the temperature does not exceed 220°C. The minimum reaction pressure is 1 mm Hg (133 Pa); 0.1 bar (0.01 MPa), or 1.0 bar (0.1 MPa) .The maximum pressure is less than or equal to 2500 (250 MPa) bar, 1600 (160 MPa) bar or lower, or 500 (50 MPa) bar or less.

For homogenous solution polymerization, good results can be obtained when the quantity and type of solvent used to introduce the catalyst is controlled as well as the manner of introduction. Generally, skilled artisans believe it preferable to achieve full solution and avoid slurried systems, and hence fairly high concentrations of the catalyst, at low temperatures and to use low solvent amounts. The difficulty of meeting these objectives varies with the solubility of the non-coordinating anion and transition metal components. Some of the more active catalysts or those likely to give a higher molecular weight at a given temperature, may have reduced solubility or may be modified for increased solubility.

Embodiments of the invention are suitable for solution polymerization with bridged fluorenyl metallocene hafnium compounds coupled with naphthyl-group-containing, non-coordinating anions at polymerization temperatures > 110 °C, for elastomeric olefin copolymers, and, between 160 °C and 250 °C for plastomeric ethylene copolymers.

Linear polyethylene, including high and ultra-high molecular weight polyethylenes, including both homo- and copolymers with other alpha-olefin monomers, alpha-olefinic or non-conjugated diolefins, for example, C₃-C₂₀ olefins, diolefins or cyclic olefins, are produced by adding ethylene, and optionally one or more of the other monomers, to a reaction vessel under low pressure (typically < 50 bar), at a typical temperature of 40-250 °C with the invention catalyst that has been slurried with a solvent, such as hexane or toluene. Cooling typically removes polymerization heat. Gas-phase polymerization can be conducted, for example, in a continuous fluid bed gas-phase reactor operated at 2000-3000 kPa and 60-160 °C, using hydrogen as a reaction modifier (100-200 PPM), C₄-C₈ comonomer feedstreams (0.5-1.2 mol%), and C₂ feedstreams (25-35 mol%).

Ethylene-α-olefin (including ethylene-cyclic olefin and ethylene-α-olefin-diolefin) elastomers of high molecular weight and low crystallinity can be prepared using invention catalysts. This preparation uses traditional solution polymerization processes or processes that introduce ethylene into a slurry. The slurry is made up of -α-olefin or cyclic olefin, by themselves or mixed together. The slurry also can contain other (un)polymerizable components that act as polymerization diluents and that suspend the catalyst (system). Typical ethylene pressures will be between 10 and 1000 psig (69-6895 kPa), and the polymerization diluent temperature typically remains between 40 and 160 °C. The process can be carried out in one or more stirred tank reactors, operated in series or parallel.

Other olefinically unsaturated monomers can also be polymerized using invention catalysts, for example, styrene, alkyl-substituted styrenes, isobutylene, and other geminally disubstituted olefins, ethylidene norbornene, norbornadiene, dicyclopentadiene, and other olefinically-unsaturated monomers, including other cyclic olefins, such as cyclopentene, norbornene, alkyl-substituted norbornenes, and vinyl-group-containing polar monomers capable of coordinating polymerization. See, for example, U.S. Patents 5,635,573, 5,763,556, and WO 99/30822. Additionally, alpha-olefinic macromonomers may also be copolymerized yielding branch-containing olefin polymers. Furthermore, oligomerization, dimerization, hydrogenation, olefin/carbon monoxide copolymerization, hydroformulation, hydrosilation, hydroamination and related catalytic reactions employing organometallic cationic complexes can be accomplished using invention cocatalyst complexes with organometallic compounds suitably selected as known in the art.

Invention catalyst compositions can be used as described above individually for coordination polymerization or can be mixed with other olefin polymerization catalyst compounds to prepare polymer blends. Monomer and catalyst selection allows blends preparation under conditions analogous to those using individual catalyst compositions. Polymers having increased MWD for improved processing and other traditional benefits available from mixed-catalyst-system polymers can thus be achieved.

Blended polymers can be formed ex *situ* using mechanical blending or in *situ* using mixed catalyst systems. *In situ* blending seems to provide a more homogeneous product and allows one-step blend production. *In situ* blending involves combining more than one catalyst (i.e. a mixed catalyst system) in a reactor to simultaneously prepare multiple polymer products. This method requires additional catalyst synthesis. Mixed catalyst systems require catalyst actives to be matched. Furthermore, the polymers the catalysts produce at specific conditions and the catalyst response to changed polymerization conditions must be matched, as well.

The compound according to the invention comprises a cation [Ct]⁺ and a anion [An]⁻, in which the anion comprises a Group-13 element connected to at least one independently selected fluoroaryl ligand that is parasubstituted with a siloxy group represented by the symbols -OSiR₃, wherein each R is independently a C₁-C₃₀ hydrocarbyl or hydrocarbylsilyl substituent. Preferred embodiments include compounds represented by the formula: [Ct]⁺ [M(ArF)ₙ((ArF)OSiR₃)₄₋ₙ]⁻. In these cases [Ct]⁺ is an activating cation; M is boron or aluminum, ArF are each, independently, fluoroaryl groups, wherein each fluoroaryl group has at least one fluorine substitution; R are each, independently, C₁-C₂₀ hydrocarbyl or hydrocarbylsilyl substituent attached to the Si atom through a secondary or tertiary carbon atom, and n is 0 or 3.

Preferably, [Ct]⁺ is one of anilinium cations, ammonium cations, trityl carbenium cations, Group-11 metal cations, silylium cations, the cations of the hydrated salts of Group-1 or -2 metals, and derivatives of anilinium, ammonium, trityl carbenium, and silylium cations containing C₁-C₂₀ hydrocarbyl, hydrocarbylsilyl or hydrocarbylamine substituents for one or more hydrogen atoms of the cations.

Preferably, ArF is a fluorinated or perfluorinated aryl groups such phenyl, biphenyl, or naphthyl. Preferably, the fluoroaryl ligands are perfluorophenyl. Preferably, each of the fluoroaryl ligands is para-substituted with a siloxy group.

Each R is preferably a C₁-C₁₀ linear, branched, or cyclic, aliphatic hydrocarbyl or hydrocarbylsilyl substituent , and preferably, at least one R is alkyltrialkylsilyl where the alkyl groups are 1-20-carbon-atom radicals.

Preferably, the compound of the invention is represented by the formula [Ct]⁺ [M(ArF)ₙ((ArF)OSiR₃)₄₋ₙ]⁻ wherein [Ct]⁺ is an anilinium or ammonium cation; ArF is a fluorinated aryl group wherein the aryl moiety is one of phenyl, biphenyl, and naphthyl; each R is a C₁-C₂₀ hydrocarbyl substituent attached to the Si atom through a secondary carbon atom, and n is O or 3.

Preferably, the anion [An]⁻ has the formula [M((ArF)OSiR₃)₄]⁻.

Some exemplary catalyst systems are disclosed below. The format the list takes is cocatalyst precursor/catalyst precursor.

[isopropyl-ammonium]⁺[(3-{tri-{isopropyl)siloxy}-perfluorophenyl)bis(perfluorophenyl) (perfluoroanthracenyl)borate]⁻/ isopropyl (cyclopentadienyl) (fluorenyl) hafnium dimethyl; [isopropyl-ammonium]⁺[(4-{(triethylsilylmethyl)isopropylnonylsiloxy}perfluorophenyl) (pentafluoroanthracenyl) (perfluoroanthracenyl) (perfluorobiphenyl)aluminate]⁻/ dimethylsilyl(tetramethylcyclopentadienyl) (adamantylamido) titanium dichloride; [isopropyl-ammonium]⁺[(5-{hexylisopropyloctylsiloxy}perfluoroinden-1-yl)bis(2,3,6-trifluorophenyl) (perfluoropyrenylborate]⁻/ dimethylsilyl bisindenyl hafnium dimethyl; [isopropyl-ammonium]⁺[(5-{isopropylcyclohexyl (3-ethylnonyl)siloxy}perfluoronapth-1-yl)bis(tetrafluorofluorenyl) (4,5,7-trifluoronaphthyl)borate]⁻/ dimethylsilyl(tetramethylcyclopentadienyl) (tert-butylamido) titanium dichloride; (isopropyl-ammonium]⁺[(6-{(2,2-dimethyloctyl)isopropyl(2,2-dimethyloctyl)siloxy}-perfluoroanthracen-2-yl) (2',3',5'-trifluorobiphenyl) (2,3,6-trifluorophenyl) (perfluorobiphenyl)aluminate]⁻/ diphenylmethylene(cylcopentadienyl) (fluorenyl) hafnium dimethyl; [isopropyl-ammonium]⁺[(6-{isopropyl(triethylsilylethyl) (triethylsilylhexyl)siloxy}-perfluorofluoren-2-yl)bis(perfluorobiphenyl) (perfluorophenyl)borate]⁻/ (4-n-butylphenyl) (4-t-butylphenyl)methylene (fluorenyl) (cyclopentadienyl) hafnium dimethyl; [methylphenylammonium]⁺[(5-{(triethylsilylmethyl)isopropylbenzylsiloxy}perfluoroinden-1-yl) (perfluorofluorenyl)(2,3,6-trifluorophenyl)(5,6,7,8-tetrafluoronaphthyl)borate]⁻/ dimethylsilyl(tetramethylcyclopentadienyl) (tert-butylamido) titanium dichloride; [methylphenylammonium]⁺[(5-{tri-(isopropyl)siloxy}perfluoronapth-2-yl) (perfluoronaphthyl) (perfluorobiphenyl) (4,5,7-trifluoronaphthyl)borate]⁻/ diphenylmethyl (cylcopentadienyl) (2,7-di-t-butyl-fluorenyl) hafnium dimethyl; [methylphenylammonium]⁺[(7-{( triethylsilylpropyl)benzylisopropylsiloxy}perfluoronapth-2-yl)(2,3,6-trifluorophenyl) (perfluorofluorenyl) (perfluorophenyl)borate]⁻/ bis(4-(triethylsilyl)phenyl)methylene (cyclopentadienyl) (fluorenyl)hafnium dimethyl; [methylphenylammonium]⁺[(7-{( triethylsilylpropyl)benzylisopropylsiloxy}perfluoronapth-2-yl) (2,3,6-trifluorophenyl) (perfluorofluorenyl) (perfluorophenyl)borate]⁻/ methylene (indenyl) (2,7-di-t-butyl-fluorenyl) hafnium dimethyl; [methylphenyl-phosphonium]⁺[(4'-{tri-(isopropyl)siloxy}perfluorobiphen-4-yl) (pentalfluoropyrenyl) (4,5,7-trifluoronaphthyl) (2',3',4'-trifluorobiphenyl)borate]⁻/ dimethylsilyl (tetramethylcyclopentadienyl) (t-butylamino) titanium dimethyl; [methylphenyl-phosphonium]⁺[(4'-{tri-(isopropyl)siloxy}perfluorobiphen-4-yl) (pentalfluoropyrenyl) (4,5,7-trifluoronaphthyl) (2',3',4'-trifluorobiphenyl)borate]-/ dimethylsilyl bis(2-methyl-4-phenyl-indenyl) hafnium dimethyl; [methylphenyl-phosphonium]⁺[(4'-{tri-(isopropyl)siloxy}perfluorobiphen-4-yl) (perfluorobiphenyl) (4,5,6,7-tetrafluoronaphthyl) (tetrafluorofluorenyl)borate]⁻/ diphenylmethylene (2,7-di-n-butyl fluorenyl) (cyclopentadienyl) hafnium dimethyl; [methylphenyl-phosphonium]⁺[(4-{tri-(isopropyl)siloxy}perfluorophenyl) (perfluorophenyl) (4,5,7-trifluoronaphthyl) (perfluorobiphenyl)borate]⁻/ bis(4-triethylsilylphenyl)methylene(cyclopentadienyl) (2,7-di-t-butyl-fluorenyl)hafnium dimethyl; [methylphenyl-phosphonium]⁺[(4-{tri-(isopropyl)siloxy}perfluorophenyl) (perfluorophenyl) (4,5,7-trifluoronaphthyl) (perfluorobiphenyl)borate]⁻/ dimethylsilyl(tetramethylcyclopentadienyl) (adamantylamido) titanium dichloride; [methylphenyl-phosphonium]⁺[(4-{tri-(isopropyl)siloxy}perfluorophenyl)bis(perfluorophenyl) (perfluoroanthracenyl)borate]⁻/ dimethylsilyl (tetramethylcyclopentadienyl) (adamantyl-1-amino) titanium dimethyl; [methylphenyl-phosphonium]⁺[(6-{(tri-n-propylsilylhexyl)isopropyloctylsiloxy}perfluoronapth-2-yl) (2',3',5'-trifluorobiphenyl) (tetrafluorofluorenyl) (perfluoropyrenyl)borate]⁻/ (pentamethylcyclopentadienyl) (cyclopentadienyl)zirconium dimethyl; [methylphenyl-phosphonium]⁺[(6-{tri-(isopropyl)siloxy}-perfluorofluoren-1-yl)bis(perfluoroanthracenyl) (perfluorophenyl)borate]⁻/ bis(4-triethylsilylphenyl)methylene(cyclopentadienyl) (fluorenyl)hafnium dimethyl; [methylphenyl-phosphonium]⁺[(7-{(trimethylsilylethyl)(t-butyl) (triethylsilylethyl)siloxy}-perfluorofluoren-2-yl) (2,3,4-trifluorophenyl) (4,5,6-trifluoronaphthyl) (perfluorobiphenyl)borate]⁻/ methylene (2,7-di-t-butyl fluorenyl) (fluorenyl) hafnium dimethyl; [methylphenyl-phosphonium]⁺[(7-{di-(isopropyl) (2,2-dimethyloctyl)siloxy}perfluorofluoren-1-yl) (perfluorobiphenyl) (5,6,7,8-tetrafluoronaphthyl) (2',3',5'-trifluorobiphenyl)borate]⁻/ di(4-n-butylphenyl)methylene (2,7-dimethyl fluorenyl) (cyclopentadienyl) hafnium dimethyl; [methylphenyl-phosphonium]⁺[(7-{ethyl(methyldiethylsilyloctyl)isopropylsiloxy}-perfluoroanthracen-1-yl)bis(perfluorophenyl) (tetrafluorofluorenyl)borate]⁻/diphenylmethylene (2,7-di-t-butyl fluorenyl) (fluorenyl) hafnium dimethyl; [methylphenyl-phosphonium]⁺[(7-{hexylisopropyl (3-ethylnonyl)siloxy}perfluoropyren-2-yl) (2,3,6-trifluorophenyl) (4,5,6-trifluoronaphthyl) (perfluoropyrenyl)borate]⁻/ dimethylsilyl(tetramethylcyclopentadienyl) (t-butylamido) zirconium dimethyl; [methylphenyl-phosphonium]⁺[(7-{tri-(isopropyl)siloxy}-perfluoroanthracen-1-yl)bis(4,5,6-trifluoronaphthyl) (2',3',4'-trifluorobiphenylborate]⁻/ methylene bis(fluorenyl) hafnium dimethyl; [N,N-di(dodecyl)-anilinium]⁺[(3-{tri-(isopropyl)siloxy}fluorophenyl) (5,6,7,8-tetrafluoronaphthyl) (perfluorofluorenyl) (perfluorobiphenyl)borate]⁻/ dimethylsilyl(tetramethylcyclopentadienyl) (t-butylamido) zirconium dimethyl; [N,N-di(dodecyl)-anilinium]⁺[(3-{tri-(isopropyl)siloxy}fluorophenyl) (5,6,7,8-tetrafluoronaphthyl) (perfluorofluorenyl) (perfluorobiphenyl)borate]⁻/ diphenylmethyl (cylcopentadienyl) (2,7-di-t-butyl-fluorenyl) hafnium dimethyl; [N,N-di(dodecyl)-anilinium]⁺[(4-{di-((methyldiethylsilyloctyl) (tri-(isopropyl)silyloctyl)siloxy}perfluorophenyl) (pentafluoroanthracenyl) (perfluorobiphenyl) (4,5,6,7-tetrafluoronaphthyl)aluminate]⁻/ diphenylmethylene(cylcopentadienyl) (2,7-methyl-fluorenyl) hafnium dimethyl; [N,N-di(dodecyl)-anilinium]⁺[(4'-{tri-(isopropyl)siloxy}perfluorobiphen-3-yl) (2,3,4-trifluorophenyl) (perfluorobiphenyl) (4,5,6-trifluoronaphthyl)borate]⁻/ dimethylsilyl (indenyl) (fluorenyl) hafnium dihydride; [N,N-di(dodecyl)-anilinium]⁺[(4'-{tri-(isopropyl)siloxy}perfluorobiphen-3-yl) (2,3,4-trifluorophenyl) (perfluorobiphenyl) (4,5,6-trifluoronaphthyl)borate]⁻/ diphenylmethyl (cylcopentadienyl) (2,7-di-t-butyl-fluorenyl) hafnium dimethyl; [N,N-di(dodecyl)-anilinium]⁺[(4-{tri-(isopropyl)siloxy}perfluorophenyl) (perfluorophenyl) (2,3,5-trifluorophenyl) (perfluoronaphthyl)borate]⁻/ dimethylsilyl bis(2-methyl-indenyl) hafnium dimethyl; [N,N-di(dodecyl)-anilinium]⁺[(4-{tri-(isopropyl)siloxy}perfluorophenyl) (perfluorophenyl) (4,5,6-trifluoronaphthyl) (perfluorofluorenyl)borate]⁻/ bis(1,3-dibutyl-methyl-cyclopentadienyl) zirconium dimethyl; [N,N-di(dodecyl)-anilinium]⁺[(4-{tri-(isopropyl)siloxy}-perfluorophenyl)bis(perfluorophenyl) (4,5,6-trifluoronaphthylaluminate]⁻/ dimethylsilyl (indenyl) (fluorenyl) hafnium dihydride; [N,N-dimethyl-anilinium]⁺[(2'-{(triethylsilylhexyl)benzylisopropylsiloxy}perfluorobiphen4-yl) (perfluorobiphenyl) (perfluorofluorenyl) (perfluorophenyl)borate]⁻/(tetramethyl-cyclopentadienyl) (n-propylcyclopentadienyl) zirconium dimethyl; [N,N-dimethyl-anilinium]⁺[(2'-{di-((methyldiethylsilyloctyl))cyclohexylsiloxy}perfluorobiphen-4-yl)bis(perfluorophenyl) (perfluorobiphenylborate]⁻/ dimethylsily (bisindenyl) zirconium dichloride; [N,N-dimethyl-anilinium]⁺[(2'-{tri-(isopropyl)siloxy}perfluorobiphen-4-yl) (perfluorophenyl) (perfluoroanthracenyl) (perfluorofluorenyl)aluminate]-/ diphenylmethyl (fluorenyl) (cyclopentadienyl) zirconium dimethyl; [N,N-dimethyl-anilinium]⁺[(2'-{tri-(isopropyl)siloxy}-perfluorobiphen-4-yl)bis(perfluoropyrenyl) (perfluorophenylborate]⁻/ dimethylsilyl bis(2-propyl-indenyl) hafnium dimethyl; [N,N-dimethyl-anilinium]⁺[(3'-{(t-butyl)isopropyl(triethylsilylhexyl)siloxy}perfluorobiphen-4-yl)bis(perfluorophenyl) (perfluorobiphenyl)borate]⁻/ diphenylmethylene (2,7-di-n-butyl fluorenyl) (cyclopentadienyl) hafnium dimethyl; [N,N-dimethyl-anilinium]⁺[(3-{(triethylsilylethyl)isopropyl(tri-n-propylsilylhexyl)siloxy}perfluorophenyl) (perfluorobiphenyl) (perfluorophenyl) (4,5,6-trifluoronaphthyl)aluminate]⁻/ diphenylmethylene (2,7-di-t-butyl fluorenyl) (fluorenyl) hafnium dimethyl; [N,N-dimethyl-anilinium]⁺[(3'-{(triethylsilylhexyl) (3-ethylnonyl)isopropylsiloxy}-perfluorobiphen-4-yl) (perfluoronaphthyl) (4,5,7-trifluoronaphthyl) (2',3',5'-trifluorobiphenyl)borate]⁻/ (4-alkylphenyl) (4-t-butylphenyl)methylene(cylcopentadienyl) (fluorenyl) hafnium dimethyl; [N,N-dimethyl-anilinium]⁺[(3'-{(triethylsilylhexyl) (3-ethylnonyl)isopropylsiloxy}perfluorobiphen-4-yl) (perfluoronaphthyl) (4,5,7-trifluoronaphthyl) (2',3',5'-trifluorobiphenyl)borate]⁻/ (4-n-propylphenyl) (4-isopropylphenyl)methylene (fluorenyl) (cyclopentadienyl) hafnium dimethyl; [N,N-dimethyl-anilinium]⁺[(3-{benzylisopropylnonylsiloxy}perfluorophenyl)bis(perfluorophenyl) (perfluoroanthracenylaluminate]⁻/ dimethylsilylbis(tetrahydroindenyl) zirconium dichloride; [N,N-dimethyl-anilinium]⁺[(3-{di-((t-butyl)) (3-ethylnonyl)siloxy}-perfluorophenyl)bis(perfluorofluorenyl) (perfluorobiphenyl)borate]⁻/ diphenylmethylene(cylcopentadienyl) (2,7-di-t-butyl-fluorenyl) hafnium dimethyl; [N,N-dimethyl-anilinium]⁺[(3-{di-(isopropyl)n-butylsiloxy}perfluorophenyl) (4,5,6,7-tetrafluoronaphthyl) (perfluoropyrenyl) (5,6,7,8-tetrafluoronaphthyl)borate]⁻/ dimethylsilyl(tetramethylcyclopentadienyl) (dodecylamido) hafnium dimethyl; [N,N-dimethyl-anilinium]⁺[(3'-{tri-(isopropyl)siloxy}perfluorobiphen-4-yl)bis(perfluorophenyl) (perfluorobiphenyl)borate]⁻/ bis(1,3-dibutyl-methyl-cyclopentadienyl) zirconium dimethyl; [N,N-dimethyl-anilinium]⁺[(3-{tri-(isopropyl)siloxy}perfluorophenyl) (4,5,6-trifluoronaphthyl) (perfluorobiphenyl) (5,6,7,8-tetrafluoronaphthyl)borate]⁻/ dimethylsilyl bis(phenylmethylindenyl) hafnium dimethyl; [N,N-dimethyl-anilinium]⁺[(3-{tri-(isopropyl)siloxy}perfluorophenyl) (perfluorophenyl) (perfluorobiphenyl) (2',3',4'-trifluorobiphenyl)aluminate]⁻/ dimethylsilyl bis(2-methyl-4-naphth-2-yl-indenyl) hafnium dimethyl; [N,N-dimethyl-anilinium]⁺[(3-{tri-(isopropyl)siloxy}-perfluorophenyl)bis(perfluorobiphenyl) (4,5,7-trifluoronaphthylborate]⁻/ (4-n-butylphenyl) (4-t-butylphenyl)methylene(fluorenyl) (indenyl) hafnium dimethyl; [N,N-dimethyl-anilinium]⁺[(4-{ (3-ethylnonyl)isopropyl(tri-n-propylsilylhexyl)siloxy}perfluorophenyl) (perfluorobiphenyl) (2,3,5-trifluorophenyl) (perfluorophenyl)borate]⁻/ pentamethyl cyclopentadienyl tribenzyl titanium; [N,N-dimethyl-anilinium]⁺[(4'-{(triethylsilylpropyl) (triethylsilylethyl)cyclohexylsiloxy}-perfluorobiphen-3-yl) (2',3',5'-trifluorobiphenyl) (perfluorobiphenyl) (tetrafluorofluorenyl)borate]⁻/ dimethylsilyl bis(naphthylmethylindenyl) hafnium dimethyl; [N,N-dimethyl-anilinium]⁺[(4-{(triethylsilylpropyl)benzylisopropylsiloxy}perfluorophenyl) (perfluoronaphthyl) (perfluorophenyl) (perfluorobiphenyl)aluminate]⁻/ dimethylsilyl bisindenyl hafnium dimethyl; [N,N-dimethyl-anilinium]⁺[(4'-{(2,2-dimethyloctyl) (methyldiethylsilyloctyl)isopropylsiloxy}perfluorobiphen-3-yl) (perfluorophenyl) (2',3',4'-trifluorobiphenyl) (pentafluoroanthracenyl)aluminate]⁻/ dimethylsilyl (indenyl) (fluorenyl) hafnium dihydride; [N,N-dimethyl-anilinium]⁺[(4-{(methyldiethylsilyloctyl) (t-butyl)isopropylsiloxy}perfluorophenyl)bis(perfluorophenyl) (perfluoronaphthylborate]⁻/ (4-n-propylphenyl) (4-methylphenyl)methylene(fluorenyl) (indenyl) hafnium dimethyl; [N,N-dimethyl-anilinium]⁺[(4-{(methyldiethylsilyloctyl) (t-butyl)isopropylsiloxy}-perfluorophenyl)bis(perfluorophenyl) (perfluoronaphthylborate]⁻/ diphenylmethyl (fluorenyl) (cyclopentadienyl) zirconium dimethyl; [N,N-dimethyl-anilinium]⁺[(4-{(methyldiethylsilyloctyl) (t-butyl)isopropylsiloxy}perfluorophenyl)bis(perfluorophenyl) (perfluoronaphthylborate]⁻/ diphenylmethylene (2,7-di-n-butyl fluorenyl) (cyclopentadienyl) hafnium dimethyl; [N,N-dimethyl-anilinium]⁺[(4-{(methyldiethylsilyloctyl) (t-butyl)isopropylsiloxy}-perfluorophenyl)bis(perfluorophenyl) (perfluoronaphthylborate]⁻/ diphenylmethylene (cyclopentadienyl) (2,7-di-t-butyl fluorenyl) hafnium dimethyl; [N,N-dimethyl-anilinium]⁺[(4'-{(methyldiethylsilyloctyl)nonylisopropylsiloxy}perfluorobiphen-3-yl) (4,5,6,7-tetrafluoronaphthyl) (2,3,5-trifluorophenyl) (pentalfluoropyrenyl)borate]⁻/ (4-n-butylphenyl) (4-t-butylphenyl)methylene(2,7-dimethyl-fluorenyl) (indenyl) hafnium dibenzyl; [N,N-dimethyl-anilinium]⁺[(4'-{(tri-(isopropyl)silyloctyl) (tri-n-propylsilylhexyl)isopropylsiloxy}-fluorobiphen-4-yl)bis(perfluorophenyl) (2,3,6-trifluorophenylborate]⁻/ diphenylmethylene (2,7-di-n-butyl fluorenyl) (cyclopentadienyl) hafnium dimethyl; [N,N-dimethyl-anilinium]⁺[(4-{(tri-(isopropyl)silyloctyl)isopropyl(3-ethylnonyl)siloxy}perfluorophenyl)bis(perfluorophenyl) (perfluoropyrenyl)borate]⁻/ (4-alkylphenyl) (4-t-butylphenyl)methylene(cylcopentadienyl) (fluorenyl) hafnium dimethyl; [N,N-dimethyl-anilinium]⁺[(4-{(triethylsilylethyl)isopropylbenzylsiloxy}perfluorophenyl) (4,5,6-trifluoronaphthyl) (2,3,5-trifluorophenyl) (perfluoronaphthyl)borate]⁻/ dimethylsilyl bis(2-methyl-indenyl) hafnium dimethyl; [N,N-dimethyl-anilinium]⁺[(4-{(triethylsilylhexyl)isopropylcyclohexylsiloxy}-perfluorophenyl)bis(2,3,5-trifluorophenyl) (perfluorofluorenyl)borate]⁻/ dimethylsilyl bis(2-methyl-4-naphth-2-yl-indenyl) hafnium dimethyl; [N,N-dimethyl-anilinium]⁺[(4-{(trimethylsilylethyl) (2,2-dimethyloctyl)isopropylsiloxy}perfluorophenyl) (perfluoronaphthyl) (perfluorophenyl) (perfluoroanthracenyl)borate]⁻/ methylene (2,7-di-t-butyl fluorenyl) (fluorenyl) hafnium dimethyl; [N,N-dimethyl-anilinium]⁺[(4'-{(trimethylsilylethyl)isopropyl(2,2-dimethyloctyl)siloxy}perfluorobiphen-3-yl)bis(perfluorophenyl) (5,6,7,8-tetrafluoronaphthylborate]⁻/ dimethylsilyl bis(phenylmethylindenyl) hafnium dimethyl; [N,N-dimethyl-anilinium]⁺[(4-{benzylisopropylnonylsiloxy}perfluorophenyl)bis(perfluorobiphenyl) (2,3,4-trifluorophenyl)borate]⁻/ diphenylmethylene (cyclopentadienyl) (2,7-dimethyl fluorenyl) hafnium dimethyl; [N,N-dimethyl-anilinium]⁺[(4-{di-((t-butyl)) (3-ethylnonyl)siloxy}-fluorophenyl) (4,5,6-trifluoronaphthyl) (2,3,6-trifluorophenyl) (perfluorobiphenyl)borate]⁻/ bis(1,3-dibutyl-methyl-cyclopentadienyl) zirconium dimethyl; [N,N-dimethyl-anilinium]⁺[(4'-{di-(isopropyl) (triethylsilylpropyl)siloxy}perfluorobiphen-4-yl)bis(perfluorophenyl) (4,5,6,7-tetrafluoronaphthylborate]⁻/ methylphenylmethylene bis(fluorenyl) hafnium dimethyl; [N,N-dimethyl-anilinium]⁺[(4-{isopropyl (3-ethylnonyl) (tri-n-propylsilylhexyl)siloxy}-perfluorophenyl)bis(perfluorophenyl) (perfluoropyrenyl)borate]⁻/ (4-n-butylphenyl) (4-t-butylphenyl)methylene(2,7-dimethyl-fluorenyl) (indenyl) hafnium dibenzyl; [N,N-dimethyl-anilinium]⁺[(4-{isopropyl(triethylsilylhexyl) (triethylsilylethyl)siloxy}perfluorophenyl) (perfluorophenyl) (2',3',5'-trifluorobiphenyl) (perfluoropyrenyl)borate]⁻/ bis(4-triethylsilylphenyl)methylene(cyclopentadienyl) (fluorenyl)hafnium dimethyl; [N,N-dimethyl-anilinium]⁺[(4-{isopropyl(trimethylsilylethyl)isopropylsiloxy}perfluorophenyl) (5,6,7,8-tetrafluoronaphthyl) (perfluorophenyl) (2',3',4'-trifluorobiphenyl)borate]⁻/ (4-n-propylphenyl) (4-methylphenyl)methylene(fluorenyl) (indenyl) hafnium dimethyl; [N,N-dimethyl-anilinium]⁺[(4-{isopropy)(trimethylsilylethyl)isopropylsiloxy}perfluorophenyl) (5,6,7,8-tetrafluoronaphthyl) (perfluorophenyl) (2',3',4'-trifluorobiphenyl)borate]⁻/ bis(1,3-dibutyl-methyl-cyclopentadienyl) zirconium dimethyl; [N,N-dimethyl-anilinium]⁺[(4'-{tri-(isopropyl)siloxy}perfluorobiphen-3-yl) (perfluoronaphthyl) (perfluorophenyl) (perfluoropyrenyl)borate]⁻/ di(4-n-butylphenyl)methylene (2,7-dimethyl fluorenyl) (cyclopentadienyl) hafnium dibenzyl; [N,N-dimethyl-anilinium]⁺[(4'-{tri-(isopropyl)siloxy}perfluorobiphen-3-yl)bis(perfluorophenyl) (5,6,7,8-tetrafluoronaphthyl)borate]⁻/ diphenylmethylene (cyclopentadienyl) (2,7-di-t-butyl fluorenyl) hafnium dimethyl; [N,N-dimethyl-anilinium]⁺[(4'-{tri-(isopropyl)siloxy}perfluorobiphen-4-yl) (4,5,7-trifluoronaphthyl) (2',3',4'-trifluorobiphenyl) (perfluorofluorenyl)borate]⁻/ dimethylsilyl bis(indenyl) hafnium dimethyl; [N,N-dimethyl-anilinium]⁺[(4'-{tri-(isopropyl)siloxy}-perfluorobiphen-4-yl) (4,5,7-trifluoronaphthyl) (2',3',4'-trifluorobiphenyl) (perfluorofluorenyl)borate]⁻/ methylene (indenyl) (2,7-di-t-butyl-fluorenyl) hafnium dimethyl; [N,N-dimethyl-anilinium]⁺[(4'-{tri-(isopropyl)siloxy)perfluorobiphen-4-yl) (perfluorofluorenyl) (perfluorobiphenyl) (pentalfluoropyrenyl)borate]⁻/ methylene (indenyl) (2,7-di-t-butyl-fluorenyl) hafnium dimethyl; [N,N-dimethyl-anilinium]⁺[(4'-{tri-(isopropyl)siloxy}perfluorobiphen-4-yl)bis(perfluorobiphenyl) (5,6,7,8-tetrafluoronaphthyl)borate]⁻/ dimethylsilyl(tetramethylcyclopentadienyl) (tert-butylamido) titanium dichloride; [N,N-dimethyl-anilinium]⁺[(4'-{tri-(isopropyl)siloxy}perfluorobiphen-4-yl)bis(perfluorobiphenyl) (5,6,7,8 tetrafluoronaphthyl)borate]⁻/ pentamethyl cyclopentadienyl tribenzyl titanium; [N,N-dimethyl-anilinium]⁺[(4-{tri-(isopropyl)siloxy}perfluorophenyl) (2',3',4'-trifluorobiphenyl) (2,3,5-trifluorophenyl) (2,3,6-trifluorophenyl)borate]⁻/ (4-n-butylphenyl) (4-t-butylphenyl)methylene(fluorenyl) (indenyl) hafnium dimethyl; [N,N-dimethyl-anilinium]⁺[(4-{tri-(isopropyl)siloxy}perfluorophenyl) (2',3',5'-trifluorobiphenyl) (perfluoropyrenyl) (perfluorobiphenyl)borate]⁻/ (4-n-butylphenyl) (4-t-butylphenyl)methylene (2,7-di-t-butyl-fluorenyl) (indenyl) hafnium dimethyl; (N,N-dimethyl-anilinium]⁺[(4-{tri-(isopropyl)siloxy}-perfluorophenyl) (2,3,6-trifluorophenyl) (2,3,5-trifluorophenyl) (perfluorobiphenyl)borate]⁻/ dibutylsilyl (fluorenyl) (cyclopentadienyl) hafnium dimethyl; [N,N-dimethyl-anilinium]⁺[(4-{tri-(isopropyl)siloxy}perfluorophenyl) (2,3,6-trifluorophenyl) (2,3,5-trifluorophenyl) (perfluorobiphenyl)borate]⁻/ pentamethylcyclopentadienyl titanium trimethyl; [N,N-dimethyl-anilinium]⁺[(4-{tri-(isopropyl)siloxy}perfluorophenyl) (perfluorofluorenyl) (2,3,5-trifluorophenyl) (perfluoropyrenyl)aluminate]⁻/ (4-n-butylphenyl) (4-t-butylphenyl)methylene(2,7-dimethyl-fluorenyl) (indenyl) hafnium dibenzyl; [N,N-dimethyl-anilinium]⁺[(4-{tri-(isopropyl)siloxy}perfluorophenyl) (perfluorophenyl) (perfluorobiphenyl) (4,5,6-trifluoronaphthyl)borate]⁻/ (4-n-butylphenyl) (4-t-butylphenyl)methylene(fluorenyl) (indenyl) hafnium dimethyl; [N,N-dimethyl-anilinium]⁺[(4-{tri-(isopropyl)siloxy}perfluorophenyl) (perfluorophenyl) (perfluorobiphenyl) (4,5,6-trifluoronaphthyl)borate]⁻/ (4-n-butylphenyl) (4-t-butylphenyl)methylene (2,7-di-t-butyl-fluorenyl) (indenyl) hafnium dimethyl; [N,N-dimethyl-anilinium]⁺[(4-{tri-(isopropyl)siloxy}-perfluorophenyl) (perfluorophenyl) (perfluorofluorenyl) (4,5,6,7-tetrafluoronaphthyl)borate]⁻/ di(4-n-butylphenyl)methylene (2,7-dimethyl fluorenyl) (cyclopentadienyl) hafnium dibenzyl; [N,N-dimethyl-anilinium]⁺[(4-{tri-(isopropyl)siloxy}perfluorophenyl)bis(perfluorobiphenyl) (perfluorophenyl)borate]⁻/ di(4-n-butylphenyl)methylene (2,7-dimethyl fluorenyl) (cyclopentadienyl) hafnium dimethyl; [N,N-dimethyl-anilinium]⁺[(4-(tri-(isopropyl)siloxy}-perfluorophenyl)bis(perfluorobiphenyl) (perfluorophenyl)borate]⁻/ dibutylsityl (fluorenyl) (cyclopentadienyl) hafnium dimethyl; [N,N-dimethyl-anilinium]⁺[(4-{tri-(isopropyl)siloxy}-perfluorophenyl)bis(perfluorophenyl) (4,5,6,7-tetrafluoronaphthyl)borate]⁻/ bis(4-(triethylsilyl)phenyl)methylene(cyclopentadienyl) (fluorenyl)hafnium dimethyl; [N,N-dimethyl-anilinium]⁺[(4-{tri-(isopropyl)siloxy}perfluorophenyl)bis(perfluorophenyl) (tetrafluorofluorenylaluminate]⁻/ (4-n-butylphenyl) (4-t-butylphenyl)methylene (2,7-di-t-butyl-fluorenyl) (cyclopentadienyl) hafnium dimethyl; [N,N-dimethyl-anilinium]⁺[(4-{tri-(isopropyl)siloxy}perfluorophenyl)bis(perfluorophenyl) (tetrafluorofluorenylaluminate]⁻/ bis(4-triethylsilylphenyl)methylene(cyclopentadienyl) (fluorenyl)hafnium dimethyl; [N,N-dimethyl-anilinium]⁺[(5-{(3-ethylnonyl)isopropyl(tri-n-propylsilylhexyl)siloxy}perfluoronapth-2-yl) (2',3',4'-trifluorobiphenyl) (tetrafluorofluorenyl) (perfluoropyrenyl)borate]⁻/ pentamethyl cyclopentadienyl tribenzyl titanium; (N,N-dimethyl-anilinium]⁺[(5-{(2,2-dimethyloctyl) (methyldiethylsilyloctyl)isopropylsiloxy}fluoroinden-2-yl) (perfluoronaphthyl) (perfluorofluorenyl) (perfluoropyrenyl)borate]⁻/ bis(4-(triethylsilyl)phenyl)methylene(cyclopentadienyl) (2,7-di-t-butyl-fluorenyl)hafnium dimethyl; [N,N-dimethyl-anilinium]⁺[(5-{(2,2-dimethyloctyl) (methyldiethylsilyloctyl)isopropylsiloxy}-fluoroinden-2-yl) (perfluoronaphthyl) (perfluorofluorenyl) (perfluoropyrenyl)borate]⁻/ dibutylsilyl (fluorenyl) (cyclopentadienyl) hafnium dimethyl; [N,N-dimethyl-anilinium]⁺[(5-{(2,2-dimethyloctyl) (triethylsilylethyl)isopropylsiloxy}fluoronapth-3-yl) (perfluoropyrenyl) (perfluorobiphenyl) (perfluorofluorenyl)borate]⁻/ diphenylmethyl (cylcopentadienyl) (2,7-dimethylfluorenyl) hafnium dimethyl; [N,N-dimethyl-anilinium]⁺[(5-{(2,2-dimethyloctyl) (triethylsilylethyl)isopropylsiloxy}fluoronapth-3-yl) (perfluoropyrenyl) (perfluorobiphenyl) (perfluorofluorenyl)borate]⁻/ silacyclobutyl(tetramethylcyclopentadienyl) (n-propylcyclopentadienyl) zirconium dimethyl; [N,N-dimethyl-anilinium]⁺[(5-{(2,2-dimethyloctyl)cyclohexyl(triethylsilylpropyl)siloxy}perfluoroinden-1-yl)bis(perfluorophenyl) (perfluorofluorenyl)borate]⁻/ (4-n-butylphenyl) (4-t-butylphenyl)methylene (2,7-di-t-butyt-fluorenyl) (indenyl) hafnium dimethyl; [N,N-dimethyl-anilinium]⁺[(5-{(2,2-dimethyloctyl)cyclohexyl(triethylsilylpropyl)siloxy}perfluoroinden-1-yl)bis(perfluorophenyl) (perfluorofluorenyl)borate]⁻/ dimethylsilyl (tetramethylcyclopentadienyl) (t-butylamino) titanium dimethyl; [N,N-dimethyl-anilinium]⁺[(5-{(methyldiethylsilyloctyl)isopropyl(tri-(isopropyl)silyloctyl)siloxy}perfluoronapth-2-yl)bis(perfluorophenyl) (perfluorofluorenyl)borate]⁻/ dimethylsilyl bis(indenyl) hafnium dimethyl; [N,N-dimethyl-anilinium]⁺[(5-{(trimethylsilylethyl) (triethylsilylpropyl)isopropylsiloxy}perfluoroinden-2-yl) (4,5,6,7-tetrafluoronaphthyl) (perfluoroanthracenyl) (pentafluoroanthracenyl)borate]⁻/ bis(trimethylsilyl) titanium dimethyl; [N,N-dimethyl-anilinium]⁺[(5-{cyclohexyl(triethylsilylpropyl)isopropylsiloxy}perfluoroinden-1-yl)bis(4,5,6-trifluoronaphthyl) (tetrafluorofluorenyl)borate]⁻/ dimethylsily-bisindenyl hafnium dimethyl; [N,N-dimethyl-anilinium]⁺[(5-{di-(isopropyl)hexylsiloxy}perfluoroinden-2-yl) (perfluorophenyl) (perfluoropyrenyl) (tetrafluorofluorenyl)borate]⁻/ bis(trimethylsilyl) titanium dimethyl; [N,N-dimethyl-anilinium]⁺[(5-(isopropyl(methyldiethylsilyloctyl)cyclohexylsiloxy}-perfluoronapth-1-yl) (perfluorobiphenyl) (perfluorophenyl) (4,5,7-trifluoronaphthyl)borate]⁻/ diphenylmethylene (indenyl) (2,7-di-t-butyl fluorenyl) hafnium dibenzyl; [N,N-dimethyl-anilinium]⁺[(5-{isopropylcyclohexyl (3-ethylnonyl)siloxy}perfluoronapth-2-yl)bis(perfluorobiphenyl) (pentalfluoropyrenylborate]⁻/ di(4-n-butylphenyl)methylene (2,7-dimethyl fluorenyl) (cyclopentadienyl) hafnium dibenzyl; [N,N-dimethyl-anilinium]⁺[(5-{isopropylnonyl(tri-n-propylsilylhexyl)siloxy}perfluoroinden-1-yl) (perfluoropyrenyl) (perfluoroanthracenyl) (perfluorobiphenyl)borate]⁻/ / diphenylmethylene (cyclopentadienyl) (2,7-di-t-butyl fluorenyl) hafnium dimethyl; [N,N-dimethyl-anilinium]⁺[(5-{tri-(isopropyl)siloxy}-fluoronapth-1-yl) (perfluorobiphenyl) (perfluorophenyl) (pentalfluoropyrenyl)borate]⁻/ diphenylmethylene(cylcopentadienyl) (2,7-di-t-butyl-fluorenyl) hafnium dimethyl; [N,N-dimethyl-anilinium]⁺[(5-{tri-(isopropyl)siloxy}fluoronapth-3-yl) (perfluorobiphenyl) (pentafluoroanthracenyl) (perfluorophenyl)borate]⁻/ dimethylsilylbis(2-methylbenzindenyl) zirconium dimethyl; [N,N-dimethyl-anilinium]⁺[(5-{tri-(isopropyl)siloxy}perfluoroinden-1-yl) (2,3,6-trifluorophenyl) (perfluorofluorenyl) (perfluorophenyl)borate]⁻ dimethylsilyl bis(naphthylmethylindenyl) hafnium dimethyl; [N,N-dimethyl-anilinium]⁺[(5-{tri-(isopropyl)siloxy}perfluoroinden-1-yl)bis(perfluorobiphenyl) (2',3',5'-trifluorobiphenyl)borate]⁻/ pentamethylcyclopentadienyl titanium trimethyl; [N,N-dimethyl-anilinium]⁺[(5-{tri-(isopropyl)siloxy}perfluoroinden-2-yl) (perfluorobiphenyl) (2,3,5-trifluorophenyl) (5,6,7,8-tetrafluoronaphthyl)borate]⁻/ methylene (indenyl) (2,7-di-t-butyl-fluorenyl) hafnium dimethyl; [N,N-dimethyl-anilinium]⁺[(5-{tri-(isopropyl)siloxy}perfluoroinden-2-yl) (perfluorophenyl) (2',3',4'-trifluorobiphenyl) (perfluorofluorenyl)aluminate]⁻/ isopropyl (cyclopentadienyl) (fluorenyl) hafnium dimethyl; [N,N-dimethyl-anilinium]⁺[(5-{tri-(isopropyl)siloxy}-perfluoronaphth-3-yl) (5,6,7,8-tetrafluoronaphthyl) (2,3,5-trifluorophenyl) (perfluorophenyl)borate]⁻/ pentamethyl cyclopentadienyl titanium isopropoxide; [N,N-dimethyl-anilinium]⁺[(5-{tri-(isopropyl)siloxy}perfluoronapth-1-yl) (perfluorobiphenyl) (2,3,5-trifluorophenyl) (2',3',5'-trifluorobiphenyl)borate]⁻/ dimethylsilylbis(tetrahydroindenyl) zirconium dichloride; [N,N-dimethyl-anilinium]⁺[(5-{tri-(isopropyl)siloxy}perfluoronapth-1-yl) (perfluorobiphenyl) (2,3,5-trifluorophenyl) (2',3',5'-trifluorobiphenyl)borate]⁻/ methylene bis(fluorenyl) hafnium dimethyl; [N,N-dimethyl-anilinium]⁺[(5-(tri-(isopropyl)siloxy}-perfluoronapth-1-yl) (perfluorobiphenyl) (perfluoroanthracenyl) (perfluorophenyl)aluminate]⁻/ dimethylsilyl(tetramethylcyclopentadienyl) (dodecylamido) hafnium dihydride; [N,N-dimethyl-anilinium]⁺[(5-{tri-(isopropyl)siloxy}perfluoronapth-1-yl) (perfluorophenyl) (perfluoropyrenyl) (4,5,7-trifluoronaphthyl)borate]⁻/ pentamethyl cyclopentadienyl titanium isopropoxide; [N,N-dimethyl-anilinium]⁺[(5-{tri-(isopropyl)siloxy}perfluoronapth-1-yl)bis(perfluorobiphenyl) (tetrafluorofluorenylborate]⁻/ dimethylsilyl bis(2-methyl-4-naphth-2-yl-indenyl) hafnium dimethyl; [N,N-dimethyl-anilinium]⁺[(5-{tri-(isopropyl)siloxy}perfluoronapth-2-yl) (perfluorobiphenyl) (2,3,5-trifluorophenyl) (pentalfluoropyrenyl)borate]⁻/ diphenylmethyl (cylcopentadienyl) (2,7-dimethylfluorenyl) hafnium dimethyl; [N,N-dimethyl-anilinium]⁺[(5-{tri-(isopropyl)siloxy}perfluoronapth-2-yl) (perfluorobiphenyl) (2,3,5-trifluorophenyl) (pentalfluoropyrenyl)borate]⁻/ diphenylmethylene (cyclopentadienyl) (2,7-di-t-butyl fluorenyl) hafnium dimethyl; [N,N-dimethyl-anilinium]⁺[(5-{tri-(isopropyl)siloxy}perfluoronapth-2-yl) (perfluorobiphenyl) (2,3,5-trifluorophenyl) (pentalfluoropyrenyl)borate]⁻/ methylene bis(fluorenyl) hafnium dimethyl; [N,N-dimethyl-anilinium]⁺[(5-{tri-(isopropyl)siloxy}-perfluoronapth-2-yl) (perfluorophenyl) (tetrafluorofluorenyl) (perfluoropyrenyl)aluminate]⁻/ (4-n-propylphenyl) (4-isopropylphenyl)methylene (fluorenyl) (cyclopentadienyl) hafnium dimethyl; [N,N-dimethyl-anilinium]⁺[(5-{tri-(isopropyl)siloxy}perfluoronapth-3-yl) (perfluorophenyl) (2,3,5-trifluorophenyl) (pentafluoroanthracenyl)aluminate]⁻/ dimethylsilyl(tetramethylcyclopentadienyl) (tert-butylamido) titanium dichloride; [N,N-dimethyl-anilinium]⁺[(5-{tri-(isopropyl)siloxy}perfluoronapth-3-yl) (perfluorophenyl) (2,3,5-trifluorophenyl) (pentafluoroanthracenyl)aluminate]⁻/ methylphenylmethylene bis(fluorenyl) hafnium dimethyl; [N,N-dimethyl-anilinium]⁺[(5-{tri-(isopropyl)siloxy}perfluoronapth-3-yl) (tetrafluorofluorenyl) (pentafluoroanthracenyl) (perfluorophenyl)borate]⁻/ silacyclobutyl(tetramethylcyclopentadienyl) (n-propylcyclopentadienyl) zirconium dimethyl; [N,N-dimethyl-anilinium]⁺[(5-{tri-(isopropyl)siloxy}perfluoronapth-3-yl)tetrafluorofluorenyl) (perfluorophenyl) (4,5,6,7-tetrafluoronaphthyl)borate]⁻/ (4-n-propylphenyl) (4-isopropylphenyl)methylene (fluorenyl) (cyclopentadienyl) hafnium dimethyl); [N,N-dimethyl-anilinium]⁺[(6-{(triethylsilylpropyl)benzylisopropylsiloxy}fluoroanthracen-1-yl)bis(perfluoroanthracenyl) (perfluoropyrenylborate]⁻/ bis(4-triethylsifylphenyl)methylene(cyclopentadienyl) (2,7-di-t-butyl-fluorenyl)hafnium dimethyl; [N,N-dimethyl-anilinium]⁺[(6-{(triethylsilyipropyl)isopropylnonylsiloxy}perfluoroanthracen-1-yl) (perfluorophenyl) (perfluorobiphenyl) (4,5,6,7-tetrafluoronaphthyl)borate]⁻/ (4-n-butylphenyl) (4-t-butylphenyl)methylene (fluorenyl) (cyclopentadienyl) hafnium dimethyl; [N,N-dimethyl-anilinium]⁺[(6-{(2,2-dimethyloctyl)cyclohexyl(triethylsilylpropyl)siloxy}-perfluoroanthracen-1-yl) (perfluoroanthracenyl) (tetrafluorofluorenyl) (perfluorophenyl)borate]⁻/ dimethylsilyl (indenyl) (fluorenyl) hafnium dihydride; [N,N-dimethyl-anilinium]⁺[(6-{(methyldiethylsilyloctyl)hexyl (3-ethylnonyl)siloxy}perfluorofluoren-2-yl) (perfluorophenyl) (pentafluoroanthracenyl) (perfluorobiphenyl)borate]⁻/ bis(1,3-dibutyl-methyl-cyclopentadienyl) zirconium dimethyl; [N,N-dimethyl-anilinium]⁺[(6-{(tri-(isopropyl)silyloctyl)isopropyl(triethylsilylmethyl)siloxy}perfluorofluoren-2-yl)bis(perfluorophenyl) (perfluorobiphenylaluminate]⁻/ dimethylsily (bisindenyl) zirconium dichloride; [N,N-dimethyl-anilinium]⁺[(6-{(trimethylsilylethyl)isopropyl(trimethylsilylethyl)siloxy}perfluoroanthracen-1-yl)bis(perfluorophenyl) (pentalfluoropyrenylborate)⁻/ (4-alkylphenyl) (4-t-butylphenyl)methylene(cylcopentadienyl) (fluorenyl) hafnium dimethyl; [N,N-dimethyl-anilinium]⁺[(6-{(trimethylsilylethyl)isopropyl(trimethylsilylethyl)siloxy}-perfluoroanthracen-1-yl)bis(perfluorophenyl) (pentalfluoropyrenylborate]⁻/ dimethylsilyl bis(2-methyl-4-naphth-2-yl-indenyl) hafnium dimethyl; [N,N-dimethyl-anilinium]⁺[(6-{(trimethylsilylethyl)isopropyl(trimethylsilylethyl)siloxy}perfluoroanthracen-1-yl)bis(perfluorophenyl) (pentalfluoropyrenylborate]⁻/ dimethylsilyl(tetramethylcyclopentadienyl) (adamantylamido) titanium dichloride; [N,N-dimethyl-anilinium]⁺[(6-{benzylisopropyloctylsiloxy}perfluoronapth-2-yl) (2,3,6-trifluorophenyl) (2,3,5-trifluorophenyl) (perfluoroanthracenyl)borate]⁻/ dimethylsilyl(tetramethylcyclopentadienyl) (adamantylamido) titanium dichloride; [N,N-dimethyl-anilinium]⁺[(6-{benzylnonylisopropylsiloxy}perfluoronapth-1-yl)bis(perfluorobiphenyl) (perfluoroanthracenyl)borate]⁻/ di(4-n-butylphenyl) methylene (fluorenyl) (indenyl) hafnium dimethyl; [N,N-dimethyl-anilinium]⁺[(6-{benzylnonylisopropylsiloxy}perfluoronapth-1-yl)bis(perfluorobiphenyl) (perfluoroanthracenyl)borate]⁻/ dimethylsilyl (tetramethylcyclopentadienyl) (adamantyl-1-amino) titanium dimethyl; [N,N-dimethyl-anilinium]⁺[(6-{cyclohexylisopropyl(tri-(isopropyl)silyloctyl)siloxy}perfluoronaphth-2-yl) (perfluorofluorenyl) (4,5,6,7-tetrafluoronaphthyl) (perfluorobiphenyl)borate]⁻/ bis(trimethylsilyl) titanium dimethyl; [N,N-dimethyl-anilinium]⁺[(6-{cyclohexylisopropyl(tri-(isopropyl)silyloctyl)siloxy}perfluoronapth-1-yl) (pentafluoroanthracenyl) (perfluorophenyl) (tetrafluorofluorenyl)borate]⁻/ dimethylsilyl bis(naphthylmethylindenyl) hafnium dimethyl; [N,N-dimethyl-anilinium]⁺[(6-{cyclohexylisopropyl(triethylsilylethyl)siloxy}perfluorofluoren-2-yl) (perfluoropyrenyl) (2',3',5'-trifluorobiphenyl) (perfluorobiphenyl)borate]⁻/ diphenylmethyl (fluorenyl) (cyclopentadienyl) zirconium dimethyl; [N,N-dimethyl-anilinium]⁺[(6-{di-(isopropyl) (methyldiethylsilyloctyl)siloxy}perfluorofluoren-1-yl)bis(4,5,7-trifluoronaphthyl) (4,5,6-trifluoronaphthyl)borate]⁻/ diphenylmethylene (cyclopentadienyl) (2,7-di-t-butyl fluorenyl) hafnium dimethyl; [N,N-dimethyl-anilinium]⁺[(6-{hexylisopropyl(triethylsilylpropyl)siloxy}-perfluoronapth-2-yl) (perfluoroanthracenyl) (4,5,6-trifluoronaphthyl) (4,5,7-trifluoronaphthyl)borate]⁻/ silacyclobutyl(tetramethylcyclopentadienyl) (n-propylcyclopentadienyl) zirconium dimethyl; [N,N-dimethyl-anilinium]⁺[(6-{hexylisopropyl(methyldiethylsilyloctyl)siloxy}fluoroanthracen-2-yl)bis(perfluoroanthracenyl) (perfluorobiphenylaluminate]⁻/ dimethylsilyl bisindenyl hafnium dimethyl; [N,N-dimethyl-anilinium]⁺[(6-{isopropyl (3-ethylnonyl)hexylsiloxy}perfluoroanthracen-2-yl) (perfluorobiphenyl) (2',3',5'-trifluorobiphenyl) (perfluorophenyl)borate]⁻/ dimethylsilyl bis(naphthylmethylindenyl) hafnium dimethyl; [N,N-dimethyl-anilinium]⁺[(6-{isopropylcyclohexylbenzylsiloxy}perfluoroinden-2-yl) (2,3,5-trifluorophenyl) (4,5,6-trifluoronaphthyl) (perfluorophenyl)aluminate]⁻/ dimethylsilylbis(tetrahydroindenyl) zirconium dichloride; [N,N-dimethyl-anilinium]⁺[(6-{isopropylcyclohexylbenzylsiloxy)perfluoroinden-2-yl) (2,3,5-trifluorophenyl) (4,5,6-trifluoronaphthyl) (perfluoropheny))aluminate]⁻/ diphenylmethylene (cyclopentadienyl) (2,7-dimethyl fluorenyl) hafnium dimethyl; [N,N-dimethyl-anilinium]⁺[(6-{isopropylcyclohexylbenzylsiloxy}perfluoroinden-2-yl) (2,3,5-trifluorophenyl) (4,5,6-trifluoronaphthyl) (perfluorophenyl)aluminate]⁻/ diphenylmethylene(cylcopentadienyl) (2,7-di-t-butyl-fluorenyl) hafnium dimethyl; [N,N-dimethyl-anilinium]⁺[(6-{isopropylhexyl(tri-n-propylsilylhexyl)siloxy}perfluoronapth-2-yl) (perfluoropyrenyl) (perfluorofluorenyl) (5,6,7,8-tetrafluoronaphthyl)borate]⁻/ dimethylsilyl bis(2-methyl-indenyl) hafnium dimethyl; [N,N-dimethyl-anilinium]⁺[(6-{isopropylnonyl( triethylsilylpropyl)siloxy}perfluorofluoren-1-yl) (4,5,6,7-tetrafluoronaphthyl) (perfluoropyrenyl) (4,5,6-trifluoronaphthyl)borate]⁻/ dibutylsilyl (fluorenyl) (cyclopentadienyl) hafnium dimethyl; [N,N-dimethyl-anilinium]⁺[(6-{methyl (3-ethylnonyl)isopropylsiloxy}perfluoronapth-3-yl) (5,6,7,8-tetrafluoronaphthyl) (perfluorophenyl) (perfluorofluorenyl)borate]⁻/ diphenylmethylene(cylcopentadienyl) (2,7-di-t-butyl-fluorenyl) hafnium dimethyl; [N,N-dimethyl-anilinium]⁺[(6-{nonylbenzylisopropylsiloxy}perfluorofluoren-2-yl)bis(perfluorophenyl) (2',3',4'-trifluorobiphenyl)borate]⁻/ dimethylsilyl bis(2-methy)-4-naphth-2-yl-indenyl) hafnium dimethyl; [N,N-dimethyl-anilinium]⁺[(6-{nonylisopropyl(t-butyl)siloxy}perfluoronapth-1-yl) (4,5,6-trifluoronaphthyl) (perfluoroanthracenyl) (4,5,6,7-tetrafluoronaphthyl)borate]⁻/ diphenylmethylene(cylcopentadienyl) (fluorenyl) hafnium dimethyl; [N,N-dimethyl-anilinium]⁺[(6-{tri-(isopropyl)siloxy}fluoroanthracen-2-yl) (perfluorobiphenyl) (2',3',4'-trifluorobiphenyl) (tetrafluorofluorenyl)borate]⁻/ dimethylsilyl(tetramethylcyclopentadienyl) (tert-butylamido) titanium dichloride; [N,N-dimethyl-anilinium]⁺[(6-{tri-(isopropyl)siloxy}-fluoroanthracen-2-yl) (perfluorobiphenyl) (2',3',4'-trifluorobiphenyl) (tetrafluorofluorenyl)borate]⁻/ diphenylmethylene(cylcopentadienyl) (2,7-di-t-butyl-fluorenyl) hafnium dimethyl; [N,N-dimethyl-anilinium]⁺[(6-{tri-(isopropyl)siloxy}perfluoroanthracen-1-yl) (perfluoropyrenyl) (pentalfluoropyrenyl) (perfluorobipheny)borate]⁻/ isopropyl (cyclopentadienyl) (fluorenyl) hafnium dimethyl; [N,N-dimethyl-anilinium]⁺[(6-{tri-(isopropyl)siloxy}perfluoroanthracen-1-yl)bis(perfluorobiphenyl) (2',3',5'-trifluorobiphenyl)aluminate]⁻/ (4-n-propylphenyl) (4-isopropylphenyl)silylenebis(fluorenyl) hafnium di-t-butyl; [N,N-dimethyl-anilinium]⁺[(6-{tri-(isopropyl)siloxy}perfluoroanthracen-2-yl) (2,3,5-trifluorophenyl) (perfluorophenyl) (perfluorobiphenyl)aluminate]⁻/ dimethylsilyl bis(phenylmethylindenyl) hafnium dimethyl; [N,N-dimethyl-anilinium]⁺[(6-{tri-(isopropyl)siloxy}perfluoroanthracen-2-yl)bis(perfluorobiphenyl) (perfluoropyrenyl)borate]⁻/ diphenylmethylene (2,7-di-n-butyl fluorenyl) (cyclopentadienyl) hafnium dimethyl; [N,N-dimethyl-anilinium]⁺[(6-{tri-(isopropyl)siloxyl}perfluorofluoren-1-yl) (2',3',4'-trifluorobiphenyl) (perfluorobiphenyl) (4,5,6-trifluoronaphthyl)borate]⁻/ bis(1,3-dibutyl-methyl-cyclopentadienyl) zirconium dimethyl; [N,N-dimethyl-anilinium]⁺[(6-{tri-(isopropyl)siloxy}perfluorofluoren-1-yl) (2',3',4'-trifluorobiphenyl) (perfluorobiphenyl) (4,5,6-trifluoronaphthyl)borate]⁻/ silacyclobutyl(tetramethylcyclopentadienyl) (n-propylcyclopentadienyl) zirconium dimethyl; [N,N-dimethyl-anilinium]⁺[(6-{tri-(isopropyl)siloxy}perfluorofluoren-1-yl) (perfluorophenyl) (2,3,5-trifluorophenyl) (4,5,6,7-tetrafluoronaphthyl)borate]⁻/ dimethylsilyl bis(2-methyl-4-naphth-2-yl-indenyl) hafnium dimethyl; [N,N-dimethyl-anilinium]⁺[(6-{tri-(isopropyl)siloxy}-perfluorofluoren-1-yl) (perfluorophenyl) (2,3,5-trifluorophenyl) (4,5,6,7-tetrafluoronaphthyl)borate]⁻/ diphenylmethyl (cylcopentadienyl) (2,7-di-t-butyl-fluorenyl) hafnium dimethyl; [N,N-dimethyl-anilinium]⁺[(6-{tri-(isopropyl)siloxy}perfluorofluoren-2-yl) (perfluorobiphenyl) (4,5,6,7-tetrafluoronaphthyl) (perfluoropyrenyl)borate]⁻/ (pentamethylcyclopentadienyl) (cyclopentadienyl)zirconium dimethyl; [N,N-dimethyl-anilinium]⁺[(6-{tri-(isopropyl)siloxy}perfluorofluoren-2-yl) (perfluorobiphenyl) (4,5,6,7-tetrafluoronaphthyl) (perfluoropyrenyl)borate]⁻/ methylene (2,7-di-t-butyl fluorenyl) (fluorenyl) hafnium dimethyl; [N,N-dimethyl-anilinium]⁺[(6-{tri-(isopropyl)siloxy}perfluorofluoren-2-yl) (perfluorophenyl) (perfluorofluorenyl) (pentafluoroanthracenyl)borate]⁻/ (4-n-butylphenyl) (4-t-butylphenyl)methylene (2,7-di-t-butyl-fluorenyl) (indenyl) hafnium dimethyl; [N,N-dimethyl-anilinium]⁺[(6-{tri-(isopropyl)siloxy}perfluorofluoren-2-yl) (perfluorophenyl) (perfluorofluorenyl) (pentafluoroanthracenyl)borate]⁻/ dimethylsilyl bis(phenylmethylindenyl) hafnium dimethyl; [N,N-dimethyl-anilinium]⁺[(6-{tri-(isopropyl)siloxy}perfluoroinden-2-yl) (pentafluoroanthracenyl) (4,5,6,7-tetrafluoronaphthyl) (perfluorobiphenyl)borate]⁻/ dimethylsilyl (tetramethylcyclopentadienyl) (adamantyl-1-amino) titanium dimethyl; [N,N-dimethyl-anilinium]⁺[(6-{tri-(isopropyl)siloxy}perfluoroinden-2-yl) (perfluorophenyl) (perfluoroanthracenyl) (perfluorobiphenyl)borate]⁻/ di(4-n-propylphenyl)methylene (2,7-di-t-butyl-5-methylfluorenyl) (fluorenyl) hafnium dimethyl; [N,N-dimethyl-anilinium]⁺[(6-{tri-(isopropyl)siloxy}perfluoronaphth-3-yl) (perfluoroanthracenyl) (perfluorophenyl) (2,3,4-trifluorophenyl)borate]⁻/ dinapthylmethylene (cyclopentadienyl) (fluorenyl) hafnium dimethyl; [N,N-dimethyl-anilinium]⁺[(6-{tri-(isopropyl)siloxy}perfluoronapth-1-yl) (pentafluoroanthracenyl) (perfluorophenyl) (perfluorobiphenyl)aluminate]⁻/ dimethylsilylbis(2-methylbenzindenyl) zirconium dimethyl; [N,N-dimethyl-anilinium]⁺[(6-{tri-(isopropyl)siloxy)perfluoronapth-1-yl) (pentafluoroanthracenyl) (perfluorophenyl) (perfluorobiphenyl)aluminate]⁻/ diphenylmethylene (2,7-di-n-butyl fluorenyl) (cyclopentadienyl) hafnium dimethyl; [N,N-dimethyl-anilinium]⁺[(6-{tri-(isopropyl)siloxy}perfluoronapth-1-yl) (perfluorofluorenyl) (perfluorophenyl) (perfluorobiphenyl)borate]⁻/ (4-n-propylphenyl) (4-methylphenyl)methylene(fluorenyl) (indenyl) hafnium dimethyl; [N,N-dimethyl-anilinium]⁺[(6-{tri-(isopropyl)siloxy}perfluoronapth-1-yl) (perfluorofluorenyl) (perfluorophenyl) (perfluorobiphenyl)borate]⁻/ dimethylsilylbis(tetrahydroindenyl) zirconium dichloride; [N,N-dimethyl-anilinium]⁺[(6-{tri-(isopropyl)siloxy}perfluoronapth-1-yl) (perfluorofluorenyl) (perfluorophenyl) (perfluorobiphenyl)borate]⁻/ methylene (2,7-di-t-butyl fluorenyl) (fluorenyl) hafnium dimethyl; [N,N-dimethyl-anilinium]⁺[(6-{tri-(isopropyl)siloxy}perfluoronapth-2-yl) (perfluorobiphenyl) (4,5,7-trifluoronaphthyl) (perfluorophenyl)borate]⁻/ bis(1,3-dibutyl-methyl-cyclopentadienyl) zirconium dimethyl; [N,N-dimethyl-anilinium]⁺[(6-{tri-(isopropyl)siloxy}perfluoronapth-2-yl) (perfluorobiphenyl) (4,5,7-trifluoronaphthyl) (perfluorophenyl)borate]⁻/ dimethylsilyl bis(naphthylmethylindenyl) hafnium dimethyl; [N,N-dimethyl-anilinium]⁺[(6-{tri-(isopropyl)siloxy}perfluoronapth-2-yl) (perfluorobiphenyl) (4,5,7-trifluoronaphthyl) (perfluorophenyl)borate]⁻/ dimethylsilyl(tetramethylcyclopentadienyl) (tert-butylamido) titanium dichloride; [N,N-dimethyl-anilinium]⁺[(6-{tri-(isopropyl)siloxy}perfluoronapth-3-yl) (perfluorofluorenyl) (perfluorophenyl) (perfluorobiphenyl)borate]⁻/ dimethylsilylbis(2-methylbenzindenyl) zirconium dimethyl; [N,N-dimethyl-anilinium]⁺[(6-{tri-(isopropyl)siloxy}-perfluoronapth-3-yl) (perfluorophenyl) (2',3',4'-trifluorobiphenyl) (perfluoroanthracenyl)borate]⁻/ (pentamethylcyclopentadienyl) (cyclopentadienyl)zirconium dimethyl; [N,N-dimethyl-anilinium]⁺[(7-{(triethylsilylpropyl) (triethylsilylethyl)isopropylsiloxy}perfluoropyren-1-yl) (2',3',5'-trifluorobiphenyl) (perfluoropyrenyl) (perfluorophenyl)borate]⁻/ dimethylsilylbis(tetrahydroindenyl) zirconium dichloride; [N,N-dimethyl-anilinium]⁺[(7-{(2,2-dimethyloctyl) (3-ethylnonyl)isopropylsiloxy}perfluoropyren-2-yl)bis(perfluorobiphenyl) (perfluorophenylborate]⁻/ methylene (indenyl) (2,7-di-t-butyl-fluorenyl) hafnium dimethyl; [N,N-dimethyl-anilinium]⁺[(7-{(2,2-dimethyloctyl) (tri-(isopropyl)silyloctyl)isopropylsiloxy}-perfluorofluoren-1-yl) (pentafluoroanthracenyl) (2',3',4'-trifluorobiphenyl) (5,6,7,8-tetrafluoronaphthyl)borate]⁻/ diphenylmethylene(cylcopentadienyl) (2,7-methyl-fluorenyl) hafnium dimethyl; [N,N-dimethyl-anilinium]⁺[(7-{(2,2-dimethyloctyl) (triethylsilylethyl) (2,2-dimethyloctyl)siloxy}perfluorofluoren-2-yl) (perfluoroanthracenyl) (perfluorobiphenyl) (perfluorofluorenyl)borate]⁻/ methylene (indenyl) (2,7-di-t-butyl-fluorenyl) hafnium dimethyl; [N,N-dimethyl-anilinium]⁺[(7-{(tri-(isopropyl)silyloctyl) (tri-n-propylsilylhexyl)isopropylsiloxy}-perfluoroinden-2-yl) (perfluorobiphenyl) (perfluoronaphthyl) (perfluorophenyl)borate]⁻/ methylphenylmethylene bis(fluorenyl) hafnium dimethyl; [N,N-dimethyl-anilinium]⁺[(7-[(tri-(isopropyl)silyloctyl) (tri-n-propylsilylhexyl)isopropylsiloxy}perfluoronapth-1-yl)bis(perfluorobiphenyl) (perfluorophenylborate]⁻/ diphenylmethylene (2,7-di-t-butyl-5-methylfluorenyl) (cyclopentadienyl) hafnium dimethyl; [N,N-dimethyl-anilinium]⁺[(7-{(tri-(isopropyl)silyloctyl)isopropyl(methyldiethytsilyloctyl)siloxy}perfluoropyren-1-yl) (perfluorofluorenyl) (perfluorobiphenyl) (perfluoroanthracenyl)borate]⁻/ di(4-n-butylphenyl) methylene (fluorenyl) (indenyl) hafnium dimethyl; [N,N-dimethyl-anilinium]⁺[(7-{(triethylsilylethyl)benzylisopropylsiloxy}perfluoronaphth-2-yl) (2,3,5-trifluorophenyl) (4,5,7-trifluoronaphthyl) (2,3,4-trifluorophenyl)borate]⁻/ dimethylsily-bisindenyl hafnium dimethyl; [N,N-dimethyl-anilinium]⁺[(7-{(triethylsilylethyl)benzylisopropylsiloxy}perfluoronaphth-2-yl) (2,3,5-trifluorophenyl) (4,5,7-trifluoronaphthyl) (2,3,4-trifluorophenyl)borate]⁻/ dinapthylmethylene (cyclopentadienyl) (fluorenyl) hafnium dimethyl; [N,N-dimethyl-anilinium]⁺[(7-{(triethylsilylethyl)isopropyl(t-butyl)siloxy}perfluoronapth-1-yl) (perfluorobiphenyl) (perfluorophenyl) (2',3',5'-trifluorobiphenyl)borate]⁻/ dimethylsilyl bis(phenylmethylindenyl) hafnium dimethyl; [N,N-dimethyl-anilinium]⁺[(7-{(triethylsilylhexyl)isopropyl(triethylsilylethyl)siloxy}perfluoroanthracen-1-yl) (perfluorofluorenyl) (perfluorobiphenyl) (perfluoropyrenyl)aluminate]⁻/ dimethylsilyl bis(2-methyl-4-phenyl-indenyl) hafnium dimethyl; [N,N-dimethyl-anilinium]⁺[(7-{(triethylsilylhexyl)isopropyl(trimethylsilylethyl)siloxy}perfluoronapth-1-yl) (perfluorofluorenyl) (2,3,4-trifluorophenyl) (perfluorophenyl)borate]⁻/ dimethylsilyl bis(2-methyl-4-phenyl-indenyl) hafnium dimethyl; [N,N-dimethyl-anilinium]⁺[(7-{(triethylsilylhexyl)isopropyl(trimethylsilylethyl)siloxy}perfluoronapth-1-yl) (perfluorofluorenyl) (2,3,4-trifluorophenyl) (perfluorophenyl)borate]⁻/ dimethylsilyl bis(methylindenyl) hafnium dimethyl; [N,N-dimethyl-anilinium]⁺[(7-{(triethylsilylhexyl)nonyl(methyldiethylsilyloctyl)siloxy}-perfluoronapth-1-yl) (perfluorophenyl) (2,3,5-trifluorophenyl) (4,5,7-trifluoronaphthyl)borate]⁻/ dimethylsilyl bis(2-methyl-indenyl) hafnium dimethyl; [N,N-dimethyl-anilinium]⁺[(7-{(tri-n-propylsilylhexyl) (methyldiethylsilyloctyl) (t-butyl)siloxy}fluoronapth-1-yl)bis(perfluorophenyl) (2,3,6-trifluorophenylaluminate]⁻/ dimethylsilyl bis(phenylmethylindenyl) hafnium dimethyl; [N,N-dimethyl-anilinium]⁺[(7-{(tri-n-propylsilylhexyl)isopropyl(triethylsilylmethyl)siloxy}-perfluoronapth-1-yl)bis(2',3',4'-trifluorobiphenyl) (perfluorophenyl)borate]⁻/ dimethylsily-bisindenyl hafnium dimethyl; [N,N-dimethyl-anilinium]⁺[(7-{(tri-n-propylsilylhexyl)isopropyl(triethylsilylmethyl)siloxy}perfluoronapth-1-yl)bis(2',3',4'-trifluorobiphenyl) (perfluorophenyl)borate]⁻/ diphenylmethylene (cyclopentadienyl) (2,7-di-t-butyl fluorenyl) hafnium dimethyl; [N,N-dimethyl-anilinium]⁺[(7-{(tri-n-propylsilylhexyl)isopropyloctylsiloxy}perfluoronaphth-2-yl)bis(2',3',4'-trifluorobiphenyl) (perfluorophenylborate]⁻/ methylene (2,7-di-t-butyl fluorenyl) (fluorenyl) hafnium dimethyl; [N,N-dimethyl-anilinium]⁺[(7-{benzylisopropyl(triethylsilylethyl)siloxy}perfluoronapth-2-yl)bis(perfluoropyrenyl) (perfluorobiphenyl)borate]⁻/ (4-n-butylphenyl) (4-t-butylphenyl)methylene(fluorenyl) (indenyl) hafnium dimethyl; [N,N-dimethyl-anilinium]⁺[(7-{benzylisopropyloctylsiloxy}perfluoronapth-1-yl) (perfluoropyrenyl) (perfluorobiphenyl) (perfluorophenyl)borate]⁻/ dimethylsilyl bis(2-propyl-indenyl) hafnium dimethyl; [N,N-dimethyl-anilinium]⁺[(7-{benzylisopropyloctylsiloxy}perfluoronapth-1-yl) (perfluoropyrenyl) (perfluorobiphenyl) (perfluorophenyl)borate]⁻/ pentamethyl cyclopentadienyl titanium isopropoxide; [N,N-dimethyl-anilinium]⁺[(7-{cyclohexylisopropyl(tri-(isopropyl)silyloctyl)siloxy}perfluoroanthracen-1-yl)bis(perfluorobiphenyl) (perfluoroanthracenylborate]⁻/ (tetramethyl-cyclopentadienyl) (n-propylcyclopentadienyl) zirconium dimethyl; [N,N-dimethyl-anilinium]⁺[(7-{cyclohexylisopropyl(tri-(isopropyl)silyloctyl)siloxy}perfluoroanthracen-1-yl)bis(perfluorobiphenyl) (perfluoroanthracenylborate]⁻/ pentamethyl cyclopentadienyl titanium isopropoxide; [N,N-dimethyl-anilinium]⁺[(7-{cyclohexylisopropylnonylsiloxy}perfluoronapth-1-yl)bis(perfluorobiphenyl) (4,5,6,7-tetrafluoronaphthyl)borate]⁻/ dimethylsilyl (tetramethylcyclopentadienyl) (adamantyl-1-amino) titanium dimethyl; [N,N-dimethyl-anilinium]⁺[(7-{di-((triethylsilylethyl))isopropylsiloxy}perfluoropyren-2-yl) (2',3',4'-trifluorobiphenyl) (perfluorophenyl) (4,5,6,7-tetrafluoronaphthyl)aluminate]⁻/ pentamethylcyclopentadienyl titanium trimethyl; [N,N-dimethyl-anilinium]⁺[(7-{di-((triethylsilylhexyl))isopropylsiloxy}fluoronapth-1-yl)bis(perfluorophenyl) (2,3,5-trifluorophenyl)aluminate]⁻/ di(4-n-butylphenyl)methylene (2,7-dimethyl fluorenyl) (cyclopentadienyl) hafnium dimethyl; [N,N-dimethyl-anilinium]⁺[(7-{di-((triethylsilylhexyl))isopropylsiloxy}fluoronapth-1-yl)bis(perfluoropheny) (2,3,5-trifluorophenyl)aluminate]⁻/ methylene (2,7-di-t-butyl fluorenyl) (fluorenyl) hafnium dimethyl; [N,N-dimethyl-anilinium]⁺[(7-{di-(isopropy)n-propylsiloxy}perfluoroinden-2-yl) (perfluorophenyl) (4,5,7-trifluoronaphthyl) (2',3',4'-trifluorobiphenyl)borate]⁻/ dimethylsilyl (tetramethylcyclopentadienyl) (adamantyl-1-amino) titanium dimethyl; [N,N-dimethyl-anilinium]⁺[(7-{hexyl(methyldiethylsilyloctyl)isopropylsiloxy}perfluoroanthracen-1-yl) (pentafluoroanthracenyl) (perfluoronaphthyl) (perfluoropyrenyl)aluminate]⁻/ dimethylsilyl bis(2-methyl-4-naphth-2-yl-indenyl) hafnium dimethyl; [N,N-dimethyl-anilinium]⁺[(7-{hexyl(methyldiethylsilyloctyl)isopropylsiloxy}perfluoroanthracen-1-yl) (perfluorophenyl) (2',3',5'-trifluorobiphenyl) (perfluorofluorenyl)borate]⁻/ silacyclobutyl(tetramethylcyclopentadienyl) (n-propylcyclopentadienyl) zirconium dimethyl; [N,N-dimethyl-anilinium]⁺[(7-{hexylisopropyl(t-butyl)siloxy}perfluoroanthracen-1-yl)bis(tetrafluorofluorenyl) (perfluorofluorenyl)borate]⁻/ isopropyl (cyclopentadienyl) (fluorenyl) hafnium dimethyl; [N,N-dimethyl-anilinium]⁺[(7-{hexylisopropyl(t-butyl)siloxy}perfluorofluoren-1-yl)bis(perfluorophenyl) (4,5,6,7-tetrafluoronaphthyl)aluminate]⁻/ dimethylsilyl bis(2-methylindenyl) hafnium dimethyl; [N,N-dimethyl-anilinium]⁺[(7-{isopropyl(triethylsilylethyl) (triethylsilylhexyl)siloxy}perfluoropyren-2-yl) (perfluoropyrenyl) (perfluoronaphthyl) (2,3,4-trifluorophenyl)aluminate]⁻/ dimethylsilylbis(tetrahydroindenyl) zirconium dichloride; [N,N-dimethyl-anilinium]⁺[(7-{isopropy[cyclohexyl(triethylsilylmethyl)siloxy}perfluoronaphth-3-yl) (perfluoroanthracenyl) (2',3',4'-trifluorobiphenyl) (perfluorophenyl)borate]⁻/ diphenylmethylene (2,7-di-t-butyl fluorenyl) (fluorenyl) hafnium dimethyl; [N,N-dimethyl-anilinium]⁺[(7-{isopropylcyclohexyl(triethylsilylmethyl)siloxy}perfluoronapth-2-yl) (4,5,6,7-tetrafluoronaphthyl) (tetrafluorofluorenyl) (2,3,4-trifluorophenyl)aluminate]⁻/ di(4-n-butylphenyl) methylene (fluorenyl) (indenyl) hafnium dimethyl; [N,N-dimethyl-anilinium]⁺[(7-{methyl( triethylsilylpropyl) (methyldiethylsilyloctyl)siloxy}perfluoropyren-1-yl) (4,5,7-trifluoronaphthyl) (perfluorophenyl) (perfluoronaphthyl)borate]⁻/ dimethylsilyl bis(2-methyl-4-phenyl-indenyl) hafnium dimethyl; [N,N-dimethyl-anilinium]⁺[(7-{nonylcyclohexyl(trimethylsilylethyl)siloxy}-perfluoronaphth-3-yl) (2',3',5'-trifluorobiphenyl) (perfluorobiphenyl) (perfluoropyrenyl)aluminate]⁻/ (4-n-propylphenyl) (4-methylphenyl)methylene(fluorenyl) (indenyl) hafnium dimethyl; [N,N-dimethyl-anilinium]⁺[(7-{tri-(isopropyl)siloxy}-fluoroanthracen-1-yl)bis(perfluorophenyl) (2,3,5-trifluorophenylborate]⁻/ diphenylmethyl (fluorenyl) (cyclopentadienyl) hafnium dimethyl; [N,N-dimethyl-anilinium]⁺[(7-{tri-(isopropyl)siloxy}fluoronapth-2-yl)bis(4,5,6-trifluoronaphthyl) (perfluorophenyl)borate]⁻/ dimethylsilyl bis(phenylmethylindenyl) hafnium dimethyl; [N,N-dimethyl-anilinium]⁺[(7-{tri-(isopropyl)siloxy}perfluoroanthracen-1-yl) (5,6,7,8-tetrafluoronaphthyl) (perfluoroanthracenyl) (2,3,6-trifluorophenyl)borate]⁻/ dimethylsilyl bis(phenylmethylindenyl) hafnium dimethyl; [N,N-dimethyl-anilinium]⁺[(7-{tri-(isopropyl)siloxy}perfluoroanthracen-1-yl)bis(perfluorophenyl) (perfluoroanthracenyl)borate]⁻/ diphenylmethylene (2,7-di-t-butyl fluorenyl) (fluorenyl) hafnium dimethyl; [N,N-dimethyl-anilinium]⁺[(7-{tri-(isopropyl)siloxy}perfluorofluoren-1-yl) (2,3,4-trifluorophenyl) (4,5,6-trifluoronaphthyl) (perfluorophenyl)borate]⁻/ diphenylmethyl (fluorenyl) (cyclopentadienyl) hafnium dimethyl; [N,N-dimethyl-anilinium]⁺[(7-{tri-(isopropyl)siloxy}-perfluorofluoren-1-yl) (5,6,7,8-tetrafluoronaphthyl) (perfluorobiphenyl) (pentalfluoropyrenyl)aluminate]⁻/ diphenylmethyl (cylcopentadienyl) (2,7-dimethylfluorenyl) hafnium dimethyl; [N,N-dimethyl-anilinium]⁺[(7-{tri-(isopropyl)siloxy}perfluorofluoren-2-yl) (pentafluoroanthracenyl) (perfluorophenyl) (perfluoropyrenyl)borate]⁻/ methylene bis(fluorenyl) hafnium dimethyl; [N,N-dimethyl-anilinium]⁺[(7-{tri-(isopropyl)siloxy}-perfluoroinden-2-yl) (perfluorophenyl) (perfluoronaphthyl) (4,5,6,7-tetrafluoronaphthyl)borate]⁻/ dimethylsilylbis(2-methylbenzindenyl) zirconium dimethyl; [N,N-dimethyl-anilinium]⁺[(7-{tri-(isopropy)siloxy}perfluoroinden-2-yl)bis(perfluoropheny) (4,5,6-trifluoronaphthyl)aluminate]⁻/ (4-n-butylphenyl) (4-t-butylphenyl)methylene (2,7-di-t-butyl-fluorenyl) (cyclopentadienyl) hafnium dimethyl; [N,N-dimethyl-anilinium]⁺[(7-{tri-(isopropyl)siloxy}perfluoronaphth-3-yl)bis(perfluorofluorenyl) (perfluorophenyl)borate]⁻/ dimethylsilylbis(tetrahydroindenyl) zirconium dichloride; [N,N-dimethyl-anilinium]⁺[(7-{tri-(isopropyl)siloxy}perfluoronaphth-3-yl)bis(perfluorofluorenyl) (perfluorophenyl)borate]⁻/ diphenylmethyl (fluorenyl) (cyclopentadienyl) hafnium dimethyl; [N,N-dimethyl-anilinium]⁺[(7-{tri-(isopropyl)siloxy}-perfluoronapth-1-yl) (perfluorobiphenyl) (perfluorophenyl) (2,3,5-trifluorophenyl)aluminate]⁻/ dimethylsilylbis(2-methylbenzindenyl) zirconium dimethyl; [N,N-dimethyl-anilinium]⁺[(7-{tri-(isopropyl)siloxy}perfluoronapth-1-yl) (perfluorofluorenyl) (perfluoropyrenyl) (2',3',4'-trifluorobiphenyl)borate]⁻/ dimethylsilyl bis(phenylmethylindenyl) hafnium dimethyl; [N,N-dimethyl-anilinium]⁺[(7-{tri-(isopropyl)siloxy}perfluoronapth-2-yl) (perfluorobiphenyl) (4,5,7-trifluoronaphthyl) (5,6,7,8-tetrafluoronaphthyl)aluminate]⁻/ (4-n-butylphenyl) (4-t-butylphenyl)methylene(fluorenyl) (indenyl) hafnium dimethyl; [N,N-dimethyl-anilinium]⁺[(7-{tri-(isopropyl)siloxy}perfluoronapth-3-yl) (2,3,4-trifluorophenyl) (perfluoropyrenyl) (perfluorophenyl)borate]⁻/ di(4-n-propylphenyl)methylene (2,7-di-t-butyl-5-methylfluorenyl) (fluorenyl) hafnium dimethyl; [N,N-dimethyl-anilinium]⁺[(7-{tri-(isopropyl)siloxy}-perfluoronapth-3-yl) (2,3,4-trifluorophenyl) (perfluoropyrenyl) (perfluorophenyl)borate]⁻/ dimethylsilyl (indenyl) (fluorenyl) hafnium dihydride; [N,N-dimethyl-anilinium]⁺[(7-{tri-(isopropyl)siloxy}perfluoronapth-3-yl) (2,3,4-trifluorophenyl) (perfluoropyrenyl) (perfluorophenyl)borate]⁻/ methylene (indenyl) (2,7-di-t-butyl-fluorenyl) hafnium dimethyl; [N,N-dimethyl-anilinium]⁺[(7-{tri-(isopropyl)siloxy}perfluoronapth-3-yl) (perfluorofluorenyl) (4,5,7-trifluoronaphthyl) (perfluorobiphenyl)aluminate]⁻/ isopropyl (cyclopentadienyl) (fluorenyl) hafnium dimethyl; [N,N-dimethyl-anilinium]⁺[(7-{tri-(isopropyl)siloxy}-perfluoronapth-3-yl) (perfluorophenyl) (pentafluoroanthracenyl) (perfluoropyrenyl)aluminate]⁻/ dimethylsilyl(tetramethylcyclopentadienyl) (tert-butylamido) titanium dichloride; [N,N-dimethyl-anilinium]⁺[(7-[tri-(isopropyl)siloxy}perfluoronapth-3-yl) (perfluorophenyl) (perfluoropyrenyl) (perfluorobiphenyl)aluminate]⁻/ di(4-n-butylphenyl)methylene (2,7-dimethyl fluorenyl) (cyclopentadienyl) hafnium dimethyl; [N,N-dimethyl-anilinium]⁺[(7-{tri-(isopropyl)siloxy}perfluoronapth-3-yl)bis(perfluorofluorenyl) (perfluoronaphthyl)borate]⁻/ dimethylsilyl bis(indenyl) hafnium dimethyl; [N,N-dimethyl-anilinium]⁺[(7-{tri-(isopropyl)siloxy}perfluoronapth-3-yl)bis(perfluorofluorenyl) (perfluoronaphthyl)borate]⁻/ dimethylsilylbis(tetrahydroindenyl) zirconium dichloride; [N,N-dimethyl-anilinium]⁺[(7-{tri-(isopropyl)siloxy}perfluoropyren-1-yl) (pentafluoroanthracenyl) (perfluoroanthracenyl) (perfluoronaphthyl)borate]⁻/ dimethylsilyl(tetramethylcyclopentadienyl) (tert-butylamido) titanium dichloride; [N,N-dimethyl-anilinium]⁺[(7-{tri-(isopropyl)siloxy}perfluoropyren-1-yl)bis(perfluorobiphenyl) (4,5,6,7-tetrafluoronaphthylborate]⁻/ di(4-n-butylphenyl)methylene (2,7-di-t-butyl fluorenyl) (indenyl) hafnium dimethyl; [N,N-dimethyl-anilinium]⁺[(7-{tri-(isopropyl)siloxy}perfluoropyren-1-yl)bis(perfluorobiphenyl) (4,5,6,7-tetrafluoronaphthylborate]⁻/ diphenylmethyl (cylcopentadienyl) (2,7-dimethylfluorenyl) hafnium dimethyl; [N,N-dimethyl-anilinium]⁺[(7-{tri-(isopropyl)siloxy}perfluoropyren-1-yl)bis(perfluorobiphenyl) (4,5,6,7-tetrafluoronaphthylborate]⁻/ pentamethylcyclopentadienyl titanium trimethyl; [N,N-dimethyl-anilinium]⁺[(7-{tri-(isopropyl)siloxy}perfluoropyren-2-yl) (2,3,6-trifluorophenyl) (2,3,4-trifluorophenyl) (4,5,7-trifluoronaphthyl)borate]⁻/ (4-n-butylphenyl) (4-t-butylphenyl)methylene (2,7-di-t-butyl-fluorenyl) (cyclopentadienyl) hafnium dimethyl; [N,N-dimethyl-anilinium]⁺[(7-{tri-(isopropyl)siloxy}perfluoropyren-2-yl) (2,3,6-trifluorophenyl) (2,3,4-trifluorophenyl) (4,5,7-trifluoronaphthyl)borate]⁻/ methylene (2,7-di-t-butyl fluorenyl) (fluorenyl) hafnium dimethyl; [N,N-dimethyl-anilinium]⁺[(7-{tri-(isopropyl)siloxy}perfluoropyren-2-yl)bis(perfluorobiphenyl) (4,5,7-trifluoronaphthyl)borate]⁻/ dimethylsilyl bis(2-propyl-indenyl) hafnium dimethyl; [N,N-dimethyl-anilinium]⁺[(8-{(methyldiethylsilyloctyl)isopropylcyclohexylsiloxy}perfluoronapth-3-yl) (4,5,6-trifluoronaphthyl) (perfluorofluorenyl) (2,3,4-trifluorophenyl)borate]⁻/ (4-n-butylphenyl) (4-t-butylphenyl)methylene(2,7-dimethyl-fluorenyl) (indenyl) hafnium dibenzyl; [N,N-dimethyl-anilinium]⁺[(8-{(methyldiethylsilyloctyl)isopropylcyclohexylsiloxy}perfluoronapth-3-yl) (4,5,6-trifluoronaphthyl) (perfluorofluorenyl) (2,3,4-trifluorophenyl)borate]⁻/ diphenylmethylene(cylcopentadienyl) (2,7-di-t-butyl-fluorenyl) hafnium dimethyl; [N,N-dimethyl-anilinium]⁺[(8-{(triethylsilylethyl)benzylisopropylsiloxy}perfluoronapth-3-yl)bis(perfluorophenyl)(2,3,5-trifluoropheny)borate]⁻/ dimethylsilyl (tetramethylcyclopentadienyl) (adamantyl-1-amino) titanium dimethyl; [N,N-dimethyl-anilinium]⁺[(8-{(trimethylsilylethyl) (2,2-dimethyloctyl)isopropylsiloxy}perfluoropyren-2-yl) (2',3',5'-trifluorobiphenyl) (perfluorophenyl) (perfluorofluorenyl)borate]⁻/ dimethylsilyl (tetramethylcyclopentadienyl) (t-butylamino) titanium dimethyl; [N,N-dimethyl-anilinium]⁺[(8-{di-(isopropyl) (triethylsilylhexyl)siloxy}perfluoropyren-2-yl)bis(perfluorophenyl) (perfluoroanthracenyl)borate]⁻/ diphenylmethylene (2,7-di-t-butyl-5-methylfluorenyl) (cyclopentadienyl) hafnium dimethyl; [N,N-dimethyl-anilinium]⁺[(8-{isopropyl(t-butyl)isopropylsiloxy}perfluoropyren-2-yl)bis(perfluorobiphenyl) (2',3',5'-trifluorobiphenylborate]⁻/ silacyclobutyl(tetramethylcyclopentadienyl) (n-propylcyclopentadienyl) zirconium dimethyl; [N,N-dimethyl-anilinium]⁺[(8-{tri-(isopropyl)siloxy}perfluoronapth-3-yl) (2,3,4-trifluorophenyl) (perfluoropyrenyl) (perfluorobiphenyl)borate]⁻/ diphenylmethyl (cylcopentadienyl) (2,7-dimethylfluorenyl) hafnium dimethyl; [N,N-dimethyl-anilinium]⁺[(8-{tri-(isopropyl)siloxy}perfluoronapth-3-yl) (5,6,7,8-tetrafluoronaphthyl) (4,5,7-trifluoronaphthyl) (perfluorobiphenyl)borate]⁻/ bis(4-(triethylsilyl)phenyl)methylene(cyclopentadienyl) (2,7-di-t-butyl-fluorenyl)hafnium dimethyl; [N,N-dimethyl-anilinium]⁺[(8-{tri-(isopropyl)siloxy}perfluoronapth-3-yl) (perfluorobiphenyl) (perfluoropyrenyl) (perfluorophenyl)aluminate]⁻/ dimethylsilyl bis(naphthylmethylindenyl) hafnium dimethyl; [N,N-dimethyl-anilinium]⁺[(8-{tri-(isopropyl)siloxy}perfluoropyren-2-yl) (2',3',4'-trifluorobiphenyl) (tetrafluorofluorenyl) (perfluorophenyl)borate]⁻/ dimethylsilyl bis(methylindenyl) hafnium dimethyl; [N,N-dimethyl-anilinium]⁺[(8-{tri-(isopropyl)siloxy}-perfluoropyren-2-yl) (perfluoroanthracenyl) (perfluorobiphenyl) (4,5,7-trifluoronaphthyl)aluminate]⁻/ diphenylmethyl (fluorenyl) (cyclopentadienyl) zirconium dimethyl; [N,N-dimethyl-anilinium]⁺[(8-{tri-(isopropyl)siloxy}perfluoropyren-2-yl) (perfluorofluorenyl) (perfluorobiphenyl) (perfluorophenyl)borate]⁻/ diphenylmethyl (cylcopentadienyl) (2,7-di-t-butyl-fluorenyl) hafnium dimethyl; [N-methyl-N-dodecyl-anilinium]⁺[(4'-{(methyldiethylsilyloctyl)hexylisopropylsiloxy}perfluorobiphen-3-yl) (pentalfluoropyrenyl) (perfluoropyrenyl) (perfluoroanthracenyl)borate]⁻/ (4-n-propylphenyl) (4-isopropylphenyl)silylenebis(fluorenyl) hafnium di-t-butyl; [N-methyl-N-dodecyl-anilinium]⁺[(4-{di-((tri-(isopropyl)silyloctyl)) (methyldiethylsilyloctyl)siloxy)perfluorophenyl) (perfluorobiphenyl) (2,3,6-trifluorophenyl) (4,5,7-trifluoronaphthyl)borate]⁻/ dimethylsilyl bis(indenyl) hafnium dimethyl; [N-methyl-N-dodecyl-anilinium]⁺[(4'-{tri-(isopropyl)siloxy}perfluorobiphen-3-yl)bis(perfluoroanthracenyl) (2,3,5-trifluorophenyl)borate]⁻/ dimethylsilyl bis(2-methyl-4-naphth-2-yl-indenyl) hafnium dimethyl; [N-methyl-N-dodecyl-anilinium]⁺[(4-{tri-(isopropyl)siloxy}perfluorophenyl) (tetrafluorofluorenyl) (pentafluoroanthracenyl) (perfluorophenyl)borate]⁻/ methylphenylmethylene bis(fluorenyl) hafnium dimethyl; [N-methyl-N-dodecyl-anilinium]⁺[(6-{(triethylsilylhexyl)isopropyl(triethylsilylethyl)siloxy}-perfluoroinden-2-yl)bis(perfluoroanthracenyl) (2,3,4-trifluorophenylaluminate]⁻/ dimethylsilyl bis(2-methyl-4-phenyl-indenyl) hafnium dimethyl; [N-methyl-N-dodecyl-anilinium]⁺[(6-{tri-(isopropyl)siloxy}perfluoronapth-2-yl)bis(perfluorobiphenyl) (perfluoropyrenyl)borate]⁻/ bis(trimethylsilyl) titanium dimethyl; [N-methyl-N-dodecy)-anilinium]⁺[(7-{(2,2-dimethyloctyl)isopropyl(triethylsilylethyl)siloxy}fluoroinden-2-yl) (tetrafluorofluorenyl) (perfluorophenyl) (2',3',5'-trifluorobiphenyl)aluminate]⁻/ dimethylsilyl bis(phenylmethylindenyl) hafnium dimethyl; [N-methyl-N-dodecyl-anilinium]⁺[(7-{(2,2-dimethyloctyl)isopropyl(triethylsilylethyl)siloxy}fluoroinden-2-yl) (tetrafluorofluorenyl) (perfluorophenyl) (2',3',5'-trifluorobiphenyl)aluminate]⁻/ diphenylmethyl (fluorenyl) (cyclopentadienyl) hafnium dimethyl; [N-methyl-N-dodecyl-anilinium]⁺[(7-{(trimethylsilylethyl) (triethylsilylethyl)isopropylsiloxy}perfluoroanthracen-1-yl) (perfluorophenyl) (perfluoroanthracenyl) (2',3',5'-trifluorobiphenyl)aluminate]⁻/ dimethylsilyl bisindenyl hafnium dimethyl; [N-methyl-N-dodecyl-anilinium]⁺[(7-{isopropyl(tri-n-propylsilylhexyl) (triethylsilylethyl)siloxy}perfluorofluoren-2-yl) (perfluoroanthracenyl) (perfluorophenyl) (perfluorobiphenyl)aluminate]⁻/ diphenylmethylene(cylcopentadienyl) (2,7-di-t-butyl-fluorenyl) hafnium dimethyl; [N-methyl-N-dodecyl-anilinium]⁺[(7-{isopropylcyclohexyl (3-ethylnonyl)siloxy}perfluoropyren-1-yl)bis(perfluorophenyl) (perfluorobiphenyl)aluminate]⁻/ bis(4-triethylsilylphenyl)methylene(cyclopentadienyl) (2,7-di-t-butyl-fluorenyl)hafnium dimethyl; [N-methyl-N-dodecyl-anilinium]⁺[(7-{isopropylcyclohexyl (3-ethylnonyl)siloxy}-perfluoropyren-1-yl)bis(perfluorophenyl) (perfluorobiphenyl)aluminate]⁻/ methylene (indenyl) (2,7-di-t-butyl-fluorenyl) hafnium dimethyl; [N-methyl-N-dodecyl-anilinium]⁺[(7-{methyl( triethylsilylpropyl) (methyldiethylsilyloctyl)siloxy}perfluoropyren-1-yl) (2,3,6-trifluorophenyl) (perfluoroanthracenyl) (2',3',4'-trifluorobiphenyl)borate]⁻/ bis(4-triethylsilylphenyl)methylene(cyclopentadienyl) (fluorenyl)hafnium dimethyl; [N-methyl-N-dodecyl-anilinium]⁺[(7-{tri-(isopropyl)siloxy}perfluorofluoren-2-yl) (perfluoropyrenyl) (tetrafluorofluorenyl) (perfluorobiphenyl)aluminate]⁻/ bis(1,3-dibutyl-methyl-cyclopentadienyl) zirconium dimethyl; [tri-3,5-dimethylphenylammonium]⁺[(4-{(2,2-dimethyloctyl)isopropyl (3-ethylnonyl)siloxy}perfluorophenyl) (4,5,7-trifluoronaphthyl) (perfluorofluorenyl) (2',3',4'-trifluorobiphenyl)borate]⁻/ (pentamethylcyclopentadienyl) (cyclopentadienyl)zirconium dimethyl; [tri-3,5-dimethylphenylammonium]⁺[(4-{(2,2-dimethyloctyl)isopropyl (3-ethylnonyl)siloxy}perfluorophenyl) (4,5,7-trifluoronaphthyl) (perfluorofluorenyl) (2',3',4'-trifluorobiphenyl)borate]⁻/ dimethylsilyl (tetramethylcyclopentadienyl) (t-butylamino) titanium dimethyl; [tri-3,5-dimethylphenylammonium]⁺[(4-{(trimethylsilylethyl)isopropyl( triethylsilylpropyl)siloxy}perfluorophenyl) (perfluorobiphenyl) (2,3,5-trifluorophenyl) (tetrafluorofluorenyl)borate]⁻/ dimethylsilylbis(2-methylbenzindenyl) zirconium dimethyl; [tri-3,5-dimethylphenylammonium]⁺[(4-{(trimethylsilylethyl)isopropyl(triethylsilylpropyl)siloxy}-perfluorophenyl) (perfluorobiphenyl) (2,3,5-trifluorophenyl) (tetrafluorofluorenyl)borate]⁻/ diphenylmethylene (2,7-di-n-butyl fluorenyl) (cyclopentadienyl) hafnium dimethyl; [tri-3,5-dimethylphenylammonium]⁺[(4'-{di-(isopropyl) (tri-(isopropyl)silyloctyl)siloxy}perfluorobiphen-3-yl) (perfluorophenyl) (tetrafluorofluorenyl) (4,5,7-trifluoronaphthyl)borate]⁻/ dimethylsilyl bis(2-methyl-4-naphth-2-yl-indenyl) hafnium dimethyl; [tri-3,5-dimethylphenylammonium]⁺[(4'-{di-(isopropyl) (tri-(isopropyl)silyloctyl)siloxy}perfluorobiphen-3-yl) (perfluorophenyl) (tetrafluorofluorenyl) (4,5,7-trifluoronaphthyl)borate]⁻/ dimethylsilyl(tetramethylcyclopentadienyl) (adamantylamido) titanium dichloride; [tri-3,5-dimethylphenylammonium]⁺[(4'-{di-(isopropyl) (tri-(isopropyl)silyloctyl)siloxy}perfluorobiphen-3-yl) (perfluorophenyl) (tetrafluorofluorenyl) (4,5,7-trifluoronaphthyl)borate]⁻/ dimethylsilyl(tetramethylcyclopentadienyl) (dodecylamido) hafnium dihydride; [tri-3,5-dimethylphenylammonium]⁺[(5-{tri-(isopropyl)siloxy}perfluoroinden-1-yl)bis(perfluorophenyl) (2,3,6-trifluorophenyl)borate]⁻/ diphenylmethylene(cylcopentadienyl) (fluorenyl) hafnium dimethyl; [tri-3,5-dimethylphenylammonium]⁺[(5-{tri-(isopropyl)siloxy}perfluoronapth-2-yl) (perfluorofluorenyl) (perfluorobiphenyl) (pentalfluoropyrenyl)borate]⁻/ diphenylmethylene (2,7-di-t-butyl fluorenyl) (fluorenyl) hafnium dimethyl; [tri-3,5-dimethylphenylammonium]⁺[(7-{tri-(isopropyl)siloxy}fluoropyren-2-yl) (perfluoronaphthyl) (2',3',5'-trifluorobiphenyl) (pentafluoroanthracenyl)aluminate]⁻/ (4-n-butylphenyl) (4-t-butylphenyl)methylene(2,7-dimethyl-fluorenyl) (indenyl) hafnium dibenzyl ; [tri-3,5-dimethylphenylammonium]⁺[(7-{tri-(isopropyl)siloxy}fluoropyren-2-yl) (perfluoronaphthyl) (2',3',5'-trifluorobiphenyl) (pentafluoroanthracenyl)aluminate]⁻/ dimethylsilyl (tetramethylcyclopentadienyl) (t-butylamino) titanium dimethyl; [tri-3,5-dimethylphenylammonium]⁺[(8-{tri-(isopropyl)siloxy}perfluoropyren-2-yl) (perfluorophenyl) (2',3',5'-trifluorobiphenyl) (2,3,6-trifluorophenyl)borate]⁻/ dimethylsilyl bis(indenyl) hafnium dimethyl; [tri-3,5-dimethylphenyl-phosphonium]⁺[(4-{(3-ethylnonyl) (methyldiethylsilyloctyl)isopropylsiloxy}perfluorophenyl) (perfluorophenyl) (tetrafluorofluorenyl) (4,5,7-trifluoronaphthyl)borate]⁻/ (4-n-butylphenyl) (4-t-butylphenyl)methylene (fluorenyl) (cyclopentadienyl) hafnium dimethyl; [tri-3,5-dimethylphenyl-phosphonium]⁺[(4-{(t-butyl)nonyl(methyldiethylsilyloctyl)siloxy}perfluorophenyl)bis(perfluorobiphenyl) (perfluoropyrenyl)aluminate]⁻/ diphenylmethyl (fluorenyl) (cyclopentadienyl) hafnium dimethyl; [tri-3,5-dimethylphenyl-phosphonium]⁺[(4-{hexylisopropylbenzylsiloxy}perfluorophenyl) (4,5,7-trifluoronaphthyl) (pentalfluoropyrenyl) (perfluorobiphenyl)borate]⁻/ dimethylsilylbis(tetrahydroindenyl) zirconium dichloride; [tri-3,5-dimethylphenyl-phosphonium]⁺[(4'-{isopropylcyclohexyl(methyldiethylsilyloctyl)siloxy}-perfluorobiphen-4-yl) (perfluorophenyl) (2',3',5'-trifluorobiphenyl) (pentalfluoropyrenyl)borate]⁻/ dimethylsilylbis(tetrahydroindenyl) zirconium dichloride; [trimethyl-phosphonium]⁺[(5-{(3-ethylnonyl)isopropyl(tri-n-propylsilylhexyl)siloxy}perfluoroinden-1-yl) (4,5,7-trifluoronaphthyl) (5,6,7,8-tetrafluoronaphthyl) (perfluorophenyl)borate]⁻/ dimethylsilyl bis(naphthylmethylindenyl) hafnium dimethyl; [trimethyl-phosphonium]⁺[(5-{((3-ethylnonyl)isopropyl(tri-n-propylsilylhexyl)siloxy}perfluoroinden-1-yl) (4,5,7-trifluoronaphthyl) (5,6,7,8-tetrafluoronaphthyl) (perfluorophenyl)borate]⁻/ silacyclobutyl(tetramethylcyclopentadienyl) (n-propylcyclopentadienyl) zirconium dimethyl; [trimethyl-phosphonium]⁺[(7-{di-((triethylsilylethyl))isopropylsiloxy}perfluoroanthracen-1-yl) (perfluorophenyl) (pentalfluoropyrenyl) (4,5,6,7-tetrafluoronaphthyl)aluminate]⁻/ diphenylmethyl (cylcopentadienyl) (fluorenyl) hafnium dimethyl; [trimethyl-phosphonium]⁺[(7-{di-(isopropyl)benzylsiloxy}perfluoronapth-2-yl) (4,5,6-trifluoronaphthyl) (2,3,6-trifluorophenyl) (perfluorophenyl)aluminate]⁻/ di(4-n-butylphenyl)methylene (2,7-dimethyl fluorenyl) (cyclopentadienyl) hafnium dimethyl; [trimethyl-phosphonium]⁺[(7-{di-(isopropyl)benzylsiloxy}perfluoronapth-2-yl) (4,5,6-trifluoronaphthyl) (2,3,6-trifluorophenyl) (perfluorophenyl)aluminate]⁻/ pentamethyl cyclopentadienyl tribenzyl titanium; [trimethyl-phosphonium]⁺[(7-{tri-(isopropyl)siloxy}perfluoroanthracen-1-yl) (4,5,6-trifluoronaphthyl) (2,3,5-trifluorophenyl) (2',3',5'-trifluorobiphenyl)borate]⁻/ bis(4-(triethylsilyl)phenyl)methylene(cyclopentadienyl) (2,7-di-t-butyl-fluorenyl)hafnium dimethyl; [trimethyl-phosphonium]⁺[(7-{tri-(isopropyl)siloxy}perfluoroanthracen-1-yl) (pentafluoroanthracenyl) (4,5,7-trifluoronaphthyl) (perfluorobiphenyl)borate]⁻/ methylphenylmethylene bis(fluorenyl) hafnium dimethyl; [tri-n-butyl-ammonium]⁺[(4-{tri-(isopropyl)siloxy}perfluorophenyl) (2',3',4'-trifluorobiphenyl) (2,3,6-trifluorophenyl) (perfluorophenyl)borate]⁻/ pentamethylcyclopentadienyl titanium trimethyl; [tri-n-butyl-ammonium]⁺[(5-{hexylisopropyl(triethylsilylpropyl)siloxy}perfluoronaphth-3-yl) (5,6,7,8-tetrafluoronaphthyl) (perfluoropyrenyl) (perfluorofluorenyl)borate]⁻/ dimethylsilylbis(tetrahydroindenyl) zirconium dichloride; [tri-n-butyl-ammonium]⁺[(5-{tri-(isopropyl)siloxy}perfluoroinden-2-yl) (2',3',5'-trifluorobiphenyl) (4,5,6,7-tetrafluoronaphthyl) (pentafluoroanthracenyl)borate]⁻/ dimethylsilyl bis(methylindenyl) hafnium dimethyl; [tri-n-butyl-ammonium]⁺[(5-{tri-(isopropyl)siloxy}perfluoronapth-3-yl) (perfluorobiphenyl) (perfluorophenyl) (perfluoroanthracenyl)aluminate]⁻/ methylphenylmethylene bis(fluorenyl) hafnium dimethyl; [tri-n-butyl-ammonium]⁺[(5-{tri-(isopropyl)siloxy}perfluoronapth-3-yl) (perfluoropyrenyl) (perfluorobiphenyl) (2',3',4'-trifluorobiphenyl)borate]⁻/ (4-n-butylphenyl) (4-t-butylphenyl)methylene(2,7-dimethyl-fluorenyl) (indenyl) hafnium dibenzyl; [tri-n-butyl-ammonium]⁺[(5-{tri-(isopropyl)siloxy}perfluoronapth-3-yl) (perfluoropyrenyl) (perfluorobiphenyl) (2',3',4'-trifluorobiphenyl)borate]⁻/ dibutylsilyl (fluorenyl) (cyclopentadienyl) hafnium dimethyl; [tri-n-butyl-ammonium]⁺[(6-{tri-(isopropyl)siloxy}perfluoroanthracen-1-yl) (perfluorofluorenyl) (4,5,6,7-tetrafluoronaphthyl) (perfluorobiphenyl)borate]⁻/ (4-n-butylphenyl) (4-t-butylphenyl)methylene (2,7-di-t-butyl-fluorenyl) (cyclopentadienyl) hafnium dimethyl; [tri-n-butyl-ammonium]⁺[(6-{tri-(isopropyl)siloxy}perfluoroanthracen-1-yl) (perfluorofluorenyl) (4,5,6,7-tetrafluoronaphthyl) (perfluorobiphenyl)borate]⁻/ (4-n-butylphenyl) (4-t-butylphenyl)methylene (fluorenyl) (cyclopentadienyl) hafnium dimethyl; [tri-n-butyl-ammonium]⁺[(6-{tri-(isopropyl)siloxy}perfluoroanthracen-2-yl) (perfluoropyrenyl) (perfluorobiphenyl) (perfluorophenyl)borate]⁻/ dimethylsilyl bis(2-methyl-4-naphth-2-yl-iridenyl) hafnium dimethyl; [tri-n-butyl-ammonium]⁺[(6-{tri-(isopropyl)siloxy}-perfluoroanthracen-2-yl) (perfluoropyrenyl) (perfluorobiphenyl) (perfluorophenyl)borate]⁻/ dimethylsilyl bis(2-methyl-4-phenyl-indenyl) hafnium dimethyl; [tri-n-butyl-ammonium]⁺[(6-{tri-(isopropyl)siloxy}perfluoroanthracen-2-yl) (perfluoropyrenyl) (perfluorobiphenyl) (perfluorophenyl)borate]⁻/ dimethylsilyl bisindenyl hafnium dimethyl; [tri-n-butyl-ammonium]⁺[(6-{tri-(isopropyl)siloxy}perfluoroanthracen-2-yl) (perfluoropyrenyl) (perfluorobiphenyl) (perfluorophenyl)borate]⁻/ diphenylmethyl (cylcopentadienyl) (2,7-dimethylfluorenyl) hafnium dimethyl; [tri-n-butyl-ammonium]⁺[(6-{tri-(isopropyl)siloxy}-perfluoroanthracen-2-yl) (perfluoropyrenyl) (perfluorobiphenyl) (perfluorophenyl)borate]⁻/ isopropyl (cyclopentadienyl) (fluorenyl) hafnium dimethyl; [tri-n-butyl-ammonium]⁺[(6-{tri-(isopropyl)siloxy}perfluoroinden-2-yl)bis(perfluorobiphenyl) (perfluoropyrenylaluminate]⁻/ dimethylsilyl bisindenyl hafnium dimethyl; [tri-n-butyl-ammonium]⁺[(6-{tri-(isopropyl)siloxy}-perfluoronapth-1-yl) (2',3',5'-trifluorobiphenyl) (4,5,6-trifluoronaphthyl) (perfluorobiphenyl)borate]⁻/ (4-n-propylphenyl) (4-isopropylphenyl)silylenebis(fluorenyl) hafnium di-t-butyl; [tri-n-butyl-ammonium]⁺[(7-{(2,2-dimethyloctyl) (triethylsilylethyl) (2,2-dimethyloctyl)siloxy}perfluorofluoren-2-yl)bis(perfluorobiphenyl) (perfluorofluorenyl)aluminate]⁻/ (tetramethyl-cyclopentadienyl) (n-propylcyclopentadienyl) zirconium dimethyl; [tri-n-butyl-ammonium]⁺[(7-{di-((t-butyl)) (3-ethylnonyl)siloxy}-perfluoronapth-2-yl)bis(perfluorofluorenyl) (4,5,6-trifluoronaphthyl)aluminate]⁻/ di(4-n-butylphenyl) methylene (fluorenyl) (indenyl) hafnium dimethyl; [tri-n-butyl-ammonium]⁺[(7-{methyl(triethylsilylethyl)isopropylsiloxy}fluoroinden-2-yl) (perfluorobiphenyl) (perfluorophenyl) (4,5,7-trifluoronaphthyl)aluminate]⁻/ methylene (2,7-di-t-butyl fluorenyl) (fluorenyl) hafnium dimethyl; [tri-n-butyl-ammonium]⁺[(7-{tri-(isopropyl)siloxy}perfluorofluoren-1-yl) (perfluoropyrenyl) (perfluorophenyl) (4,5,6-trifluoronaphthyl)borate]⁻/ dimethylsilyl(tetramethylcyclopentadienyl) (dodecylamido) hafnium dimethyl; [tri-n-butyl-ammonium]⁺[(7-{tri-(isopropyl)siloxy}perfluorofluoren-1-yl) (perfluoropyrenyl) (perfluorophenyl) (4,5,6-trifluoronaphthyl)borate]⁻/ diphenylmethylene (2,7-di-t-butyl-5-methylfluorenyl) (cyclopentadienyl) hafnium dimethyl; [tri-n-butyl-ammonium]⁺[(7-{tri-(isopropyl)siloxy}perfluoropyren-1-yl) (2',3',5'-trifluorobiphenyl) (perfluoroanthracenyl) (perfluorophenyl)borate]⁻/ (4-n-propylphenyl) (4-isopropylphenyl)methylene (fluorenyl) (cyclopentadienyl) hafnium dimethyl; [tri-n-butyl-ammonium]⁺[(8-{(3-ethylnonyl)isopropyl(t-butyl)siloxy}perfluoronapth-3-yl) (pentalfluoropyrenyl) (2,3,6-trifluorophenyl) (perfluorophenyl)borate]⁻/ diphenylmethyl (fluorenyl) (cyclopentadienyl) hafnium dimethyl; [tri-n-butyl-phosphonium]⁺[(3'-{tri-(isopropyl)siloxy}perfluorobiphen-4-yl)bis(perfluorofluorenyl) (perfluorobiphenylaluminate]⁻/ dimethylsilyl (indenyl) (fluorenyl) hafnium dihydride; [tri-n-butyl-phosphonium]⁺[(4-{(t-butyl) (methyldiethylsilyloctyl) (tri-n-propylsilylhexy)siloxy}-perfluorophenyl) (2,3,6-trifluorophenyl) (perfluorobiphenyl) (perfluorophenyl)borate]⁻/ di(4-n-butylphenyl)methylene (2,7-di-t-butyl fluorenyl) (cyclopentadienyl) hafnium dimethyl; [tri-n-butyl-phosphonium]⁺[(4-{octyl(methyldiethylsilyloctyl)isopropylsiloxy}-perfluorophenyl)bis(perfluorophenyl) (perfluoroanthraceny)borate]⁻/ (4-n-butylphenyl) (4-t-butylphenyl)methylene(2,7-dimethyl-fluorenyl) (indenyl) hafnium dibenzyl; [tri-n-butyl-phosphonium]⁺[(4-{tri-(isopropyl)siloxy}perfluorophenyl) (5,6,7,8-tetrafluoronaphthyl) (perfluorobiphenyl) (pentafluoroanthracenyl)borate]⁻/ dimethylsilylbis(2-methylbenzindenyl) zirconium dimethyl; [tri-n-butyl-phosphonium]⁺[(4-{tri-(isopropyl)siloxy}-perfluoropheny)bis(5,6,7,8-tetrafluoronaphthyl) (perfluorobiphenyl)aluminate]⁻/ diphenylmethylene (indenyl) (2,7-di-t-butyl fluorenyl) hafnium dibenzyl; [tri-n-butyl-phosphonium]⁺[(5-{tri-(isopropyl)siloxy}perfluoronapth-1-yl)bis(perfluorobiphenyl) (perfluoropyrenylborate]⁻/ dimethylsilyl bis(phenylmethylindenyl) hafnium dimethyl; [tri-n-butyl-phosphonium]⁺[(5-{tri-(isopropyl)siloxy}perfluoronapth-1-yl)bis(perfluorobiphenyl) (perfluoropyrenylborate]⁻/ diphenylmethyl (cylcopentadienyl) (fluorenyl) hafnium dimethyl; [tri-n-butyl-phosphonium]+[(6-{di-((tri-(isopropyl)silyloctyl))isopropylsiloxy}perfluoroanthracen-1-yl) (perfluorophenyl) (perfluorobiphenyl) (2,3,4-trifluorophenyl)borate]⁻/ dimethylsilyl bis(methylindenyl) hafnium dimethyl; [tri-n-butyl-phosphonium]⁺[(6-{nonylisopropyl(tri-n-propylsilylhexyl)siloxy}fluoronapth-3-yl) (perfluorobiphenyl) (4,5,7-trifluoronaphthyl) (2,3,6-trifluorophenyl)aluminate]⁻/ (tetramethyl-cyclopentadienyl) (n-propylcyclopentadienyl) zirconium dimethyl; [tri-n-butyl-phosphonium]⁺[(6-{tri-(isopropyl)siloxy}perfluoronapth-1-yl) (perfluoropyrenyl) (pentalfluoropyrenyl) (2',3',5'-trifluorobipheny)borate]⁻/ diphenylmethylene (2,7-di-t-butyl-5-methylfluorenyl) (cyclopentadienyl) hafnium dimethyl; [tri-n-butyl-phosphonium]⁺[(7-{tri-(isopropyl)siloxy}fluoroinden-2-yl) (perfluoronaphthyl) (perfluorobiphenyl) (2',3',5'-trifluorobiphenyl)aluminate]⁻/ (4-n-butylphenyl) (4-t-butylphenyl)methylene (fluorenyl) (cyclopentadienyl) hafnium dimethyl; [tri-n-butyl-phosphonium]⁺[(7-{tri-(isopropyl)siloxy}perfluoropyren-1-yl) (5,6,7,8-tetrafluoronaphthyl) (perfluoronaphthyl) (perfluoropyrenyl)borate]⁻/ dibutylsilyl (fluorenyl) (cyclopentadienyl) hafnium dimethyl; [tri-n-butyl-phosphonium]⁺[(7-{tri-(isopropyl)siloxy}perfluoropyren-1-yl) (perfluoropyrenyl) (perfluorofluorenyl) (perfluorophenyl)borate]⁻/ (tetramethyl-cyclopentadienyl) (n-propylcyclopentadienyl) zirconium dimethyl; [tri-n-butyl-phosphonium]⁺[(7-{tri-(isopropyl)siloxy}perfluoropyren-1-yl)bis(perfluoroanthracenyl) (pentafluoroanthracenyl)borate]⁻/ di(4-n-butylphenyl)methylene (2,7-di-t-butyl fluorenyl) (cyclopentadienyl) hafnium dimethyl; [tri-n-butyl-phosphonium]⁺[(7-{tri-(isopropyl)siloxy}-perfluoropyren-1-yl)bis(perfluoroanthracenyl) (pentafluoroanthracenyl)borate]⁻/ dimethylsilyl(tetramethylcyclopentadienyl) (dodecylamido) hafnium dimethyl; [tri-N-octylammonium]⁺[(2'-{isopropyl(triethylsilylhexyl)isopropylsiloxy}perfluorobiphen-4-yl) (perfluorobiphenyl) (pentafluoroanthracenyl) (perfluorophenyl)borate]⁻/ diphenylmethyl (fluorenyl) (cyclopentadienyl) hafnium dimethyl; [tri-N-octylammonium]⁺[(2'-{octylisopropyl(tri-(isopropyl)silyloctyl)siloxy}perfluorobiphen-4-yl) (perfluoropyrenyl) (pentalfluoropyrenyl) (4,5,6-trifluoronaphthyl)borate]⁻/ di(4-n-butylphenyl)methylene (2,7-dimethyl fluorenyl) (cyclopentadienyl) hafnium dibenzyl; [tri-N-octylammonium]⁺[(2'-{tri-(isopropyl)siloxy}-perfluorobiphen-4-yl)bis(perfluorophenyl) (perfluoropyrenylaluminate]⁻/ (4-n-butylphenyl) (4-t-butylphenyl)methylene (fluorenyl) (cyclopentadienyl) hafnium dimethyl; [tri-N-octylammonium]⁺[(3'-{(triethylsilylpropyl) (triethylsilylethyl)cyclohexylsifoxy}perfluorobiphen-4-yl) (perfluorofluorenyl) (perfluoropyrenyl) (perfluorobiphenyl)borate]⁻/ (4-n-butylphenyl) (4-t-butylphenyl)methylene(fluorenyl) (indenyl) hafnium dimethyl; [tri-N-octylammonium]⁺[(3'-{( triethylsilylpropyl) (triethylsilylethyl)cyclohexylsiloxy}perfluorobiphen-4-yl) (perfluorofluorenyl) (perfluoropyrenyl) (perfluorobiphenyl)boratel]⁻/ bis(4-triethylsilylphenyl)methylene(cyclopentadienyl) (2,7-di-t-butyl-fluorenyl)hafnium dimethyl; itri-N-octylammonium]⁺[(3'-{(triethylsilylpropyl)isopropylnonylsiloxy}perfluorobiphen-4-yl)bis(perfluorophenyl) (perfluorobiphenylborate]⁻/ bis(trimethylsilyl) titanium dimethyl; [tri-N-octylammonium]⁺[(3'-{(methyldiethylsilyloctyl)benzylisopropylsiloxy}perfluorobiphen-4-yl)bis(perfluorophenyl) (perfluoropyrenyl)borate]⁻/ dimethylsilylbis(2-methylbenzindenyl) zirconium dimethyl; [tri-N-octylammonium]⁺[(3-{benzyl(triethylsilylethyl)isopropylsiloxy}-perfluorophenyl) (perfluorofluorenyl) (2',3',5'-trifluorobiphenyl) (perfluoropyrenyl)borate]⁻/ diphenylmethylene (2,7-di-t-butyl fluorenyl) (fluorenyl) hafnium dimethyl; [tri-N-octylammonium]⁺[(3'-{benzylisopropyl(triethylsilylmethyl)siloxy}perfluorobiphen-4-yl) (perfluorobiphenyl) (perfluoroanthracenyl) (perfluorofluorenyl)borate]⁻/ diphenylmethylene (cyclopentadienyl) (2,7-di-t-butyl fluorenyl) hafnium dimethyl; [tri-N-octylammonium]⁺[(3'-{benzylisopropyl(triethylsilylmethyl)siloxy}perfluorobiphen-4-yl) (perfluorobiphenyl) (perfluoroanthracenyl) (perfluorofluorenyl)borate]⁻/ methylene bis(fluorenyl) hafnium dimethyl; [tri-N-octylammonium]⁺[(3-{di-((t-butyl)) (3-ethylnonyl)siloxy}fluorophenyl) (perfluoropyrenyl) (4,5,6-trifluoronaphthyl) (perfluorofluorenyl)borate]⁻/ diphenylmethylene (cyclopentadienyl) (2,7-di-t-butyl fluorenyl) hafnium dimethyl; [tri-N-octylammonium]⁺[(3-{di-((t-butyl)) (3-ethylnonyl)siloxy}fluorophenyl) (perfluoropyrenyl) (4,5,6-trifluoronaphthyl) (perfluorofluorenyl)borate]⁻/ diphenylmethylene(cylcopentadienyl) (fluorenyl) hafnium dimethyl; [tri-N-octylammonium]⁺[(3-{di-(hexyl)isopropylsiloxy}fluorophenyl) (4,5,6-trifluoronaphthyl) (perfluoroanthracenyl) (perfluoronaphthyl)borate]⁻/ dimethylsilylbis(2-methylbenzindenyl) zirconium dimethyl; [tri-N-octylammonium]⁺[(3'-{tri-(isopropyl)siloxy}-fluorobiphen-4-yl) (pentalfluoropyrenyl) (perfluoroanthracenyl) (perfluoronaphthyl)borate]⁻/ (4-n-butylphenyl) (4-t-butylphenyl)methylene(2,7-dimethyl-fluorenyl) (indenyl) hafnium dibenzyl; [tri-N-octylammonium]⁺[(3'-{tri-(isopropyl)siloxy}fluorobiphen-4-yl) (pentalfluoropyrenyl) (perfluoroanthracenyl) (perfluoronaphthyl)borate]⁻/ dimethylsilylbis(tetrahydroindenyl) zirconium dichloride; [tri-N-octylammonium]⁺[(3-{tri-(isopropyl)siloxy}perfluorophenyl) (2,3,5-trifluorophenyl) (tetrafluorofluorenyl) (pentalfluoropyrenyl)borate]⁻/ diphenylmethylene (cyclopentadienyl) (2,7-di-t-butyl fluorenyl) hafnium dimethyl; [tri-N-octylammonium]⁺[(3-{tri-(isopropyl)siloxy}perfluorophenyl) (2,3,5-trifluorophenyl) (tetrafluorofluorenyl) (pentalfluoropyrenyl)borate]⁻/ isopropyl (cyclopentadienyl) (fluorenyl) hafnium dimethyl; [tri-N-octylammonium]⁺[(3-{tri-(isopropyl)siloxy}perfluorophenyl) (perfluoropyrenyl) (perfluorophenyl) (4,5,6-trifluoronaphthyl)borate]⁻/ (4-n-propylphenyl) (4-isopropylphenyl)silylenebis(fluorenyl) hafnium di-t-butyl; [tri-N-octylammonium]⁺[(3-{tri-(isopropyl)siloxy}perfluorophenyl) (perfluoropyrenyl) (perfluorophenyl) (4,5,6-trifluoronaphthyl)borate]⁻/ dimethylsily (bisindenyl) zirconium dichloride; [tri-N-octylammonium]⁺[(3-{tri-(isopropyl)siloxy}perfluorophenyl) (perfluoropyrenyl) (perfluorophenyl) (4,5,6-trifluoronaphthyl)borate]⁻/ methylene (indenyl) (2,7-di-t-butyl-fluorenyl) hafnium dimethyl; [tri-N-octylammonium]⁺[(3-{tri-(isopropyl)siloxy}-perfluorophenyl)tris(perfluorophenyl)aluminate]⁻/ dimethylsilylbis(2-methylbenzindenyl) zirconium dimethyl; [tri-N-octylammonium]⁺[(3-{tri-(isopropyl)siloxy}-perfluorophenyl)tris(perfluorophenyl)aluminate]⁻/ diphenylmethylene (2,7-di-t-butyl fluorenyl) (fluorenyl) hafnium dimethyl; [tri-N-octylammonium]⁺[(4-{(3-ethylnonyl) ( triethylsilylpropyl)isopropylsiloxy}perfluorophenyl) (pentafluoroanthracenyl) (perfluorophenyl) (2,3,5-trifluorophenyl)aluminate]⁻/ bis(1,3-dibutyl-methyl-cyclopentadienyl) zirconium dimethyl; [tri-N-octylammonium]⁺[(4'-{(methyldiethylsilyloctyl) (triethylsilylhexyl) (triethylsilylmethyl)siloxy}perfluorobiphen-3-yl)bis(perfluorophenyl) (perfluoroanthracenyl)aluminate]⁻/ bis(4-(triethylsilyl)phenyl)methylene(cyclopentadienyl) (fluorenyl)hafnium dimethyl; [tri-N-octylammonium]⁺[(4'-{(tri-(isopropyl)silyloctyl) (3-ethylnonyl) (2,2-dimethyloctyl)siloxy}perfluorobiphen-4-yl) (tetrafluorofluorenyl) (2,3,4-trifluorophenyl) (2,3,5-trifluorophenyl)aluminate]⁻/ dibutylsilyl (fluorenyl) (cyclopentadienyl) hafnium dimethyl; [tri-N-octylammonium]⁺[(4-{(triethylsilylethyl)isopropyl(2,2-dimethyloctyl)siloxy}perfluorophenyl)bis(perfluorophenyl) (perfluoropyrenyl)borate]⁻/ diphenylmethyl (cylcopentadienyl) (fluorenyl) hafnium dimethyl; [tri-N-octylammonium]⁺[(4'-{(triethylsilylmethyl)isopropylbenzylsiloxy}perfluorobiphen-3-yl) (tetrafluorofluorenyl) (perfluorophenyl) (perfluoroanthracenyl)borate]⁻/ dimethylsilyl (tetramethylcyclopentadienyl) (adamantyl-1-amino) titanium dimethyl; [tri-N-octylammonium]⁺[(4-{(tri-n-propylsilylhexyl) (methyldiethylsilyloctyl) (t-butyl)siloxy}perfluorophenyl) (perfluorophenyl) (perfluoroanthracenyl) (perfluorobiphenyl)aluminate]⁻/ (4-n-butylphenyl) (4-t-butylphenyl)methylene (2,7-di-t-butyl-fluorenyl) (cyclopentadienyl) hafnium dimethyl; [tri-N-octylammonium]⁺[(4-{(tri-n-propylsilylhexyl)isopropyl( triethylsilylpropyl)siloxy}-perfluorophenyl)bis(perfluorobiphenyl) (2,3,5-trifluorophenyl)aluminate]⁻/ (4-n-propylphenyl) (4-isopropylphenyl)methylene (fluorenyl) (cyclopentadienyl) hafnium dimethyl; [tri-N-octylammonium]⁺[(4-{(tri-n-propylsilylhexyl)isopropyl( triethylsilylpropyl)siloxy}-perfluorophenyl)bis(perfluorobiphenyl) (2,3,5-trifluorophenyl)aluminate]⁻/ diphenylmethylene (cyclopentadienyl) (2,7-dimethyl fluorenyl) hafnium dimethyl; [tri-N-octylammonium]⁺[(4'-{di-(cyclohexyl) (tri-(isopropyl)sityloctyl)siloxy}perfluorobiphen-4-yl) (tetrafluorofluorenyl) (perfluoroanthracenyl) (perfluorophenyl)borate]⁻/ methylene bis(fluorenyl) hafnium dimethyl; [tri-N-octylammonium]⁺[(4'-{di-(isopropyl) (triethylsilylhexyl)siloxy}perfluorobiphen-3-yl) (perfluorofluorenyl) (perfluorobiphenyl) (perfluoroanthracenyl)borate]⁻/ (4-alkylphenyl) (4-t-butylphenyl)methylene(cylcopentadienyl) (fluorenyl) hafnium dimethyl; [tri-N-octylammonium]⁺[(4-{di-(isopropyl)ethylsiloxylperfluorophenyl) (4,5,6,7-tetrafluoronaphthyl) (perfluoropyrenyl) (perfluorophenyl)borate]⁻/ di(4-n-butylphenyl)methylene (2,7-dimethyl fluorenyl) (cyclopentadienyl) hafnium dimethyl; [tri-N-octylammonium]⁺[(4-{ethyl(methyldiethylsilyloctyl)isopropylsiloxy}perfluorophenyl)bis(tetrafluorofluorenyl) (2,3,4-trifluorophenyl)borate]⁻/ dimethylsilyl (tetramethylcyclopentadienyl) (t-butylamino) titanium dimethyl; [tri-N-octylammonium]⁺[(4-{hexyl(triethylsilylhexyl)isopropylsiloxy}-perfluorophenyl)bis(2',3',4'-trifluorobiphenyl) (perfluorofluorenyl)borate]⁻/ dimethylsilylbis(2-methylbenzindenyl) zirconium dimethyl; [tri-N-octylammonium]⁺[(4-{isopropyl (3-ethylnonyl) (methyldiethylsilyloctyl)siloxy}perfluorophenyl)bis(perfluoroanthracenyl) (perfluorophenyl)borate]⁻/ bis(4-triethylsilylphenyl)methylene(cyclopentadienyl) (2,7-di-t-butyl-fluorenyl)hafnium dimethyl; [tri-N-octylammonium]⁺[(4-{isopropyl(2,2-dimethyloctyl)isopropylsiloxy}perfluorophenyl) (perfluorofluorenyl) (2,3,6-trifluorophenyl) (2',3',5'-trifluorobiphenyl)borate]⁻/ dimethylsilyl bis(2-propyl-indenyl) hafnium dimethyl; [tri-N-octylammonium]⁺[(4-{isopropyl(t-butyl) (tri-(isopropyl)silyloctyl)siloxy}perfluorophenyl) (perfluorobiphenyl) (perfluorophenyl) (perfluoroanthracenyl)borate]⁻/ bis(1,3-dibutyl-methyl-cyclopentadienyl) zirconium dimethyl; [tri-N-octylammonium]⁺[(4'-{isopropyl(trimethylsilylethyl)isopropylsiloxy}perfluorobiphen-3-yl) (perfluoropyrenyl) (tetrafluorofluorenyl) (perfluorobiphenyl)aluminate]⁻/ dimethylsilyl bisindenyl hafnium dimethyl; [tri-N-octylammonium]⁺[(4-{isopropylhexyl(triethylsilylpropyl)siloxy}-perfluorophenyl) (2,3,6-trifluorophenyl) (perfluoropyrenyl) (tetrafluorofluorenyl)borate]⁻/ (4-n-propylphenyl) (4-methylphenyl)methylene(fluorenyl) (indenyl) hafnium dimethyl; [tri-N-octylammonium]⁺[(4-{isopropylnonyl( triethylsilylpropyl)siloxy}-perfluorophenyl)bis(perfluorophenyl) (perfluorofluorenylaluminate]⁻/ (4-n-butylphenyl) (4-t-butylphenyl)methylene (fluorenyl) (cyclopentadienyl) hafnium dimethyl; [tri-N-octylammonium]⁺[(4'-{nonylisopropyl(t-butyl)siloxy}fluorobiphen-4-yl)bis(perfluorophenyl) (4,5,7-trifluoronaphthylborate]⁻/ diphenylmethyl (cylcopentadienyl) (fluorenyl) hafnium dimethyl; [tri-N-octylammonium]⁺[(4-{tri-(isopropyl)siloxy}fluorophenyl) (2',3',4'-trifluorobiphenyl) (2',3',5'-trifluorobiphenyl) (perfluoropyrenyl)borate]⁻/ dimethylsilyl(tetramethylcyclopentadienyl) (dodecylamido) hafnium dimethyl; [tri-N-octylammonium]⁺[(4'-{tri-(isopropyl)siloxy}perfluorobiphen-3-yl) (2',3',4'-trifluorobiphenyl) (2,3,6-trifluorophenyl) (4,5,7-trifluoronaphthyl)borate]⁻/ dimethylsilylbis(2-methylbenzindenyl) zirconium dimethyl; [tri-N-octylammonium]⁺[(4'-{tri-(isopropyl)siloxy}perfluorobiphen-3-yl) (perfluorophenyl) (2,3,4-trifluorophenyl) (perfluoronaphthyl)aluminate]⁻/ (pentamethylcyclopentadienyl) (cyclopentadienyl)zirconium dimethyl; [tri-N-octylammonium]⁺[(4'-{tri-(isopropyl)siloxy}perfluorobiphen-4-yl) (5,6,7,8-tetrafluoronaphthyl) (perfluoroanthracenyl) (pentalfluoropyrenyl)aluminate]⁻/ bis(4-triethylsilylphenyl)methylene(cyclopentadienyl) (2,7-di-t-butyl-fluorenyl)hafnium dimethyl; [tri-N-octylammonium]⁺[(4'-{tri-(isopropyl)siloxy}perfluorobiphen-4-yl) (perfluorofluorenyl) (perfluorobiphenyl) (5,6,7,8-tetrafluoronaphthyl)aluminate]⁻/ diphenylmethylene (cyclopentadienyl) (2,7-di-t-butyl fluorenyl) hafnium dimethyl; [tri-N-octylammonium]⁺[(4'-{tri-(isopropyl)siloxy}perfluorobiphen-4-yl) (perfluorophenyl) (perfluorofluorenyl) (perfluorobiphenyl)borate]⁻/ (4-n-butylphenyl) (4-t-butylphenyl)methylene (fluorenyl) (cyclopentadienyl) hafnium dimethyl; [tri-N-octylammonium]⁺[(4'-{tri-(isopropyl)siloxy}-perfluorobiphen-4-yl)bis(perfluorophenyl) (perfluorobiphenyl)aluminate]⁻/ dinapthylmethylene (cyclopentadienyl) (fluorenyl) hafnium dimethyl; [tri-N-octylammonium]⁺[(4'-{tri-(isopropyl)siloxy}perfluorobiphen-4-yl)bis(perfluorophenyl) (perfluorobiphenylborate]⁻/ di(4-n-butylphenyl)methylene (2,7-dimethyl fluorenyl) (cyclopentadienyl) hafnium dibenzyl; [tri-N-octylammonium]⁺[(4-{tri-(isopropyl)siloxy}perfluorophenyl) (2,3,4-trifluorophenyl) (4,5,7-trifluoronaphthyl) (perfluoropyrenyl)borate]⁻/ dimethylsilyl bisindenyl hafnium dimethyl; [tri-N-octylammonium]⁺[(4-{tri-(isopropyl)siloxy}perfluorophenyl) (2,3,4-trifluorophenyl) (4,5,7-trifluoronaphthyl) (perfluoropyrenyl)borate]⁻/ methylene bis(fluorenyl) hafnium dimethyl; [tri-N-octylammonium]⁺[(4-{tri-(isopropyl)siloxy}perfluorophenyl) (2,3,5-trifluorophenyl) (perfluorophenyl) (perfluorofluorenyl)borate]⁻/ dimethylsilylbis(tetrahydroindenyl) zirconium dichloride; [tri-N-octylammonium]⁺[(4-{tri-(isopropyl)siloxy}perfluorophenyl) (2,3,6-trifluorophenyl) (perfluorophenyl) (perfluorobiphenyl)borate]⁻/ dimethylsilyl(tetramethylcyclopentadienyl) (t-butylamido) zirconium dimethyl; [tri-N-octylammonium]⁺[(4-{tri-(isopropyl)siloxy}perfluorophenyl) (4,5,6,7-tetrafluoronaphthyl) (perfluoroanthracenyl) (2,3,6-trifluorophenyl)aluminate]⁻/ diphenylmethyl (cylcopentadienyl) (2,7-dimethylfluorenyl) hafnium dimethyl; [tri-N-octylammonium]⁺[(4-{tri-(isopropyl)siloxy}-perfluorophenyl) (4,5,6-trifluoronaphthyl) (perfluorophenyl) (5,6,7,8-tetrafluoronaphthyl)aluminate]⁻/ dimethylsilyl bis(2-propyl-indenyl) hafnium dimethyl; [tri-N-octylammonium]⁺[(4-{tri-(isopropyl)siloxy}perfluorophenyl) (perfluoroanthracenyl) (2,3,5-trifluorophenyl) (perfluorophenyl)borate]⁻/ dimethylsilyl (tetramethylcyclopentadienyl) (adamantyl-1-amino) titanium dimethyl; [tri-N-octylammonium]⁺[(4-{tri-(isopropyl)siloxy}-perfluorophenyl) (petfluoroanthracenyt) (2,3,5-trifluorophenyl) (perfluorophenyl)borate]⁻/ dimethylsilyl (tetramethylcyclopentadienyl) (t-butylamino) titanium dimethyl; [tri-N-octylammonium]⁺[(4-{tri-(isopropyl)siloxy}perfluorophenyl) (perfluoroanthracenyl) (2,3,5-trifluorophenyl) (perfluorophenyl)borate]⁻/ dimethylsilyl bis(2-propyl-indenyl) hafnium dimethyl; [tri-N-octylammonium]⁺[(4-{tri-(isopropyl)siloxy}perfluorophenyl) (perfluorobiphenyl) (perfluorophenyl) (4,5,6-trifluoronaphthyl)borate]⁻/ dimethylsilyl(tetramethylcyclopentadienyl) (t-butylamido) zirconium dimethyl; [tri-N-octylammonium]⁺[(4-{tri-(isopropyl)siloxy}-perfluorophenyl) (perfluorobiphenyl) (perfluorophenyl) (4,5,6-trifluoronaphthyl)borate]⁻/ methylene (2,7-di-t-butyl fluorenyl) (fluorenyl) hafnium dimethyl; [tri-N-octylammonium]⁺[(4-{tri-(isopropyl)siloxy}perfluorophenyl) (perfluorobiphenyl) (perfluorophenyl) (pentafluoroanthracenyl)aluminate]⁻/ dimethylsilyl bis(phenylmethylindenyl) hafnium dimethyl; [tri-N-octylammonium]⁺[(4-{tri-(isopropyl)siloxy}perfluorophenyl) (perfluoronaphthyl) (pentalfluoropyrenyl) (perfluorophenyl)borate]⁻/ (4-n-butylphenyl) (4-t-butylphenyl)methylene(fluorenyl) (indenyl) hafnium dimethyl; [tri-N-octylammonium]⁺[(4-{tri-(isopropyl)siloxy}perfluorophenyl) (perfluorophenyl) (4,5,6-trifluoronaphthyl) (2,3,4-trifluorophenyl)borate]⁻/ diphenylmethylene(cylcopentadienyl) (2,7-di-t-butyl-fluorenyl) hafnium dimethyl; [tri-N-octylammonium]⁺[(4-{tri-(isopropyl)siloxy}perfluorophenyl) (perfluorophenyl) (perfluorobiphenyl) (tetrafluorofluorenyl)aluminate]⁻/ pentamethyl cyclopentadienyl titanium isopropoxide; [tri-N-octylammonium]⁺[(4-{tri-(isopropyl)siloxy}-perfluorophenyl) (perfluorophenyl) (perfluorofluorenyl) (perfluorobiphenyl)borate]⁻/ diphenylmethylene (cyclopentadienyl) (2,7-di-t-butyl fluorenyl) hafnium dimethyl; [tri-N-octylammonium]⁺[(4-{tri-(isopropyl)siloxy}perfluorophenyl) (perfluoropyrenyl) (2',3',4'-trifluorobiphenyl) (2,3,5-trifluorophenyl)borate]⁻/ pentamethylcyclopentadienyl titanium trimethyl; [tri-N-octylammonium]⁺[(4-{tri-(isopropyl)siloxy}perfluorophenyl) (tetrafluorofluorenyl) (4,5,6,7-tetrafluoronaphthyl) (2',3',5'-trifluorobiphenyl)borate]⁻/ methylene (2,7-di-t-butyl fluorenyl) (fluorenyl) hafnium dimethyl; [tri-N-octylammonium]⁺[(4-{tri-(isopropyl)siloxy}perfluorophenyl)bis(pentalfluoropyrenyl) (perfluorofluorenylborate]⁻/ (4-n-propylphenyl) (4-isopropylphenyl)methylene (fluorenyl) (cyclopentadienyl) hafnium dimethyl; [tri-N-octylammonium]⁺[(4-{tri-(isopropyl)siloxy}perfluorophenyl)bis(perfluorobiphenyl) (pentalfluoropyrenylborate]⁻/ di(4-n-butylphenyl)methylene (2,7-di-t-butyl fluorenyl) (indenyl) hafnium dimethyl; [tri-N-octylammonium]⁺[(4-{tri-(isopropyl)siloxy}-perfluorophenyl)bis(perfluorobiphenyl) (pentalfluoropyrenylborate]⁻/ diphenylmethylene (2,7-di-t-butyl fluorenyl) (fluorenyl) hafnium dimethyl; [tri-N-octylammonium]⁺[(4-{tri-(isopropyl)siloxy}perfluorophenyl)bis(perfluorobiphenyl) (perfluoroanthracenylborate]⁻/ dimethylsily (bisindenyl) zirconium dichloride; [tri-N-octylammonium]⁺[(4-{tri-(isopropyl)siloxy)perfluorophenyl)bis(perfluorobiphenyl) (perfluoroanthracenylborate] diphenylmethylene(cylcopentadienyl) (2,7-methyl-fluorenyl) hafnium dimethyl; [tri-N-octylammonium]⁺[(4-{tri-(isopropyl)siloxy}perfluorophenyl)bis(perfluorophenyl) (pentalfluoropyrenyl)aluminate]⁻/ dimethylsilyl bis(phenylmethylindenyl) hafnium dimethyl; [tri-N-octylammonium]⁺[(4-{tri-(isopropyl)siloxy}perfluorophenyl)bis(perfluorophenyl) (perfluoroanthracenyl)aluminate]⁻/ di(4-n-butylphenyl) methylene (fluorenyl) (indenyl) hafnium dimethyl; [tri-N-octylammonium]⁺[(4-{tri-(isopropyl)siloxy}-perfluorophenyl)bis(perfluorophenyl) (perfluoroanthracenyl)aluminate]⁻/ diphenylmethylene (cyclopentadienyl) (2,7-di-t-butyl fluorenyl) hafnium dimethyl; [tri-N-octylammonium]⁺[(5-{(methyldiethylsilyloctyl) (triethylsilylmethyl)cyclohexylsiloxy}fluoronapth-3-yl) (perfluoropyrenyl) (perfluorophenyl) (4,5,6-trifluoronaphthyl)borate]⁻/ dimethylsilyl (indenyl) (fluorenyl) hafnium dihydride; [tri-N-octylammonium]⁺[(5-{(triethylsilylethyl)isopropylnonylsiloxy}perfluoronapth-2-yl) (perfluoropyrenyl) (perfluorobiphenyl) (5,6,7,8-tetrafluoronaphthyl)borate]⁻/ bis(4-(triethylsilyl)phenyl)methylene(cyclopentadienyl) (2,7-di-t-butyl-fluorenyl)hafnium dimethyl; [tri-N-octylammonium]⁺[(5-{(triethylsilylhexyl) (3-ethylnonyl)isopropylsiloxy}perfluoronapth-2-yl) (2',3',4'-trifluorobiphenyl) (perfluorobiphenyl) (perfluorophenyl)aluminate] dimethylsilyl bis(indenyl) hafnium dimethyl; [tri-N-octylammonium]⁺[(5-{(tri-n-propylsilylhexyl)isopropyl(triethylsilylmethyl)siloxy}fluoronapth-3-yl) (perfluorofluorenyl) (perfluoroanthracenyl) (perfluoropyrenyl)borate]⁻/ (4-n-propylphenyl) (4-isopropylphenyl)silylenebis(fluorenyl) hafnium di-t-butyl; [tri-N-octylammonium]⁺[(5-{(tri-n-propylsilylhexyl)isopropyl(triethylsilylmethyl)siloxy}perfluoroinden-2-yl)bis(perfluoroanthracenyl) (perfluoropyrenyl)borate]⁻/ (4-n-propylphenyl) (4-isopropylphenyl)silylenebis(fluorenyl) hafnium di-t-butyl; [tri-N-octylammonium]⁺[(5-{di-((tri-n-propylsilylhexyl)) (triethylsilylethyl)siloxy}perfluoroinden-1-yl)tris(perfluorophenyl)aluminate]⁻/ (4-n-propylphenyl) (4-isopropylphenyl)methylene (fluorenyl) (cyclopentadienyl) hafnium dimethyl; [tri-N-octylammonium]⁺[(5-{di-(isopropyl)benzylsiloxy}perfluoroinden-2-yl) (pentafluoroanthracenyl) (5,6,7,8-tetrafluoronaphthyl) (perfluorophenyl)borate]⁻/ di(4-n-butylphenyl)methylene (2,7-dimethyl fluorenyl) (cyclopentadienyl) hafnium dibenzyl; [tri-N-octylammonium]⁺[(5-{di-(isopropyl)benzylsiloxy}perfluoronapth-1-yl) (5,6,7,8-tetrafluoronaphthyl) (perfluorophenyl) (2',3',5'-trifluorobiphenyl)aluminate]⁻/ diphenylmethylene (2,7-di-t-butyl fluorenyl) (fluorenyl) hafnium dimethyl; [tri-N-octylammonium]⁺[(5-{hexyl(tri-n-propylsilylhexyl)isopropylsiloxy}perfluoroinden-2-yl) (2',3',5'-trifluorobiphenyl) (2,3,5-trifluorophenyl) (perfluorobiphenyl)aluminate]⁻/ diphenylmethyl (fluorenyl) (cyclopentadienyl) zirconium dimethyl; [tri-N-octylammonium]⁺[(5-{isopropyl (3-ethylnonyl)isopropylsiloxy}perfluoroinden-2-yl)bis(perfluorobiphenyl) (perfluorophenyl)borate]⁻/ (4-n-propylphenyl) (4-isopropylphenyl)silylenebis(fluorenyl) hafnium di-t-butyl; [tri-N-octylammonium]⁺[(5-{isopropyl(3-ethylnonyl)isopropylsiloxy}perfluoroinden-2-yl)bis(perfluorobiphenyl) (perfluorophenyl)borate]⁻/ dimethylsilyl bisindenyl hafnium dimethyl; [tri-N-octylammonium]⁺[(5-{isopropyl(t-butyl) (triethylsilylmethyl)siloxy}perfluoronapth-3-yl) (perfluorophenyl) (tetrafluorofluorenyl) (perfluoropyrenyl)borate]⁻/ di(4-n-butylphenyl)methylene (2,7-di-t-butyl fluorenyl) (indenyl) hafnium dimethyl; [tri-N-octylammonium]⁺[(5-{isopropyl(triethylsilylethyl) (trimethylsilylethyl)siloxy}perfluoroinden-1-yl) (5,6,7,8-tetrafluoronaphthyl) (2',3',5'-trifluorobiphenyl) (4,5,6,7-tetrafluoronaphthyl)aluminate]⁻/ dimethylsilyl bis(naphthylmethylindenyl) hafnium dimethyl; [tri-N-octylammonium]⁺[(5-{isopropylcyclohexylisopropylsiloxy}perfluoronapth-1-yl)tris(perfluorophenyl)borate]⁻/ bis(4-triethylsilylphenyl)methylene(cyclopentadienyl) (2,7-di-t-butyl-fluorenyl)hafnium dimethyl; [tri-N-octylammonium]⁺[(5-{octyl(triethylsilylethyl) (triethylsilylmethyl)siloxy}perfluoronapth-1-yl) (perfluorofluorenyl) (perfluoroanthracenyl) (perfluorobiphenyl)borate]⁻/ dimethylsily (bisindenyl) zirconium dichloride; [tri-N-octylammonium]⁺[(5-{octyl(triethylsilylethyl) (triethylsilylmethyl)siloxy}perfluoronapth-1-yl) (perfluorofluorenyl) (perfluoroanthracenyl) (perfluorobiphenyl)borate]⁻/ diphenylmethylene (2,7-di-t-butyl-5-methylfluorenyl) (cyclopentadienyl) hafnium dimethyl; [tri-N-octylammonium]⁺[(5-{octylisopropyloctylsiloxy}-perfluoronapth-2-yl) (5,6,7,8-tetrafluoronaphthyl) (4,5,7-trifluoronaphthyl) (perfluorofluorenyl)aluminate]⁻/ (4-n-butylphenyl) (4-t-butylphenyl)methylene(2,7-dimethylfluorenyl) (indenyl) hafnium dibenzyl; (tri-N-octylammonium]⁺[(5-{tri-(isopropyl)siloxy}-fluoronapth-3-yl) (pentafluoroanthracenyl) (tetrafluorofluorenyl) (perfluorobiphenyl)borate]⁻/ dimethylsilyl bis(2-propyl-indenyl) hafnium dimethyl; [tri-N-octylammonium]⁺[(5-{tri-(isopropyl)siloxy}perfluoroinden-1-yl) (perfluorophenyl) (4,5,6-trifluoronaphthyl) (tetrafluorofluorenyl)aluminate]⁻/ (4-n-butylphenyl) (4-t- butylphenyl)methylene(fluorenyl) (indenyl) hafnium dimethyl; [tri-N-octylammonium]⁺[(5-{tri-(isopropyl)siloxy}perfluoroinden-1-yl) (perfluorophenyl) (tetrafluorofluorenyl) (perfluoropyrenyl)borate]⁻/ diphenylmethylene (2,7-di-t-butyl-5-methylfluorenyl) (cyclopentadienyl) hafnium dimethyl; [tri-N-octylammonium]⁺[(5-{tri-(isopropyl)siloxy}perfluoroinden-1-yl)bis(tetrafluorofluorenyl) (4,5,6-trifluoronaphthyl)borate]⁻/ (4-n-butylphenyl) (4-t-butylphenyl)methylene(2,7-dimethyl-fluorenyl) (indenyl) hafnium dibenzyl; [tri-N-octylammonium]⁺[(5-{tri-(isopropyl)siloxy}perfluoroinden-2-yl) (pentalfluoropyrenyl) (2,3,5-trifluorophenyl) (perfluorobiphenyl)borate]⁻/ dimethylsily (bisindenyl) zirconium dichloride; [tri-N-octylammonium]⁺[(5-{tri-(isopropyl)siloxy}-perfluoroinden-2-yl) (perfluorophenyl) (2,3,5-trifluorophenyl) (perfluorofluorenyl)borate]⁻/ (4-alkylphenyl) (4-t-butylphenyl)methylene(cylcopentadienyl) (fluorenyl) hafnium dimethyl; [tri-N-octylammonium]⁺[(5-{tri-(isopropyl)sifoxy}perfluoronaphth-1-yl) (perfluorophenyl) (perfluorobiphenyl) (4,5,6,7-tetrafluoronaphthyl)borate]⁻/ bis(trimethylsilyl) titanium dimethyl; [tri-N-octylammonium]⁺[(5-{tri-(isopropyl)siloxy}perfluoronaphth-1-yl)tris(perfluorophenyl)borate]⁻/ silacyclobutyl(tetramethylcyclopentadienyl) (n-propylcyclopentadienyl) zirconium dimethyl; [tri-N-octylammonium]⁺[(5-{tri-(isopropyl)siloxy}-perfluoronapth-1-yl) (5,6,7,8-tetrafluoronaphthyl) (perfluorophenyl) (perfluorobiphenyl)aluminate]⁻/ (4-n-propylphenyl) (4-isopropylphenyl)silylenebis(fluorenyl) hafnium di-t-butyl; [tri-N-octylammonium]⁺[(5-{tri-(isopropyl)siloxy}perfluoronapth-1-yl) (perfluorobiphenyl) (4,5,7-trifluoronaphthyl) (pentalfluoropyrenyl)borate]⁻/ dimethylsilyl (tetramethylcyclopentadienyl) (adamantyl-1-amino) titanium dimethyl; [tri-N-octylammonium]⁺[(5-{tri-(isopropyi)siloxy}perfluoronapth-1-yl) (perfluoropyrenyl) (perfluorophenyl) (2',3',5'-trifluorobiphenyl)borate]⁻/ (tetramethyl-cyclopentadienyl) (n-propylcyclopentadienyl) zirconium dimethyl; [tri-N-octylammonium]⁺[(5-{tri-(isopropyl)siloxy}-perfluoronapth-1-yl)bis(perfluorophenyl) (4,5,6,7-tetrafluoronaphthyl)aluminate]⁻/ dimethylsilyl(tetramethylcyclopentadienyl) (dodecylamido) hafnium dihydride; [tri-N-octylammonium]⁺[(5-{tri-(isopropyl)siloxy}perfluoronapth-1-yl)bis(perfluorophenyl) (4,5,6,7-tetrafluoronaphthyl)aluminate]⁻/ methylene bis(fluorenyl) hafnium dimethyl; [tri-N-octylammonium]⁺[(5-{tri-(isopropyl)siloxy}perfluoronapth-1-yl)bis(perfluorophenyl) (4,5,6,7-tetrafluoronaphthyl)aluminate]⁻/ pentamethyl cyclopentadienyl tribenzyl titanium; [tri-N-octylammonium]⁺[(5-{tri-(isopropyl)siloxy}perfluoronapth-1-yl)bis(perfluorophenyl) (5,6,7,8-tetrafluoronaphthylborate]⁻/ (4-n-propylphenyl) (4-isopropylphenyl)methylene (fluorenyl) (cyclopentadienyl) hafnium dimethyl; [tri-N-octylammonium]⁺[(5-{tri-(isopropyl)siloxy}-perfluoronapth-1-yl)tris(tetrafluorofluorenyl)borate]⁻/ dimethylsilyl(tetramethylcyclopentadienyl) (adamantylamido) titanium dichloride; [tri-N-octylammonium]⁺[(5-{tri-(isopropyl)siloxy}perfluoronapth-2-yl) (perfluorobiphenyl) (perfluorofluorenyl) (2,3,4-trifluorophenyl)borate]⁻/ dinapthylmethylene (cyclopentadienyl) (fluorenyl) hafnium dimethyl; [tri-N-octylammonium]+[(5-{tri-(isopropyl)siloxy}perfluoronapth-2-yl) (perfluorobiphenyl) (perfluoropyrenyl) (perfluoronaphthyl)aluminate]⁻/ di(4-n-butylphenyl)methylene (2,7-dimethyl fluorenyl) (cyclopentadienyl) hafnium dimethyl; [tri-N-octylammonium]⁺[(5-{tri-(isopropyl)siloxy}perfluoronapth-2-yl) (perfluorophenyl) (perfluorobiphenyl) (4,5,7-trifluoronaphthyl)borate]⁻/ pentamethyl cyclopentadienyl titanium isopropoxide; [tri-N-octylammonium]⁺[(5-{tri-(isopropyl)siloxy}perfluoronapth-3-yl) (perfluorophenyl) (2,3,5-trifluorophenyl) (4,5,6-trifluoronaphthyl)borate]⁻/ (4-n-butylphenyl) (4-t- butylphenyl)methylene(fluorenyl) (indenyl) hafnium dimethyl; [tri-N-octylammonium]⁺[(5-{tri-(isopropyl)siloxy}perfluoronapth-3-yl)tris(perfluorophenyl)borate]⁻/ dimethylsilyl bis(methylindenyl) hafnium dimethyl; [tri-N-octylammonium]⁺[(6-{ (3-ethylnonyl) (methyldiethylsilyloctyl)isopropylsiloxy}fluoroanthracen-2-yl) (perfluorobiphenyl) (2,3,5-trifluorophenyl) (2',3',4'-trifluorobiphenyl)aluminate]⁻/ diphenylmethylene (cyclopentadienyl) (2,7-di-t-butyl fluorenyl) hafnium dimethyl; [tri-N-octylammonium]⁺[(6-{ (3-ethylnonyl)benzylisopropylsiloxy}fluoronapth-3-yl)bis(perfluorofluorenyl) (2',3',5'-trifluorobiphenyl)borate]⁻/ diphenylmethyl (cylcopentadienyl) (fluorenyl) hafnium dimethyl; [tri-N-octylammonium]⁺[(6-{(triethylsilylpropyl) (triethylsilylethyl)isopropylsiloxy}-perfluoronapth-1-yl) (4,5,6-trifluoronaphthyl) (2,3,4-trifluorophenyl) (perfluorobiphenyl)borate]⁻/ (4-n-butylphenyl) (4-t-butylphenyl)methylene (2,7-di-t-butyl-fluorenyl) (cyclopentadienyl) hafnium dimethyl; [tri-N-octylammonium]⁺[(6-{( triethylsilylpropyl)benzylisopropylsiloxy}-fluorofluoren-1-yl) (2,3,6-trifluorophenyl) (pentafluoroanthracenyl) (2,3,4-trifluorophenyl)borate]⁻/ di(4-n-butylphenyl)methylene (2,7-dimethyl fluorenyl) (cyclopentadienyl) hafnium dimethyl; [tri-N-octylammonium]⁺[(6-{(2,2-dimethyloctyl)isopropyl (3-ethylnonyl)siloxy}perfluoroanthracen-1-yl) (4,5,6,7-tetrafluoronaphthyl) (5,6,7,8-tetrafluoronaphthyl) (perfluorobiphenyl)aluminate]⁻/ dimethylsily-bisindenyl hafnium dimethyl; [tri-N-octylammonium]⁺[(6-{(methyldiethylsilyloctyl)nonyl( triethylsilylpropyl)siloxy}-perfluoronaphth-1-yl) (perfluorophenyl) (perfluorofluorenyl) (perfluoropyrenyl)borate]⁻/ methylene (2,7-di-t-butyl fluorenyl) (fluorenyl) hafnium dimethyl; [tri-N-octylammonium]⁺[(6-{(tri-(isopropyl)silyloctyl) (3-ethylnonyl) (2,2-dimethyloctyl)siloxy}perfluoronaphth-3-yl)bis(perfluorophenyl) (5,6,7,8-tetrafluoronaphthyl)borate]⁻/ (4-n-propylphenyl) (4-isopropylphenyl)silylenebis(fluorenyl) hafnium di-t-butyl; [tri-N-octylammonium]⁺[(6-{(tri-(isopropyl)silyloctyl) (3-ethylnonyl) (2,2-dimethyloctyl)siloxy}perfluoronapth-1-yl) (perfluorophenyl) (perfluorobiphenyl) (5,6,7,8-tetrafluoronaphthyl)borate]⁻/ dinapthylmethylene (cyclopentadienyl) (fluorenyl) hafnium dimethyl; [tri-N-octylammonium]⁺[(6-{(tri-(isopropyl)silyloctyl)isopropyl (3-ethylnonyl)siloxy}fluoronapth-1-yl) (5,6,7,8-tetrafluoronaphthyl) (2',3',4'-trifluorobiphenyl) (perfluoropyrenyl)aluminate]⁻/ diphenylmethylene (cyclopentadienyl) (2,7-di-t-butyl fluorenyl) hafnium dimethyl; [tri-N-octylammonium]⁺[(6-{(triethylsilylethyl) (2,2-dimethyloctyl)isopropylsiloxy}perfluorofluoren-1-yl) (2,3,5-trifluorophenyl) (2',3',5'-trifluorobiphenyl) (perfluorobiphenyl)borate]⁻/ (4-n-butylphenyl) (4-t-butylphenyl)methylene (2,7-di-t-butyl-fluorenyl) (cyclopentadienyl) hafnium dimethyl; [tri-N-octylammonium]⁺[(6-{(triethylsilylethyl) (2,2-dimethyloctyl)isopropylsiloxy}perfluorofluoren-1-yl) (2,3,5-trifluorophenyl) (2',3',5'-trifluorobiphenyl) (perfluorobiphenyl)borate]⁻/ diphenylmethylene (2,7-di-t-butyl fluorenyl) (fluorenyl) hafnium dimethyl; [tri-N-octylammonium]⁺[(6-{(triethylsilylethyl)isopropyl(tri-n-propylsilylhexyl)siloxy}perfluorofluoren-1-yl) (2,3,5-trifluorophenyl) (perfluorobiphenyl) (perfluoroanthracenyl)aluminate]⁻/ (4-n-butylphenyl) (4-t-butylphenyl)methylene(2,7-dimethyl-fluorenyl) (indenyl) hafnium dibenzyl; [tri-N-octylammonium]⁺[(6-{(triethylsilylethyl)isopropyl(tri-n-propylsilylhexyl)siloxy}-perfluorofluoren-1-yl) (2,3,5-trifluorophenyl) (perfluorobiphenyl) (perfluoroanthracenyl)aluminate]⁻/ isopropyl (cyclopentadienyl) (fluorenyl) hafnium dimethyl; [tri-N-octylammonium]⁺[(6-{(triethylsilylethyl)isopropylbenzylsiloxy}perfluorofluoren-2-yl) (4,5,6,7-tetrafluoronaphthyl) (2',3',5'-trifluorobiphenyl) (perfluorophenyl)aluminate]⁻/ bis(4-(triethylsilyl)phenyl)methylene(cyclopentadienyl) (fluorenyl)hafnium dimethyl; [tri-N-octylammonium]⁺[(6-{(triethylsilylhexyl)isopropylcyclohexylsiloxy}perfluoroanthracen-2-yl)bis(perfluoroanthracenyl) (pentalfluoropyrenylborate]⁻/ diphenylmethyl (fluorenyl) (cyclopentadienyl) zirconium dimethyl; [tri-N-octylammonium]⁺[(6-{(triethylsilylmethyl)isopropylbenzylsiloxy}perfluorofluoren-1-yl) (pentalfluoropyrenyl) (perfluoropyrenyl) (perfluoroanthracenyl)borate]⁻/ dimethylsilyl (indenyl) (fluorenyl) hafnium dihydride; [tri-N-octylammonium]⁺[(6-{(tri-n-propylsilylhexyl)isopropyl(tri-(isopropyl)silyloctyl)siloxy}perfluoroanthracen-2-yl) (perfluorobiphenyl) (tetrafluorofluorenyl) (perfluorophenyl)borate]⁻/ di(4-n-butylphenyl)methylene (2,7-di-t-butyl fluorenyl) (cyclopentadienyl) hafnium dimethyl; [tri-N-octylammonium]⁺[(6-{di-( (3-ethylnonyl))isopropylsiloxy}perfluoroanthracen-2-yl)bis(2',3',4'-trifluorobiphenyl) (tetrafluorofluorenyl)borate]⁻/ methylphenylmethylene bis(fluorenyl) hafnium dimethyl; [tri-N-octylammonium]⁺[(6-{di-((tri-(isopropyl)silyloctyl)) (methyldiethylsilyloctyl)siloxy}-perfluoroinden-2-yl) (perfluorophenyl) (4,5,6-trifluoronaphthyl) (perfluorobiphenyl)aluminate]⁻/ dimethylsilyl bis(2-methyl-4-naphth-2-yl-indenyl) hafnium dimethyl; [tri-N-octylammonium]⁺[(6-{di-((triethylsilylmethyl))isopropylsiloxy}fluoroinden-2-yl)tris(perfluorobiphenyl)aluminate]⁻/ isopropyl (cyclopentadienyl) (fluorenyl) hafnium dimethyl; [tri-N-octylammonium]⁺[(6-{di-(isopropyl) (3-ethylnonyl)siloxy}perfluoroanthracen-1-yl) (5,6,7,8-tetrafluoronaphthyl) (perfluorofluorenyl) (2',3',4'-trifluorobiphenyl)borate]⁻/ diphenylmethyl (fluorenyl) (cyclopentadienyl) zirconium dimethyl; [tri-N-octylammonium]⁺[(6-{ethyl(2,2-dimethyloctyl)hexylsiloxy}perfluoronapth-3-yl) (2,3,4-trifluorophenyl) (perfluorophenyl) (perfluoropyrenyl)borate]⁻/ dimethylsilyl(tetramethylcyclopentadienyl) (dodecylamido) hafnium dihydride; [tri-N-octylammonium]⁺[(6-{hexylisopropyl(t-butyl)siloxy}-perfluoroanthracen-2-yl) (2',3',5'-trifluorobiphenyl) (perfluorobiphenyl) (2,3,5-trifluorophenyl)aluminate]⁻/ pentamethyl cyclopentadienyl tribenzyl titanium; [tri-N-octylammonium]⁺[(6-{isopropyl(2,2-dimethyloctyl) (methyldiethylsilyloctyl)siloxy}-perfluoronapth-1-yl)bis(perfluorophenyl) (perfluorobiphenylborate]⁻/ methylphenylmethylene bis(fluorenyl) hafnium dimethyl; [tri-N-octylammonium]⁺[(6-{isopropyl(2,2-dimethyloctyl)isopropylsiloxy}perfluorofluoren-1-yl) (perfluorobiphenyl) (pentafluoroanthracenyl) (perfluoropyrenyl)borate]⁻/ di(4-n-butylphenyl)methylene (2,7-dimethyl fluorenyl) (cyclopentadienyl) hafnium dibenzyl; [tri-N-octylammonium]⁺[(6-{isopropyl(tri-(isopropyl)silyloctyl) (3-ethylnonyl)siloxy}perfluorofluoren-1-yl) (perfluorophenyl) (perfluorobiphenyl) (pentafluoroanthracenyl)aluminate]⁻/ dimethylsilyl bis(indenyl) hafnium dimethyl; [tri-N-octylammonium]⁺[(6-{isopropyl(tri-(isopropyl)silyloctyl) (3-ethylnonyl)siloxy}-perfluorofluoren-1-yl) (perfluorophenyl) (perfluorobiphenyl) (pentafluoroanthracenyl)aluminate]⁻/ isopropyl (cyclopentadienyl) (fluorenyl) hafnium dimethyl; [tri-N-octylammonium]⁺[(6-{isopropyl(tri-(isopropyl)silyloctyl)benzylsiloxy}-perfluoroanthracen-2-yl) (perfluorofluorenyl) (perfluorophenyl) (2,3,6-trifluorophenyl)aluminate]⁻/ pentamethylcyclopentadienyl titanium trimethyl; [tri-N-octylammonium]⁺[(6-{isopropyl(triethylsilylethyl) (triethylsilylhexyl)siloxy}perfluorofluoren-1-yl)bis(perfluorophenyl) (2,3,5-trifluorophenylborate]⁻/ dimethylsilyl (tetramethylcyclopentadienyl) (t-butylamino) titanium dimethyl; [tri-N-octylammonium]⁺[(6-{isopropyl(triethylsilylethyl) (triethylsilylhexyl)siloxy}perfluorofluoren-1-yl)bis(perfluorophenyl) (2,3,5-trifluorophenylborate]⁻/ methylene bis(fluorenyl) hafnium dimethyl; [tri-N-octylammonium]⁺[(6-{isopropyl(triethylsilylhexyl) (triethylsilylmethyl)siloxy}perfluoroanthracen-1-yl) (perfluorophenyl) (perfluoronaphthyl) (4,5,7-trifluoronaphthyl)borate]⁻/ dinapthylmethylene (cyclopentadienyl) (fluorenyl) hafnium dimethyl; [tri-N-octylammonium]⁺[(6-{methyl(triethylsilylethyl)isopropylsiloxy}perfluoronapth-3-yl) (pentalfluoropyrenyl) (perfluorophenyl) (perfluoroanthracenyl)aluminate]⁻/ dimethylsilylbis(2-methylbenzindenyl) zirconium dimethyl; [tri-N-octylammonium]⁺[(6-{methyl(triethylsilylethyl)isopropylsiloxy}perfluoronapth-3-yl) (pentalfluoropyrenyl) (perfluorophenyl) (perfluoroanthracenyl)aluminate]⁻/ diphenylmethyl (cylcopentadienyl) (2,7-di-t-butyl-fluorenyl) hafnium dimethyl; [tri-N-octylammonium]⁺[(6-{octyl(triethylsilylethyl) (triethylsilylmethyl)siloxy}perfluoronapth-2-yl) (2',3',5'-trifluorobiphenyl) (pentalfluoropyrenyl) (perfluorofluorenyl)aluminate]⁻/ (4-n-propylphenyl) (4-isopropylphenyl)methylene (fluorenyl) (cyclopentadienyl) hafnium dimethyl; [tri-N-octylammonium]⁺[(6-{octyl(trimethylsilylethyl) (methyldiethylsilyloctyl)siloxy}perfluorofluoren-2-yl) (perfluoronaphthyl) (4,5,6-trifluoronaphthyl) (perfluoropyrenyl)aluminate]⁻/ diphenylmethylene (cyclopentadienyl) (2,7-dit-butyl fluorenyl) hafnium dimethyl; [tri-N-octylammonium]⁺[(6-{tri-(isopropyl)siloxy}-fluorofluoren-1-yl) (pentafluoroanthracenyl) (perfluorophenyl) (perfluoroanthracenyl)borate]⁻/ dibutylsilyl (fluorenyl) (cyclopentadienyl) hafnium dimethyl; [tri-N-octylammonium]⁺[(6-{tri-(isopropyl)siloxy}fluoroinden-2-yl) (perfluoropyrenyl) (perfluoroanthracenyl) (perfluorophenyl)borate]⁻/ bis(4-(triethylsilyl)phenyl)methylene(cyclopentadienyl) (fluorenyl)hafnium dimethyl; [tri-N-octylammonium]⁺[(6-{tri-(isopropyl)siloxy}fluoronapth-3-yl) (perfluorophenyl) (4,5,6-trifluoronaphthyl) (2,3,6-trifluorophenyl)aluminate]⁻/ isopropyl (cyclopentadienyl) (fluorenyl) hafnium dimethyl; [tri-N-octylammonium]⁺[(6-{tri-(isopropyl)siloxy}perfluoroanthracen-1-yl) (4,5,6,7-tetrafluoronaphthyl) (5,6,7,8-tetrafluoronaphthyl) (perfluoroanthracenyl)aluminate]⁻/ (4-n-propylphenyl) (4-methylphenyl)methylene(fluorenyl) (indenyl) hafnium dimethyl; [tri-N-octylammonium]⁺[(6-{tri-(isopropyl)siloxy}perfluoroanthracen-1-yl)bis(perfluorobiphenyl) (perfluoropyrenylaluminate]⁻/ dimethylsilyl bis(2-methyl-4-naphth-2-yl-indenyl) hafnium dimethyl; [tri-N-octylammonium]⁺[(6-{tri-(isopropyl)siloxy}perfluoroanthracen-1-yl)bis(perfluorobiphenyl) (perfluoropyrenylaluminate]⁻/ dimethylsilyl(tetramethylcyclopentadienyl) (dodecylamido) hafnium dimethyl; [tri-N-octylammonium]⁺[(6-{tri-(isopropyl)siloxy}perfluoroanthracen-2-yl) (perfluorophenyl) (perfluorobiphenyl) (perfluorofluorenyl)borate]⁻/ dimethylsilyl bis(2-propyl-indenyl) hafnium dimethyl; [tri-N-octylammonium]⁺[(6-{tri-(isopropyl)siloxy}perfluoroanthracen-2-yl) (perfluorophenyl) (perfluorobiphenyl) (perfluoronaphthyl)borate]⁻/ (4-n-butylphenyl) (4-t-butylphenyl)methylene (2,7-di-t-butyl-fluorenyl) (cyclopentadienyl) hafnium dimethyl; [tri-N-octylammonium]⁺[(6-{tri-(isopropyl)siloxy}perfluoroanthracen-2-yl)bis(perfluorophenyl) (4,5,6,7-tetrafluoronaphthylaluminate]⁻/ di(4-n-butylphenyl)methylene (2,7-di-t-butyl fluorenyl) (cyclopentadienyl) hafnium dimethyl; [tri-N-octylammonium]⁺[(6-{tri-(isopropyl)siloxy}-perfluorofluoren-1-yl) (2',3',5'-trifluorobiphenyl) (4,5,6-trifluoronaphthyl) (perfluorophenyl)borate]⁻/ pentamethyl cyclopentadienyl tribenzyl titanium; [tri-N-octylammonium]⁺[(6-{tri-(isopropyl)siloxy}perfluorofluoren-2-yl) (4,5,6-trifluoronaphthyl) (perfluoroanthracenyl) (perfluorophenyl)borate]⁻/ di(4-n-butylphenyl)methylene (2,7-dimethyl fluorenyl) (cyclopentadienyl) hafnium dibenzyl; [tri-N-octylammonium]⁺[(6-{tri-(isopropyl)siloxy}perfluorofluoren-2-yl) (perfluorophenyl) (tetrafluorofluorenyl) (pentafluoroanthracenyl)borate]⁻/ dimethylsily-bisindenyl hafnium dimethyl; [tri-N-octylammonium]⁺[(6-{tri-(isopropyl)siloxy}perfluorofluoren-2-yl) (perfluorophenyl) (tetrafluorofluorenyl) (pentafluoroanthracenyl)borate]⁻/ diphenylmethylene (2,7-di-t-butyl fluorenyl) (fluorenyl) hafnium dimethyl; [tri-N-octylammonium]⁺[(6-{tri-(isopropyl)siloxy}-perfluorofluoren-2-yl) (perfluoropyrenyl) (4,5,7-trifluoronaphthyl) (tetrafluorofluorenyl)borate]⁻/ bis(4-(triethylsilyl)phenyl)methylene(cyclopentadienyl) (fluorenyl)hafnium dimethyl; [tri-N-octylammonium]⁺[(6-{tri-(isopropyl)siloxy}perfluorofluoren-2-yl) (perfluoropyrenyl) (4,5,7-trifluoronaphthyl) (tetrafluorofluorenyl)borate]⁻/ di(4-n-propylphenyl)methylene (2,7-di-t-butyl-5-methylfluorenyl) (fluorenyl) hafnium dimethyl; [tri-N-octylammonium]⁺[(6-{tri-(isopropyl)siloxy}perfluorofluoren-2-yl)bis(perfluorobiphenyl) (perfluorophenylborate]⁻/ dimethylsilyl (indenyl) (fluorenyl) hafnium dihydride; [tri-N-octylammonium]⁺[(6-{tri-(isopropyl)siloxy}perfluoroinden-2-yl) (2,3,5-trifluorophenyl) (2,3,6-trifluorophenyl) (perfluorophenyl)borate]⁻/ (pentamethylcyclopentadienyl) (cyclopentadienyl)zirconium dimethyl; [tri-N-octylammonium]⁺[(6-{tri-(isopropyl)siloxy}perfluoroinden-2-yl) (2,3,5-trifluorophenyl) (perfluorobiphenyl) (perfluoropyrenyl)borate]⁻/ diphenylmethylene (2,7-di-n-butyl fluorenyl) (cyclopentadienyl) hafnium dimethyl; [tri-N-octylammonium]⁺[(6-{tri-(isopropyl)siloxy}perfluoroinden-2-yl) (5,6,7,8-tetrafluoronaphthyl) (perfluorophenyl) (perfluorobiphenyl)borate]⁻/ dimethylsilyl bis(phenylmethylindenyl) hafnium dimethyl; [tri-N-octylammonium]⁺[(6-{tri-(isopropyl)siloxy}perfluoroinden-2-yl) (perfluorofluorenyl) (perfluoroanthracenyl) (perfluorophenyl)aluminate]⁻/ (4-alkylphenyl) (4-t-butylphenyl)methylene(cylcopentadienyl) (fluorenyl) hafnium dimethyl; [tri-N-octylammonium]⁺[(6-{tri-(isopropyl)siloxy}perfluoroinden-2-yl) (perfluorofluorenyl) (perfluoroanthracenyl) (perfluorophenyl)aluminate]⁻/ dimethylsilyl bis(2-methyl-4-phenyl-indenyl) hafnium dimethyl; [tri-N-octylammonium]⁺[(6-{tri-(isopropyl)siloxy}perfluoroinden-2-yl) (perfluorofluorenyl) (perfluoroanthracenyl) (perfluorophenyl)aluminate]⁻/ dimethylsilyl bis(2-propyl-indenyl) hafnium dimethyl; [tri-N-octylammonium]⁺[(6-{tri-(isopropyl)siloxy}-perfluoronaphth-2-yl)bis(perfluorofluorenyl) (perfluoropyrenyl)aluminate]⁻/ dimethylsilyl bis(methylindenyl) hafnium dimethyl; [tri-N-octylammonium]⁺[(6-{tri-(isopropyl)siloxy}-perfluoronaphth-2-yl)bis(perfluorofluorenyl) (perfluoropyrenyl)aluminate]⁻/ diphenylmethylene (2,7-di-t-butyl-5-methylfluorenyl) (cyclopentadienyl) hafnium dimethyl; [tri-N-octylammonium]⁺[(6-{tri-(isopropyl)siloxy}perfluoronaphth-2-yl)bis(perfluorofluorenyl) (perfluoropyrenyl)aluminate]⁻/ diphenylmethylene (indenyl) (2,7-di-t-butyl fluorenyl) hafnium dibenzyl; [tri-N-octylammonium]⁺[(6-{tri-(isopropyl)siloxy}perfluoronaphth-2-yl)bis(perfluorophenyl) (pentalfluoropyrenyl)borate]⁻/ dimethylsilyl (tetramethylcyclopentadienyl) (adamantyl-1-amino) titanium dimethyl; [tri-N-octylammonium]⁺[(6-{tri-(isopropyl)siloxy}perfluoronaphth-2-yl)bis(perfluorophenyl) (pentalfluoropyrenyl)borate]⁻/ dimethylsilyl(tetramethylcyclopentadienyl) (t-butylamido) zirconium dimethyl; [tri-N-octylammonium]⁺[(6-{tri-(isopropyl)siloxy}perfluoronaphth-2-yl)bis(perfluorophenyl) (pentalfluoropyrenyl)borate]⁻/ methylene (indenyl) (2,7-di-t-butyl-fluorenyl) hafnium dimethyl; [tri-N-octylammonium]⁺[(6-{tri-(isopropyl)siloxy}perfluoronaphth-3-yl)bis(2',3',4'-trifluorobiphenyl) (4,5,7-trifluoronaphthylborate]⁻/ (4-n-propylphenyl) (4-methylphenyl)methylene(fluorenyl) (indenyl) hafnium dimethyl; [tri-N-octylammonium]⁺[(6-{tri-(isopropyl)siloxy}perfluoronaphth-3-yl)bis(2',3',4'-trifluorobiphenyl) (4,5,7-trifluoronaphthylborate]⁻/ dimethylsilylbis(2-methylbenzindenyl) zirconium dimethyl; [tri-N-octylammonium]⁺[(6-{tri-(isopropyl)siloxy}perfluoronapth-1-yl) (perfluorophenyl) (perfluoropyrenyl) (perfluorobiphenyl)aluminate]⁻/ methylene (2,7-di-t-butyl fluorenyl) (fluorenyl) hafnium dimethyl; [tri-N-octylammonium]⁺[(6-{tri-(isopropyl)siloxy}perfluoronapth-1-yl) (perfluorophenyl) (perfluoropyrenyl) (perfluorobiphenyl)aluminate]⁻/ silacyclobutyl(tetramethylcyclopentadienyl) (n-propylcyclopentadienyl) zirconium dimethyl; [tri-N-octylammonium]⁺[(6-{tri-(isopropyl)siloxy}pertluoronapth-1-yl}bis(perfluorophenyl) (perfluorofluorenylborate]⁻/ dinapthylmethylene (cyclopentadienyl) (fluorenyl) hafnium dimethyl; [tri-N-octylammonium]⁺[(6-{tri-(isopropyl)siloxy}perfluoronapth-3-yl) (pentalfluoropyrenyl) (perfluorophenyl) (2,3,6-trifluorophenyl)borate]⁻/ (4-n-butylphenyl) (4-t-butylphenyl)methylene(fluorenyl) (indenyl) hafnium dimethyl; [tri-N-octylammonium]⁺[(6-{tri-(isopropyl)siloxy}perfluoronapth-3-yl) (pentalfluoropyrenyl) (perfluorophenyl) (2,3,6-trifluorophenyl)borate]⁻/ di(4-n-butylphenyl) methylene (fluorenyl) (indenyl) hafnium dimethyl; [tri-N-octylammonium]⁺[(6-{tri-(isopropyl)siloxy}perfluoronapth-3-yl) (perfluoroanthracenyl) (perfluorophenyl) (pentalfluoropyrenyl)borate]⁻/ dimethylsilyl (tetramethylcyclopentadienyl) (adamantyl-1-amino) titanium dimethyl; [tri-N-octylammonium]⁺[(6-{tri-(isopropyl)siloxy}-perfluoronapth-3-yl) (perfluoroanthracenyl) (perfluorophenyl) (pentalfluoropyrenyl)borate]⁻/ diphenylmethylene(cylcopentadienyl) (2,7-methyl-fluorenyl) hafnium dimethyl; [tri-N-octylammonium]⁺[(6-{tri-(isopropyl)siloxy}perfluoronapth-3-yl) (perfluorophenyl) (pentalfluoropyrenyl) (2',3',5'-trifluorobiphenyl)borate]⁻/ bis(1,3-dibutyl-methyl-cyclopentadienyl) zirconium dimethyl; [tri-N-octylammonium]⁺[(7-{ (3-ethylnonyl)isopropyl(triethylsilylethyl)siloxy}perfluorofluoren-2-yl)bis(2,3,6-trifluorophenyl) (4,5,6,7-tetrafluoronaphthyl)borate]⁻/ (4-n-propylphenyl) (4-isopropylphenyi)silylenebis(fluorenyl) hafnium di-t-butyl; [tri-N-octylammonium]⁺[(7-( (3-ethylnonyl)isopropylcyclohexylsiloxy}perfluoroanthracen-1-yl) (perfluoronaphthyl) (perfluorobiphenyl) (2,3,4-trifluorophenyl)borate]⁻/ methylene bis(fluorenyl) hafnium dimethyl; [tri-N-octylammonium]⁺[(7-{( triethylsilylpropyl) (triethylsilylethyl)isopropylsiloxy}-perfluoropyren-1-yl)bis(perfluorofluorenyl) (perfluorobiphenyl)borate]⁻/ diphenylmethylene (2,7-di-n-butyl fluorenyl) (cyclopentadienyl) hafnium dimethyl; [tri-N-octylammonium]⁺[(7-{( triethylsilylpropyl)isopropyl(tri-n-propylsilylhexyl)siloxy}perfluorofluoren-1-yl)bis(perfluorophenyl) (4,5,6-trifluoronaphthyl)aluminate]⁻/ dimethylsilyl bis(2-methyl-4-naphth-2-yl-indenyl) hafnium dimethyl; [tri-N-octylammonium]⁺[(7-{(methyldiethylsilyloctyl)isopropylhexylsiloxy}perfluorofluoren-1-yl) (tetrafluorofluorenyl) (perfluorophenyl) (4,5,6-trifluoronaphthyl)borate]⁻/ pentamethylcyclopentadienyl titanium trimethyl; [tri-N-octylammonium]⁺[(7-{(tri-(isopropyl)silyloctyl) (tri-n-propylsilylhexyl)isopropylsiloxy}perfluoropyren-2-yl) (perfluorobiphenyl) (perfluoronaphthyl) (2,3,4-trifluorophenyl)borate]⁻/ silacyclobutyl(tetramethylcyclopentadienyl) (n-propylcyclopentadienyl) zirconium dimethyl; [tri-N-octylammonium]⁺[(7-{(triethylsilylethyl) (methyldiethylsilyloctyl)isopropylsiloxy}fluoroanthracen-1-yl)bis(perfluorophenyl) (2,3,4-trifluorophenyl)borate]⁻/ pentamethylcyclopentadienyl titanium trimethyl; [tri-N-octylammonium]⁺[(7-{(triethylsilylhexyl)isopropyl(t-butyl)siloxy}fluorofluoren-1-yl) (perfluoroanthracenyl) (perfluorophenyl) (perfluoropyrenyl)aluminate]⁻/ dimethylsilyl (tetramethylcyclopentadienyl) (t-butylamino) titanium dimethyl; [tri-N-octylammonium]⁺[(7-{(triethylsilylhexyl)isopropyl(t-butyl)siloxy}perfluorofluoren-1-yl) (perfluorophenyl) (pentalfluoropyrenyl) (4,5,6-trifluoronaphthyl)borate]⁻/ pentamethylcyclopentadienyl titanium trimethyl; [tri-N-octylammonium]⁺[(7-{benzylisopropyl(triethylsilylpropyl)siloxy}-perfluoronapth-2-yl) (perfluoroanthracenyl) (perfluorophenyl) (2,3,5-trifluorophenyl)borate]⁻/ (4-alkylphenyl) (4-t-butylphenyl)methylene(cylcopentadienyl) (fluorenyl) hafnium dimethyl; [tri-N-octylammonium]⁺[(7-{benzylisopropyl(triethylsilylpropyl)siloxy}perfluoronapth-2-yl) (perfluoroanthracenyl) (perfluorophenyl) (2,3,5-trifluorophenyl)borate]⁻/ di(4-n-butylphenyl)methylene (2,7-dimethyl fluorenyl) (cyclopentadienyl) hafnium dibenzyl; [tri-N-octylammonium]⁺[(7-{di-((triethylsilylhexyl))isopropylsiloxy}perfluoropyren-2-yl)bis(perfluorobiphenyl) (perfluorophenyl)borate]⁻/ (4-n-butylphenyl) (4-t-butylphenyl)methylene(2,7-dimethyl-fluorenyl) (indenyl) hafnium dibenzyl; [tri-N-octylammonium]⁺[(7-{di-((triethylsilylhexyl))isopropylsiloxy}perfluoropyren-2-yl)bis(perfluorobiphenyl) (perfluorophenyl)borate]⁻/ methylphenylmethylene bis(fluorenyl) hafnium dimethyl; [tri-N-octylammonium]⁺[(7-{di-(cyclohexyl) (tri-(isopropyl)silyloctyl)siloxy}-fluoronapth-3-yl)bis(perfluorobiphenyl) (perfluoroanthracenyl)borate]⁻/ di(4-n-butylphenyl) methylene (fluorenyl) (indenyl) hafnium dimethyl; [tri-N-octylammonium]⁺[(7-{di-(isopropyl)cyclohexylsiloxy}fluoroanthracen-1-yl) (4,5,7-trifluoronaphthyl) (perfluorophenyl) (perfluorofluorenyl)borate]⁻/ dimethylsilyl bis(2-methyl-indenyl) hafnium dimethyl; [tri-N-octylammonium]⁺[(7-{di-(isopropyl)cyclohexylsiloxy}fluoroanthracen-1-yl) (4,5,7-trifluoronaphthyl) (perfluorophenyl) (perfluorofluorenyl)borate]⁻/ diphenylmethyl (fluorenyl) (cyclopentadienyl) hafnium dimethyl; [tri-N-octylammonium]⁺[(7-{di-(isopropyl)n-propylsiloxy}perfluoroinden-2-yl)bis(perfluorophenyl) (perfluorobiphenylborate]⁻/ dimethylsilyl(tetramethylcyclopentadienyl) (t-butylamido) zirconium dimethyl; [tri-N-octylammonium]⁺[(7-{hexyl(2,2-dimethyloctyl)isopropylsiloxy}perfluoropyren-2-yl) (perfluoropyrenyl) (2,3,4-trifluorophenyl) (perfluoronaphthyl)borate]⁻/ bis(4-triethylsilylphenyl)methylene(cyclopentadienyl) (2,7-di-t-butyl-fluorenyl)hafnium dimethyl; [tri-N-octylammonium]⁺[(7-{hexyl(2,2-dimethyloctyl)isopropylsiloxy}perfluoropyren-2-yl) (perfluoropyrenyl) (2,3,4-trifluorophenyl) (perfluoronaphthyl)borate]⁻/ dimethylsilyl (tetramethylcyclopentadienyl) (t-butylamino) titanium dimethyl; (tri-N-octylammonium]⁺[(7-{hexylisopropyl(tri-(isopropyl)silyloctyl)siloxy}fluoropyren-1-yl) (perfluoronaphthyl) (perfluorophenyl) (perfluorobiphenyl)borate]⁻/ (4-n-butylphenyl) (4-t-butylphenyl)methylene(fluorenyl) (indenyl) hafnium dimethyl; [tri-N-octylammonium]⁺[(7-{isopropyl( triethylsilylpropyl) (3-ethylnonyl)siloxy}perfluoronapth-1-yl) (tetrafluorofluorenyl) (2',3',4'-trifluorobiphenyl) (perfluorobiphenyl)borate]⁻/ bis(1,3-dibutyl-methyl-cyclopentadienyl) zirconium dimethyl; [tri-N-octylammonium]⁺[(7-{isopropyl(triethylsilylpropyl) (3-ethylnonyl)siloxy}perfluoronapth-1-yl) (tetrafluorofluorenyl) (2',3',4'-trifluorobiphenyl) (perfluorobiphenyl)borate]⁻/ dimethylsilyl (tetramethylcyclopentadienyl) (adamantyl-1-amino) titanium dimethyl; [tri-N-octylammonium]⁺[(7-{isopropyl(triethylsilylpropyl) (3-ethylnonyl)siloxy}perfluoronapth-1-yl) (tetrafluorofluorenyl) (2',3',4'-trifluorobiphenyl) (perfluorobiphenyl)borate]⁻/ diphenylmethyl (fluorenyl) (cyclopentadienyl) zirconium dimethyl; [tri-N-octylammonium]⁺[(7-{isopropyl(triethylsilylpropyl) (3-ethylnonyl)siloxy}perfluoronapth-1-yl) (tetrafluorofluorenyl) (2',3',4'-trifluorobiphenyl) (perfluorobiphenyl)borate]⁻/ diphenylmethylene (indenyl) (2,7-di-t-butyl fluorenyl) hafnium dibenzyl; [tri-N-octylammonium]⁺[(7-{isopropyl(triethylsilylpropyl)isopropylsiloxy}perfluoronapth-2-yl)bis(perfluorobiphenyl) (5,6,7,8-tetrafluoronaphthylborate]⁻/ (4-n-butylphenyl) (4-t-butylphenyl)methylene(fluorenyl) (indenyl) hafnium dimethyl; [tri-N-octylammonium]⁺[(7-{isopropyl(t-butyl)cyclohexylsiloxy}perfluoropyren-1-yl) (perfluorobiphenyl) (perfluorophenyl) (perfluoropyrenyl)borate]⁻/ diphenylmethyl (cylcopentadienyl) (2,7-dimethylfluorenyl) hafnium dimethyl; [tri-N-octylammonium]⁺[(7-{isopropyl(triethylsilylethyl)(triethylsilylpropyl)siloxy}-perfluorofluoren-1-yl)tris(perfluorophenyl)borate]⁻/ dimethylsilylbis(tetrahydroindenyl) zirconium dichloride; [tri-N-octylammonium]⁺[(7-{isopropyl(triethylsilylhexyl) (methyldiethylsilyloctyl)siloxy}perfluoronapth-1-yl)bis(perfluorobiphenyl) (perfluorofluorenylborate]⁻/ methylene (indenyl) (2,7-di-t-butyl-fluorenyl) hafnium dimethyl; [tri-N-octylammonium]⁺[(7-{isopropylcycfohexyl(methyldiethylsilyloctyl)siloxy}fluorofluoren-1-yl)bis(4,5,6,7-tetrafluoronaphthyl) (perfluorobiphenyl)borate]⁻/ di(4-n-butylphenyl)methylene (2,7-di-t-butyl fluorenyl) (indenyl) hafnium dimethyl; [tri-N-octylammonium]⁺[(7-{isopropylcyclohexyl(methyldiethylsilyloctyl)siloxy}fluorofluoren-1-yl)bis(4,5,6,7-tetrafluoronaphthyl) (perfluorobiphenyl)borate]⁻/ diphenylmethylene (cyclopentadienyl) (2,7-dimethyl fluorenyl) hafnium dimethyl; [tri-N-octylammonium]⁺[(7-{isopropylcyclohexyl(triethylsilylmethyl)siloxy}perfluoronapth-1-yl) (perfluorofluorenyl) (perfluorobiphenyl) (perfluoroanthracenyl)borate]⁻/ dibutylsilyl (fluorenyl) (cyclopentadienyl) hafnium dimethyl; [tri-N-octylammonium]⁺[(7-{isopropylcyclohexyl(triethylsilylmethyl)siloxy}-perfluoronapth-1-yl) (perfluorofluorenyl) (perfluorobiphenyl) (perfluoroanthracenyl)borate]⁻/ diphenylmethyl (cylcopentadienyl) (2,7-dimethylfluorenyl) hafnium dimethyl; [tri-N-octylammonium]⁺[(7-{isopropylcyclohexyl(triethylsilylmethyl)siloxy}perfluoronapth-1-yl) (perfluorofluorenyl) (perfluorobiphenyl) (perfluoroanthracenyl)borate]⁻/ methylene (2,7-di-t-butyl fluorenyl) (fluorenyl) hafnium dimethyl; [tri-N-octylammonium]⁺[(7-{isopropylnonyl(tri-(isopropyl)silyloctyl)siloxy}perfluoropyren-2-yl)bis(perfluorophenyl) (pentalfluoropyrenylborate]⁻/ dibutylsilyl (fluorenyl) (cyclopentadienyl) hafnium dimethyl; [tri-N-octylammonium]⁺[(7-{nonylisopropyl(methyldiethylsilyloctyl)siloxy}perfluoroinden-2-yl) (perfluorofluorenyl)(4,5,7-trifluoronaphthy)(perfluoropyrenyl)borate]⁻/ dimethylsilyl(tetramethylcyclopentadienyl) (tert-butylamido) titanium dichloride; [tri-N-octytammonium]⁺[(7-{nonylisopropyl(tri-n-propylsilylhexyl)siloxy}perfluoronapth-1-yl) (perfluorophenyl) (pentalfluoropyrenyl) (perfluorofluorenyl)borate]⁻/ methylene (2,7-di-t-butyl fluorenyl) (fluorenyl) hafnium dimethyl; [tri-N-octylammonium]⁺[(7-{octyl(methyldiethylsilyloctyl)(t-butyl)siloxy}fluorofluoren-2-yl)(2,3,6-trifluorophenyl)(2',3',5'-trifluorobiphenyl) (4,5,6,7-tetrafluoronaphthyl)borate]⁻/ diphenylmethylene (cyclopentadienyl) (2,7-di-t-butyl fluorenyl) hafnium dimethyl; [tri-N-octylammonium]⁺[(7-{octyl(triethylsilylethyl) (triethylsilylmethyl)siloxy}perfluoroanthracen-1-yl) (perfluoronaphthyl) (perfluorophenyl) (4,5,6-trifiuoronaphthyl)borate]⁻/ bis(4-triethylsilylphenyl)methylene(cyclopentadienyl) (fluorenyl)hafnium dimethyl; [tri-N-octylammonium]⁺[(7-{octyl(triethylsilylethyl) (triethylsilyl)methyl)siloxy}perfluoronaphth-1-yl)(4,5,7-trifluoronaphthyl)(perfluorophenyl) (2,3,5-trifluorophenyl)borate]⁻/ dimethylsilyl (tetramethylcyclopentadienyl) (adamantyl-1-amino) titanium dimethyl; [tri-N-octylammonium]⁺[(7-{octylisopropyl(triethylsilylpropyl)siloxy}-perfluorofluoren-1-yl) (5,6,7,8-tetrafluoronaphthyl) (perfluorobiphenyl) (4,5,6,7-tetrafluoronaphthyl)borate]⁻/ (4-alkylphenyl) (4-t-butylphenyl)methylene(cylcopentadienyl) (fluorenyl) hafnium dimethyl; [tri-N-octytammonium]⁺[(7-{octylisopropyl( triethylsilylpropyl)siloxy}perfluorofluoren-1-yl) (5,6,7,8-tetrafluoronaphthyl) (perfluorobiphenyl) (4,5,6,7-tetrafluoronaphthyl)borate]⁻/ dimethylsilyl(tetramethylcyclopentadienyl) (tert-butylamido) titanium dichloride; [tri-N-octylammonium]⁺[(7-{octylisopropyl(tri-(isopropyl)silyloctyl)siloxy}perfluoroanthracen-1-yl)bis(perfluoropyrenyl) (pentalfluoropyrenyl)borate]⁻/ methylene bis(fluorenyl) hafnium dimethyl; [tri-N-octylammonium]⁺[(7-{tri-(isopropyl)siloxy}fluoroanthracen-1-yl) (5,6,7,8-tetrafluoronaphthyl) (perfluoroanthracenyl) (2,3,5-trifluorophenyl)borate]⁻/ dimethylsily (bisindenyl) zirconium dichloride; [tri-N-octylammonium]⁺[(7-{tri-(isopropyl)siloxy}fluoroanthracen-1-yl) (5,6,7,8-tetrafluoronaphthyl) (perfluoroanthracenyl) (2,3,5-trifluorophenyl)borate]⁻/ diphenylmethylene (2,7-di-t-butyl fluorenyl) (fluorenyl) hafnium dimethyl; [tri-N-octylammonium]⁺[(7-{tri-(isopropyl)siloxy}fluorofluoren-1-yl) (perfluorobiphenyl) (perfluorophenyl) (pentafluoroanthracenyl)aluminate]⁻/ dimethylsilylbis(tetrahydroindenyl) zirconium dichloride; [tri-N-octylammonium]⁺[(7-{tri-(isopropyl)siloxy}fluorofluoren-1-yl) (perfluorobiphenyl) (perfluorophenyl) (pentafluoroanthracenyl)aluminate]⁻/ methylene bis(fluorenyl) hafnium dimethyl; [tri-N-octylammonium]⁺[(7-{tri-(isopropyl)siloxy}fluoropyren-1-yl) (4,5,6-trifluoronaphthyl) (perfluorophenyl) (pentalfluoropyrenyl)borate]⁻/ (4-n-butylphenyl) (4-t butylphenyl)methylene (fluorenyl) (cyclopentadienyl) hafnium dimethyl; [tri-N-octylammonium]⁺[(7-{tri-(isopropyl)siloxy}fluoropyren-2-yl) (2,3,4-trifluorophenyl) (2',3',5'-trifluorobiphenyl) (perfluoropyrenyl)borate]⁻/ dimethylsilyl (tetramethylcyclopentadienyl) (adamantyl-1-amino) titanium dimethyl; [tri-N-octylammonium]⁺[(7-{tri-(isopropyl)siloxy}-perfluoroanthracen-1-yl) (2,3,6-trifluorophenyl) (perfluorobiphenyl) (perfluorofluorenyl)aluminate]⁻/ methylene (2,7-di-t-butyl fluorenyl) (fluorenyl) hafnium dimethyl; [tri-N-octylammonium]⁺[(7-{tri-(isopropyl)siloxy}perfluoroanthracen-1-yl) (perfluorophenyl) (2,3,4-trifluorophenyl) (perfluorobiphenyl)borate]⁻/ dimethylsilyl(tetramethylcyclopentadienyl) (tert-butylamido) titanium dichloride; [tri-N-octylammonium]+[(7-{tri-(isopropyl)siloxy}perfluoroanthracen-1-yl)bis(perfluorobiphenyl) (4,5,6,7-tetrafluoronaphthylborate]⁻/ methylene (indenyl) (2,7-di-t-butyt-fluorenyl) hafnium dimethyl; [tri-N-octylammonium]⁺[(7-{tri-(isopropyl)siloxy}perfluorofluoren-1-yl) (4,5,7-trifluoronaphthyl) (perfluoronaphthyl) (perfluorobiphenyl)borate]⁻/ bis(4-(triethylsilyl)phenyl)methylene(cyclopentadienyl) (2,7-di-t-butyl-fluorenyl)hafnium dimethyl; [tri-N-octylammonium]⁺[(7-{tri-(isopropyl)siloxy}perfluorofluoren-1-yl) (4,5,7-trifluoronaphthyl) (perfluoronaphthyl) (perfluorobiphenyl)borate]⁻/ diphenylmethyl (cylcopentadienyl) (2,7-dimethylfluorenyl) hafnium dimethyl; [tri-N-octylammonium]⁺[(7-{tri-(isopropyl)siloxy}-perfluorofluoren-1-yl) (4,5,7-trifluoronaphthyl) (perfluoronaphthyl) (perfiuorobiphenyl)borate]⁻/ pentamethyl cyclopentadienyl tribenzyl titanium; [tri-N-octylammonium]⁺[(7-{tri-(isopropyl)siloxy}perfluorofluoren-1-yl)bis(perfluorophenyl) (2,3,4-trifluorophenylborate]⁻/ diphenylmethylene(cylcopentadienyl) (fluorenyl) hafnium dimethyl; [tri-N-octylammonium]⁺[(7-{tri-(isopropyl)siloxy}perfluorofluoren-2-yl) (2,3,4-trifluorophenyl) (4,5,7-trifluoronaphthyl) (2',3',5'-trifluorobiphenyl)aluminate]⁻/ dimethylsilyl (tetramethylcyclopentadienyl) (t-butylamino) titanium dimethyl; [tri-N-octylammonium]⁺[(7-{tri-(isopropyl)siloxy}perfluorofluoren-2-yl) (4,5,7-trifluoronaphthyl) (perfluorobiphenyl) (perfluorofluorenyl)borater]⁻/ dimethylsilyl (indenyl) (fluorenyl) hafnium dihydride; [tri-N-octylammonium]⁺[(7-{tri-(isopropyl)siloxy}perfluorofluoren-2-yl) (4,5,7-trifluoronaphthyl) (perfluorobiphenyl) (perfluorofluorenyl)borate]⁻/ methylphenylmethylene bis(fluorenyl) hafnium dimethyl; [tri-N-octylammonium]⁺[(7-{tri-(isopropyl)siloxy}perfluorofluoren-2-yl) (pentalfluoropyrenyl) (perfluorophenyl) (perfluorobiphenyl)borate]⁻/ methylene (indenyl) (2,7-di-t-butyl-fluorenyl) hafnium dimethyl; [tri-N-octylammonium]⁺[(7-{tri-(isopropyl)siloxy}-perfluorofluoren-2-yl)bis(perfluorobiphenyl) (perfluoroanthracenyl)borate]⁻/ diphenylmethylene(cylcopentadienyl) (2,7-methyl-fluorenyl) hafnium dimethyl; [tri-N-octylammonium]⁺[(7-{tri-(isopropyl)siloxy}perfluoroinden-2-yl) (pentafluoroanthracenyl) (perfluorobiphenyl) (perfluorophenyl)borate]⁻/ dimethylsilyl (tetramethylcyclopentadienyl) (t-butylamino) titanium dimethyl; [tri-N-octylammonium]⁺[(7-(tri-(isopropyl)siloxy)perfluoroinden-2-yl) (perfluorophenyl) (5,6,7,8-tetrafluoronaphthyl) (2,3,6-trifluorophenyl)borate]⁻/ pentamethyl cyclopentadienyl titanium isopropoxide; [tri-N-octylammonium]⁺[(7-{tri-(isopropyl)siloxy}perfluoroinden-2-yl)bis(perfluorobiphenyl) (perfluorophenylborate]⁻/ bis(4-triethylsilylphenyl)methylene(cyclopentadienyl) (2,7-di-t-butyl-fluorenyl)hafnium dimethyl; [tri-N-octylammonium]⁺[(7-{tri-(isopropyl)siloxy}perfluoronapth-1-y) (perfluorofluorenyl) (2,3,6-trifluorophenyl) (perfluorobiphenyl)borate]⁻/ bis(4-(triethylsilyl)phenyl)methylene(cyclopentadienyl) (fluorenyl)hafnium dimethyl; [tri-N-octylammonium]⁺[(7-{tri-(isopropyl)siloxy}perfluoronapth-1-yl) (perfluoronaphthyl) (4,5,6-trifluoronaphthyl) (2',3',5'-trifluorobiphenyl)borate]⁻/ dimethylsilyl bis(methylindenyl) hafnium dimethyl; [tri-N-octylammonium]⁺[(7-{tri-(isopropyl)siloxy}perfluoronapth-2-yl) (2,3,4-trifluorophenyl) (2,3,5-trifluorophenyl) (perfluorophenyl)borate]⁻/ (4-n-propylphenyl) (4-isopropylphenyl)silylenebis(fluorenyl) hafnium di-t-butyl; [tri-N-octylammonium]⁺[(7-(tri-(isopropyl)siloxy}perfluoronapth-2-yl) (2,3,4-trifluorophenyl) (2,3,5-trifluorophenyl) (perfluorophenyl)borate]⁻/ dimethylsilyl (tetramethylcyclopentadienyl) (t-butylamino) titanium dimethyl; [tri-N-octylammonium]⁺[(7-{tri-(isopropyl)siloxy}perfluoronapth-2-yl) (2,3,5-trifluorophenyl) (perfluorophenyl) (perfluorobiphenyl)aluminatel]⁻/ dimethylsilyl(tetramethylcyclopentadienyl) (adamantylamido) titanium dichloride; [tri-N-octylammonium]⁺[(7-{tri-(isopropyl)siloxy}perfluoronapth-2-yl) (perfluorophenyl) (2,3,5-trifluorophenyl) (4,5,7-trifluoronaphthyl)borate]⁻/ dimethylsilyl bis(2-methyl-4-naphth-2-yl-indenyl) hafnium dimethyl; [tri-N-octylammonium]⁺[(7-{tri-(isopropyl)siloxy}perfluoronapth-2-yl) (perfluorophenyl) (2,3,6-trifluorophenyl) (5,6,7,8-tetrafluoronaphthyl)borate]⁻/ (pentamethylcyclopentadienyl) (cyclopentadienyl)zirconium dimethyl; [tri-N-octylammonium]⁺[(7-{tri-(isopropyl)-siloxy}perfluoronapth-2-yl)bis(perfluorofluorenyl) (4,5,6,7-tetrafluoronaphthyl)borate]⁻/ diphenylmethyl (cylcopentadienyl) (2,7-dimethylfluorenyl) hafnium dimethyl; [tri-N-octylammonium]⁺[(7-{tri-(isopropyl)siloxy}perfluoronapth-3-yl) (perfluorobiphenyl) (pentafluoroanthracenyl) (perfluorophenyl)borate]⁻/ bis(1,3-dibutyl-methyl-cyclopentadienyl) zirconium dimethyl; [tri-N-octylammonium]⁺[(7-{tri-(isopropyl)siloxy}-perfluoronapth-3-yl) (perfluorobiphenyl) (pentafluoroanthracenyl) (perfluorophenyl)borate]⁻/ dimethylsilyl bis(2-methyl-4-phenyl-indenyl) hafnium dimethyl; [tri-N-octylammonium]⁺[(7-{tri-(isopropyl)siloxy}perfluoronapth-3-yl) (perfluorobiphenyl) (pentafluoroanthracenyl) (perfluorophenyl)borate]⁻/ dimethylsilyl bis(methylindenyl) hafnium dimethyl; [tri-N-octylammonium]⁺[(7-{tri-(isopropyl)siloxy}perfluoronapth-3-yl)bis(perfluorobiphenyl) (perfluoroanthracenylborate]⁻/ dimethylsilyl bis(2-methyl-4-naphth-2-yl-indenyl) hafnium dimethyl; [tri-N-octylammonium]⁺[(7-{tri-(isopropyl)siloxy}perfluoropyren-1-yl)(2',3',4'-trifluorobiphenyl) (perfluorobiphenyl) (pentalfluoropyrenyl)borate]⁻/ (4-n-propylphenyl) (4-isopropylphenyl)silylenebis(fluorenyl) hafnium di-t-butyl; [tri-N-octylammonium]⁺[(7-{tri-(isopropyl)siloxy}perfluoropyren-1-yl) (4,5,7-trifluoronaphthyl) (perfluorophenyl) (2',3',4'-trifluorobiphenyl)borate]⁻/ diphenylmethylene (cyclopentadienyl) (2,7-dimethyl fluorenyl) hafnium dimethyl; [tri-N-octylammonium]⁺[(7-{tri-(isopropyl)siloxy}perfluoropyren-1-yl)bis(perfluorophenyl) (perfluoronaphthyl)aluminate]⁻/ dimethylsilyl(tetramethylcyclopentadienyl) (t-butylamido) zirconium dimethyl; [tri-N-octylammonium]⁺[(7-{tri-(isopropyl)siloxy}perfluoropyren-1-yl)bis(tetrafluorofluorenyl) (2',3',5'-trifluorobiphenylaluminate]⁻/ methylphenylmethylene bis(fluorenyl) hafnium dimethyl; [tri-N-octylammonium]⁺[(7-{tri-(isopropyl)siloxy}perfluoropyren-2-yl) (2',3',4'-trifluorobiphenyl) (perfluorobiphenyl) (2',3',5'-trifluorobiphenyl)aluminate]⁻/ (4-n-butylphenyl) (4-t-butylphenyl)methylene (2,7-di-t-butyl-fluorenyl) (cyclopentadienyl) hafnium dimethyl; [tri-N-octylammonium]⁺[(7-{tri-(isopropyl)siloxy}perfluoropyren-2-yl)(perfluoroanthracenyl)(2',3',4'-trifluorobiphenyl) (5,6,7,8-tetrafluoronaphthyl)borate]⁻/ dimethylsilyl bis(2-methyl-4-phenyl-indenyl) hafnium dimethyl; [tri-N-octylammonium]⁺[(7-{tri-(isopropyl)siloxy}perfluoropyren-2-yl) (perfluorophenyl) (perfluoronaphthyl) (4,5,7-trifluoronaphthyl)borate]⁻/ dimethylsilylbis(tetrahydroindenyl) zirconium dichloride; [tri-N-octylammonium]⁺[(7-(tri-(isopropyl)siloxy}perfluoropyren-2-yl)bis(perfluorophenyl) (4,5,6,7-tetrafluoronaphthyl)aluminate]⁻/ dimethylsilyl(tetramethylcyclopentadienyl) (dodecylamido) hafnium dihydride; [tri-N-octylammonium]⁺[(8-{(2,2-dimethyloctyl) (3-ethylnonyl) ( triethylsilylpropyl)siloxy}perfluoronapth-3-yl)bis(perfluorophenyl)(tetrafluorofluorenylborate]⁻/ dinapthylmethylene (cyclopentadienyl) (fluorenyl) hafnium dimethyl; [tri-N-octylammonium]⁺[(8-{(triethylsilylethyl)octylisopropylsiloxy}perfluoropyren-2-yl) (2',3',4'-trifluorobiphenyl) (tetrafluorofluorenyl) (perfluorophenyl)borate]⁻/ dimethylsilyl(tetramethylcyclopentadienyl) (tert-butylamido) titanium dichloride; [tri-N-octylammonium]⁺[(8-{(tri-n-propylsilylhexyl) (methyldiethylsilyloctyl)isopropylsiloxy}-perfluoropyren-2-yl) (pentafluoroanthracenyl) (2,3,4-trifluorophenyl) (pentalfluoropyrenyl)borate]⁻/ di(4-n-butylphenyl)methylene (2,7-di-t-butyl fluorenyl) (indenyl) hafnium dimethyl; [tri-N-octylammonium]⁺[(8-{(tri-n-propylsilylhexyl) (methyldiethylsilyloctyl)isopropylsiloxy}perfluoropyren-2-yl) (pentafluoroanthracenyl) (2,3,4-trifluorophenyl) (pentalfluoropyrenyl)borate]⁻/ dimethylsilyl (indenyl) (fluorenyl) hafnium dihydride; [tri-N-octylammonium]⁺[(8-{(tri-n-propylsilylhexyl) (triethylsilylhexyl)isopropylsiloxy}perfluoropyren-2-yl)bis(perfluorophenyl) (2',3',4'-trifluorobiphenyl)borate]⁻/ diphenylmethyl (fluorenyl) (cyclopentadienyl) hafnium dimethyl; [tri-N-octylammonium]⁺[(8-{di-((methyldiethylsilyloctyl))(tri-(isopropyl)silyloctyl)siloxy}-perfluoropyren-2-yl) (perfluorobiphenyl) (perfluoronaphthyl) (2,3,4-trifluorophenyl)borate]⁻/ (4-n-propylphenyl) (4-isopropylphenyl)silylenebis(fluorenyl) hafnium di-t-butyl; [tri-N-octylammonium]⁺[(8-{di-(isopropyl)(triethylsilylhexyl)siloxy}fluoropyren-2-yl)bis(perfluorophenyl) (perfluorobiphenyl)borate]⁻/ di(4-n-butylphenyl)methylene (2,7-di-t-butyl fluorenyl) (indenyl) hafnium dimethyl; [tri-N-octylammonium]⁺[(8-{di-(isopropyl) (triethylsilylhexyl)siloxy}fluoropyren-2-yl)bis(perfluorophenyl) (perfluorobiphenyl)borate]⁻/ dimethylsilylbis(tetrahydroindenyl) zirconium dichloride; [tri-N-octylammonium]⁺[(8-{isopropyl(t-butyl)nonylsiloxy}perfluoropyren-2-yl)bis(perfluorophenyl) (pentalfluoropyrenylborate]⁻/ dimethylsilyl (indenyl) (fluorenyl) hafnium dihydride; [tri-N-octylammonium]⁺[(8-{isopropylcyclohexyl (3-ethylnonyl)siloxy}perfluoronapth-3-yl)bis(perfluorofluorenyl) (2,3,5-trifluorophenyl)aluminate]⁻/ diphenylmethylene(cylcopentadienyl) (2,7-methyl-fluorenyl) hafnium dimethyl; [tri-N-octylammonium]⁺[(8-{isopropylcyclohexyl (3-ethylnonyl)siloxy}perfluoronapth-3-yl)bis(perfluorofluorenyl) (2,3,5-trif)uorophenyl)aluminate]⁻/ pentamethyl cyclopentadienyl titanium isopropoxide; [tri-N-octylammonium]⁺[(8-{tri-(isopropyl)siloxy}perfluoronapth-3-yl) (2',3',4'-trifluorobiphenyl) (4,5,7-trifluoronaphthyl) (perfluoroanthracenyl)borate]⁻/ (tetramethyt-cyclopentadienyl) (n-propylcyclopentadienyl) zirconium dimethyl; [tri-N-octylammonium]⁺[(8-{tri-(isopropyl)siloxy}perfluoronapth-3-yl)bis(perfluorobiphenyl) (perfluorophenyl)borate]⁻/ isopropyl (cyclopentadienyl) (fluorenyl) hafnium dimethyl; [tri-N-octylammonium]⁺[(8-{tri-(isopropyl)siloxy}perfluoropyren-2-yl) (4,5,6-trifluoronaphthyl) (perfluorofluorenyl) (perfluorobiphenyl)aluminate]⁻/ dimethylsilylbis(2-methylbenzindenyl) zirconium dimethyl; [tri-N-octylammonium]⁺[(8-{tri-(isopropyl)sitoxy}perfluoropyren-2-yl) (perfluorophenyl) (4,5,7-trifluoronaphthyl) (perfluoronaphthyl)aluminate]⁻/ di(4-n-butylphenyl)methylene (2,7-di-t-butyl fluorenyl) (cyclopentadienyl) hafnium dimethyl; [tri-N-octylammonium]⁺[(8-{tri-(isopropyl)siloxy}perfluoropyren-2-yl) (perfluorophenyl) (4,5,7-trifluoronaphthyl) (perfluoronaphthyl)aluminate]⁻/ dimethylsily (bisindenyl) zirconium dichloride; [trioctyl-ammonium]⁺[(3'-{nonyl(triethylsilylethyl)isopropylsiloxy}perfluorobiphen-4-yl) (perfluorophenyl) (perfluoropyrenyl) (4,5,7-trifluoronaphthyl)aluminate]⁻/ dimethylsilyl bis(2-propyl-indenyl) hafnium dimethyl; [trioctyl-ammonium]⁺[(3'-{nonyl(triethylsilylethyl)isopropylsiloxy}perfluorobiphen-4-yl) (perfluorophenyl) (perfluoropyrenyl) (4,5,7-trifluoronaphthyl)aluminate]⁻/ dimethylsilyl bis(methylindenyl) hafnium dimethyl; [trioctyl-ammonium]⁺[(3'-(tri-(isopropyl)siloxy}perfluorobiphen-4-yl) (perfluorobiphenyl) (perfluorophenyl) (2,3,6-trifluorophenyl)borate]⁻/ dimethylsilyl (tetramethylcyclopentadienyl) (adamantyl-1-amino) titanium dimethyl; [trioctyl-ammonium]⁺[(4'-{(2,2-dimethyloctyl)cyclohexyl(triethylsilylpropyl)siloxy}-perfluorobiphen-4-yl)bis(perfluorophenyl) (4,5,6-trifluoronaphthyl)borate]⁻/ (4-n-propylphenyl) (4-isopropylphenyl)silylenebis(fluorenyl) hafnium di-t-butyl; [trioctyl-ammonium]⁺[(4-{(triethylsilylethyl) (trimethylsilylethyl)hexylsiloxy}perfluorophenyl) (perfluoronaphthyl) (perfluorofluorenyl) (4,5,6,7-tetrafluoronaphthyl)aluminate]⁻/ dimethylsily (bisindenyl) zirconium dichloride; [trioctyl-ammonium]⁴[(4'-{(trimethylsilylethyl) (triethylsilylethyl) (methyldiethytsilyloctyl)siloxy}perfluorobiphen-3-yl) (perfluoroanthracenyl) (perfluorofluorenyl) (perfluorophenyl)borate]⁻/ dimethylsilylbis(tetrahydroindenyl) zirconium dichloride; [trioctyl-ammonium]⁺[(4-{tri-(isopropyl)siloxy}perfluorophenyl) (perfluorofluorenyl) (2,3,5-trifluorophenyl) (perfluorophenyl)borate]⁻/ bis(4-triethylsilylphenyl)methylene(cyclopentadienyl) (2,7-di-t-butyl-fluorenyl)hafnium dimethyl; [trioctyl-ammonium]⁺[(4-{tri-(isopropyl)siloxy}perfluorophenyl) (perfluorofluorenyl) (2,3,5-trifluorophenyl) (perfluorophenyl)borate]⁻/ di(4-n-butylphenyl)methylene (2,7-dimethyl fluorenyl) (cyclopentadienyl) hafnium dimethyl; [trioctyl-ammonium]⁺[(5-{(t-butyl)hexyl(triethylsilylethyl)sifoxy}perfluoroinden-1-yl) (2,3,4-trifluorophenyl) (pentafluoroanthracenyl) (perfluorophenyl)aluminate]⁻/ di(4-n-butylphenyl) methylene (fluorenyl) (indenyl) hafnium dimethyl; [trioctyl-ammonium]⁺[(5-{tri-(isopropyl)siloxy}-perfluoronapth-2-yl) (perfluorophenyl) (pentalfluoropyrenyl) (perfluoropyrenyl)borate]⁻/ diphenylmethylene (cyclopentadienyl) (2,7-di-t-butyl fluorenyl) hafnium dimethyl; [trioctyl-ammonium]⁺[(6-{(triethylsilylethyl)benzylisopropylsiloxy}perfluoroanthracen-1-yl) (perfluorophenyl) (perfluoroanthracenyl) (perfluorobiphenyl)aluminate]⁻/ silacyclobutyl(tetramethylcyclopentadienyl) (n-propylcyclopentadienyl) zirconium dimethyl; [trioctyl-ammonium]⁺[(6-{di-((methyldiethylsilyloctyl))isopropylsiloxy}perfluoronapth-1-yl) (perfluoroanthracenyl) (perfluoronaphthyl) (perfluorobiphenyl)borate]⁻/ methylene (2,7-di-t-butyl fluorenyl) (fluorenyl) hafnium dimethyl; [trioctyl-ammonium]⁺[(6-{tri-(isopropyl)siloxy}-fluoronapth-2-yl) (perfluorophenyl) (2',3',4'-trifluorobiphenyl) (perfluorobiphenyl)borate]⁻/ (pentamethylcyclopentadienyl) (cyclopentadienyl)zirconium dimethyl; [trioctyl-ammonium]⁺[(6-{tri-(isopropyl)siloxy}fluoronapth-2-yl)tris(perfluorophenyl)aluminate]⁻/ pentamethyl cyclopentadienyl tribenzyl titanium; [trioctyl-ammonium]⁺[(7-{tri-(isopropyl)siloxy}perfluoronapth-1-yl)bis(perfluorophenyl) (4,5,6,7-tetrafluoronaphthylborate]⁻/ diphenylmethyl (cylcopentadienyl) (2,7-di-t-butyl-fluorenyl) hafnium dimethyl; [trioctyl-phosphonium]⁺[(3-{tri-(isopropyl)siloxy}perfluorophenyl) (perfluorobiphenyl) (tetrafluorofluorenyl) (5,6,7,8-tetrafluoronaphthyl)borate]⁻/ (4-n-butylphenyl) (4-t-butylphenyl)methylene(fluorenyl) (indenyl) hafnium dimethyl; [trioctyl-phosphonium]⁺[(3-{tri-(isopropyl)siloxy}perfluorophenyl) (perfluorobiphenyl) (tetrafluorofluorenyl) (5,6,7,8-tetrafluoronaphthyl)borate]⁻/ dimethylsilyl (tetramethylcyclopentadienyl) (adamantyl-1-amino) titanium dimethyl; [trioctyl-phosphonium]⁺[(3-{tri-(isopropyl)siloxy}perfluorophenyl) (perfluorobiphenyl) (tetrafluorofluorenyl) (5,6,7,8-tetrafluoronaphthyl)borate]⁻/ dimethylsilyl bis(indenyl) hafnium dimethyl; [trioctyl-phosphonium]⁺[(4-{cyclohexyl( triethylsilylpropyl)isopropylsiloxy}perfluorophenyl)bis(2,3,5-trifluorophenyl) (perfluoropyrenyl)aluminate]⁻/ dimethylsilyl (indenyl) (fluorenyl) hafnium dihydride; [trioctyl-phosphonium]⁺[(4-{ethyl (3-ethylnonyl) (methyldiethylsilyloctyl)siloxy}-perfluorophenyl)tris(perfluorophenyl)borate]⁻/ (4-n-butylphenyl) (4-t-butylphenyl)methylene (2,7-di-t-butyl-fluorenyl) (indenyl) hafnium dimethyl; [trioctyl-phosphonium]⁺[(6-{tri-(isopropyl)siloxy}fluoronapth-2-yl) (4,5,7-trifluoronaphthyl) (perfluorobiphenyl) (perfluorofluorenyl)borate]⁻/ dimethylsilyl (tetramethylcyclopentadienyl) (adamantyl-1-amino) titanium dimethyl; [trioctyl-phosphonium]⁺[(6-{tri-(isopropyl)siloxy)fluoronapth-2-yl) (4,5,7-trifluoronaphthyl) (perfluorobiphenyl) (perfluorofluorenyl)borate]⁻/ dimethylsilyl(tetramethylcyclopentadienyl) (adamantylamido) titanium dichloride; [trioctyl-phosphonium]⁺[(6-{tri-(isopropyl)siloxy}fluoronapth-2-y) (4,5,7-trifluoronaphthyl) (perfluorobiphenyl) (perfluorofluorenyl)borate]⁻/ diphenylmethyl (cylcopentadienyl) (fluorenyl) hafnium dimethyl; [trioctyl-phosphonium]⁺[(7-{(triethylsilylmethyl)isopropyl(2,2-dimethyloctyl)siloxy}perfluoroinden-2-yl) (perfluorophenyl) (perfluoropyrenyl) (perfluorobiphenyl)aluminate]⁻/ methylphenylmethylene bis(fluorenyl) hafnium dimethyl; [trioctyl-phosphonium]⁺[(7-{hexyl(triethylsilylmethyl) (2,2-dimethyloctyl)siloxy}perfluorofluoren-1-yl) (2,3,6-trifluorophenyl) (2,3,5-trifluorophenyl) (perfluorobiphenyl)borate]⁻/ dimethylsilyl(tetramethylcyclopentadienyl) (adamantylamido) titanium dichloride; [trioctyl-phosphonium]⁺[(7-{tri-(isopropyl)siloxy}perfluoronapth-2-yl)bis(perfluorophenyl) (2,3,4-trifluorophenyl)aluminate]⁻/ dimethylsilyl(tetramethylcyclopentadienyl) (dodecylamido) hafnium dihydride; [trioctyl-phosphoniumj⁺[(8-{octyl(tri-n-propylsilylhexyl) ( triethylsilylpropyl)siloxy}fluoronapth-3-yl)bis(perfluorophenyl) (pentafluoroanthracenyl)borate]⁻/ dimethylsily (bisindenyl) zirconium dichloride; [tripropyl-ammonium]+[(3-{octyl(trimethylsilylethyl) (methyldiethylsilyloctyl)siloxy}perfluorophenyl) (4,5,7-trifluoronaphthyl) (perfluoronaphthyl) (2,3,5-trifluorophenyl)borate]⁻/ diphenylmethylene(cylcopentadienyl) (2,7-di-t-butyl-fluorenyl) hafnium dimethyl; [tripropyl-ammonium]⁺[(3'-{tri-(isopropyl)siloxy}perfluorobiphen-4-yl) (2',3',4'-trifluorobiphenyl) (pentalfluoropyrenyl) (perfluorophenyl)borate]⁻/ diphenylmethylene(cylcopentadienyl) (2,7-dit-butyl-fluorenyl) hafnium dimethyl; [tripropyl-ammonium]⁺[(4'-{(triethylsilylmethyl) ( triethylsilylpropyl) (triethylsilylmethyl)siloxy}perfluorobiphen-4-yl)bis(perfluorophenyl) (perfluorobiphenylborate]⁻/ bis(trimethylsilyl) titanium dimethyl; [tripropyl-ammonium]⁺[(4'-{(triethylsilylmethyl) (triethylsilylpropyl) (triethylsilylmethyl)siloxy}perfluorobiphen-4-yl)bis(perfluorophenyl) (perfluorobiphenylborate]⁻/ di(4-n-butylphenyl)methylene (2,7-dimethyl fluorenyl) (cyclopentadienyl) hafnium dibenzyl; [tripropyl-ammonium]⁺[(4-{benzylisopropylhexylsiloxy}perfluorophenyl) (perfluorobiphenyl) (perfluorophenyl) (perfluorofluorenyl)aluminate]⁻/ (4-n-butylphenyl) (4-t-butylphenyl)methylene (2,7-di-t-butyl-fluorenyl) (indenyl) hafnium dimethyl; [tripropyl-ammonium]⁺[(4'-{tri-(isopropyl)siloxy}-perfluorobiphen-3-yl) (perfluoropyrenyl) (perfluorophenyl) (4,5,6,7-tetrafluoronaphthyl)borate]-/ di(4-n-propylphenyl)methylene (2,7-di-t-butyl-5-methylfluorenyl) (fluorenyl) hafnium dimethyl; [tripropyl-ammonium]⁺[(4-{tri-(isopropyl)siloxy}perfluorophenyl) (2',3',4'-trifluorobiphenyl) (perfluorophenyl) (2,3,4-trifluorophenyl)borate]⁻/ (4-n-butylphenyl) (4-t-butylphenyl)methylene(2,7-dimethyl-fluorenyl) (indenyl) hafnium dibenzyl; [tripropyl-ammonium]⁺[(4-{tri-(isopropyl)siloxy}perfluorophenyl) (5,6,7,8-tetrafluoronaphthyl) (perfluorophenyl) (4,5,7-trifluoronaphthyl)aluminate]⁻/ dimethylsilyl bis(2-methyl-4-phenyl-indenyl) hafnium dimethyl; [tripropyl-ammonium]⁺[(4-{tri-(isopropyl)siloxy}perfluorophenyl) (perfluorobiphenyl) (pentalfluoropyrenyl) (perfluoronaphthyl)borate]⁻/ (4-n-propylphenyl) (4-methylphenyl)methylene(fluorenyl) (indenyl) hafnium dimethyl; [tripropyl-ammonium]⁺[(7-{( triethylsilylpropyl)benzylisopropylsiloxy}perfluoroinden-2-yl) (4,5,6-trifluoronaphthyl) (2,3,5-trifluorophenyl) (perfluorophenyl)borate]⁻/ (4-n-butylphenyl) (4-t-butylphenyl)methylene(fluorenyl) (indenyl) hafnium dimethyl; [tripropyl-ammonium]⁺[(7-{(2,2-dimethyloctyl) (3-ethylnonyl) (triethylsilylpropyl)siloxy}perfluoroinden-2-yl) (tetrafluorofluorenyl) (perfluorophenyl) (2,3,4-trifluorophenyl)aluminate]⁻/ di(4-n-butylphenyl)methylene (2,7-dimethyl fluorenyl) (cyclopentadienyl) hafnium dimethyl; [tripropyl-ammonium]⁺[(7-{(2,2-dimethyloctyl) (3-ethylnonyl) (triethylsilylpropyl)siloxy}-perfluoroinden-2-yl) (tetrafluorofluorenyl) (perfluorophenyl) (2,3,4-trifluorophenyl)aluminate]⁻/ dimethylsilylbis(2-methylbenzindenyl) zirconium dimethyl; [tripropyl-ammonium]⁺[(7-{(2,2-dimethyloctyl) (3-ethylnonyl) (triethylsilylpropyl)siloxy}perfluoroinden-2-yl) (tetrafluorofluorenyl) (perfluorophenyl) (2,3,4-trifluorophenyl)aluminate]⁻/ diphenylmethyl (fluorenyl) (cyclopentadienyl) zirconium dimethyl; [tripropyl-ammonium]⁺[(7-{octylisopropyloctylsiloxy}perfluoronapth-3-yl) (2,3,6-trifluorophenyl) (5,6,7,8-tetrafluoronaphthyl) (2,3,5-trifluorophenyl)borate]⁻/ methylphenylmethylene bis(fluorenyl) hafnium dimethyl; [tripropyl-ammonium]⁺[(7-{tri-(isopropyl)siloxy}perfluoroinden-2-yl) (4,5,6-trifluoronaphthyl) (2,3,6-trifluorophenyl) (tetrafluorofluorenyl)borate]⁻/ (tetramethyl-cyclopentadienyl) (n-propylcyclopentadienyl) zirconium dimethyl; [tripropyl-ammonium]⁺[(7-{tri-(isopropyl)siloxy}perfluoroinden-2-yl)(perfluorophenyl) (2,3,6-trifluorophenyl) (2,3,5-trifluorophenyl)borate]⁻/ dimethylsilyl bis(methylindenyl) hafnium dimethyl; [tripropyl-ammonium]⁺[(7-{tri-(isopropyl)siloxy}perfluoronapth-1-yl) (tetrafluorofluorenyl) (perfluorofluorenyl) (perfluorophenyl)borate]⁻/ (tetramethyl-cyclopentadienyl) (n-propylcyclopentadienyl) zirconium dimethyl; [tripropyl-ammonium]⁺[(7-{tri-(isopropyl)siloxy}perfluoropyren-2-yl)bis(perfluorophenyl) (perfluorobiphenylaluminate]⁻/ dimethylsily (bisindenyl) zirconium dichloride; [tripropyl-ammonium]⁺[(7-{tri-(isopropyl)siloxy}perfluoropyren-2-yl)bis(perfluorophenyl) (perfluorobiphenylaluminate]⁻/ methylene bis(fluorenyl) hafnium dimethyl; [tripropyl-phosphonium]⁺[(3-{(3-ethylnonyl)isopropyl(t-butyl)siloxy}perfluorophenyl) (perfluorobiphenyl) (pentafluoroanthracenyl) (perfluoropyrenyl)borate]⁻/ dimethylsilyl (tetramethylcyclopentadienyl) (adamantyl-1-amino) titanium dimethyl; [tripropyl-phosphonium]⁺[(3-{(3-ethylnonyl)isopropyl(t-butyl)siloxy}perfluorophenyl) (perfluorobiphenyl) (pentafluoroanthracenyl) (perfluoropyrenyl)borate]⁻/ dimethylsilyl bis(phenylmethylindenyl) hafnium dimethyl; [tripropyl-phosphonium]⁺[(3-{(3-ethylnonyl)isopropyl(t-butyl)siloxy}perfluorophenyl) (perfluorobiphenyl) (pentafluoroanthracenyl) (perfluoropyrenyl)borate]⁻/ dimethylsilyl(tetramethylcyclopentadienyl) (dodecylamido) hafnium dimethyl; [tripropyl-phosphonium]⁺[(3-{(3-ethylnonyl)isopropyl(t-butyl)siloxy}perfluorophenyl) (perfluorobiphenyl) (pentafluoroanthracenyl) (perfluoropyrenyl)borate]⁻/ isopropyl (cyclopentadienyl) (fluorenyl) hafnium dimethyl; [tripropyl-phosphonium]⁺[(3-{ (3-ethylnonyl)isopropyl(t-butyl)siloxy}perfluorophenyl) (perfluorobiphenyl) (pentafluoroanthracenyl) (perfluoropyrenyl)borate]⁻/ methylene bis(fluorenyl) hafnium dimethyl; [tripropyl-phosphonium]⁺[(4-{(trimethytsilylethyl)(t-butyl)(triethylsilytethyl)siloxy}-perfluorophenyl) (5,6,7,8-tetrafluoronaphthyl) (perfluorobiphenyl) (perfluorofluorenyl)borate]⁻ dimethylsilyl bis(indenyl) hafnium dimethyl; [tripropyl-phosphonium]⁺[(4-{(trimethylsilylethyl) (t-butyl) (triethylsilylethyl)siloxy}perfluorophenyl) (5,6,7,8-tetrafluoronaphthyl) (perfluorobiphenyl) (perfluorofluorenyl)borate]⁻/ diphenylmethylene (2,7-di-t-butyl fluorenyl) (fluorenyl) hafnium dimethyl; [tripropyl-phosphonium]⁺[(5-{(triethylsilylmethyl) ( triethylsilylpropyl) (triethylsilylmethyl)siloxy}perfluoroinden-1-yl) (perfluoroanthracenyl) (perfluorophenyl) (perfluorobiphenyl)borate]⁻/ bis(4-(triethylsilyl)phenyl)methylene(cyclopentadienyl) (fluorenyl)hafnium dimethyl; [tripropyl-phosphonium]⁺[(5-{(triethylsilylmethyl) (triethylsilylpropyl) (triethylsilylmethyl)siloxy}-perfluoroinden-1-yl) (perfluoroanthracenyl) (perfluorophenyl) (perfluorobiphenyl)borate]⁻/ dimethylsilyl(tetramethylcyclopentadienyl) (dodecylamido) hafnium dimethyl; [tripropyl-phosphonium]⁺[(5-{tri-(isopropyl)siloxy}perfluoroinden-2-yl) (perfluoroanthracenyl) (2,3,4-trifluorophenyl) (perfluorophenyl)borate]⁻/ bis(4-triethylsilylphenyl)methylene(cyclopentadienyl) (2,7-di-t-butyt-fluorenyl)hafnium dimethyl; [tripropyl-phosphonium]⁺[(5-{tri-(isopropyl)siloxy}perfluoronapth-3-yl) (pentafluoroanthracenyl) (2',3',4'-trifluorobiphenyl) (perfluorophenyl)borate]⁻/ diphenylmethylene (cyclopentadienyl) (2,7-di-t-butyl fluorenyl) hafnium dimethyl; [tripropyl-phosphonium]⁺[(5-{tri-(isopropyl)siloxy}-perfluoronapth-3-yl)bis(perfluorophenyl) (perfluoroanthracenyl)aluminate]⁻/ methylene (2,7-dit-butyl fluorenyl) (fluorenyl) hafnium dimethyl; [tripropyl-phosphonium]⁺[(6-{(t-butyl)nonyl(methyldiethylsilyloctyl)siloxy}perfluoronapth-2-yl) (perfluorophenyl) (perfluorobiphenyl) (2,3,5-trifluorophenyl)borate]⁻/ diphenylmethylene(cylcopentadienyl) (2,7-methyl-fluorenyl) hafnium dimethyl; [tripropyl-phosphonium]⁺[(6-{tri-(isopropyl)siloxy}-perfluoronaphth-3-yl) (perfluoropyrenyl) (2',3',5'-trifluorobiphenyl) (perfluorobiphenyl)borate]⁻/ di(4-n-butylphenyl)methylene (2,7-dimethyl fluorenyl) (cyclopentadienyl) hafnium dibenzyl; [tripropyl-phosphonium]⁺[(6-{tri-(isopropyl)siloxy}perfluoronapth-2-yl) (4,5,7-trifluoronaphthyl) (2,3,4-trifluorophenyl) (4,5,6-trifluoronaphthyl)borate]⁻/ bis(4-(triethylsilyl)phenyl)methylene(cyclopentadienyl) (2,7-di-t-butyl-fluorenyl)hafnium dimethyl; [tripropyl-phosphonium]⁺[(6-{tri-(isopropyl)siloxy}perfluoronapth-3-yl) (2,3,5-trifluorophenyl) (perfluorophenyl) (perfluoroanthracenyl)aluminate]⁻/ di(4-n-butylphenyl) methylene (fluorenyl) (indenyl) hafnium dimethyl; [tripropyl-phosphonium]⁺[(6-{tri-(isopropyl)siloxy}perfluoronapth-3-yl) (2,3,5-trifluorophenyl) (perfluorophenyl) (perfluoroanthracenyl)aluminate]⁻/ diphenylmethylene (2,7-di-t-butyl-5-methylfluorenyl) (cyclopentadienyl) hafnium dimethyl; [tripropyl-phosphonium]⁺[(7-{isopropyl(triethylsilylhexyl) (triethylsilylmethyl)siloxy}-perfluoroanthracen-1-yl)bis(perfluorophenyl) (2,3,5-trifluorophenyl)borate]⁻/ dimethylsilyl(tetramethylcyclopentadienyl) (tert-butylamido) titanium dichloride; [tri-t-butyl-ammonium]⁺[(4-{(trimethylsilylethyl)isopropyl(triethylsilylmethyl)siloxy}perfluorophenyl) (perfluoropyrenyl) (perfluorobiphenyl) (4,5,7-trifluoronaphthyl)borate]⁻/ (4-n-propylphenyl) (4-isopropylphenyl)methylene (fluorenyl) (cyclopentadienyl) hafnium dimethyl; [tri-t-butyl-ammonium]⁺[(4'-{tri-(isopropyl)siloxy}perfluorobiphen-4-yl) (5,6,7,8-tetrafluoronaphthyl) (perfluorophenyl) (perfluorofluorenyl)borate]⁻/ dimethylsilyl bis(phenylmethylindenyl) hafnium dimethyl; [tri-t-butyl-ammonium]+[(5-{(trimethylsilylethyl)hexylisopropylsiloxy}perfluoronapth-2-yl)bis(perfluorophenyl) (pentalfluoropyrenyl)aluminate]⁻/ (4-n-butylphenyl) (4-t-butylphenyl)methylene (2,7-di-t-butyl-fluorenyl) (cyclopentadienyl) hafnium dimethyl; [tri-t-butyl-ammonium]⁺[(5-{(tri-n-propylsilylhexyl) (methyldiethylsilyloctyl)isopropylsiloxy}-perfiuoronapth-2-yl) (perfluorobiphenyl) (2,3,6-trifluorophenyl) (perfluoronaphthyl)borate]⁻/ dimethylsilyl (tetramethylcyclopentadienyl) (t-butylamino) titanium dimethyl; [tri-t-butyl-ammonium]⁺[(6-{(triethylsilylhexyl)isopropylcyclohexylsiloxy}perfluoroanthracen-1-yl) (perfluoropyrenyl) (perfluorobiphenyl) (perfluorophenyl)borate]⁻/ dimethylsilyl bis(2-methyl-4-phenyl-indenyl) hafnium dimethyl; [tri-t-butyl-ammonium]⁺[(6-{di-(isopropyl)benzylsiloxy}-perfluoroanthracen-2-yl) (pentafluoroanthracenyl) (4,5,7-trifluoronaphthyl) (4,5,6,7-tetrafluoronaphthyl)borate]⁻/ dimethylsilyl bis(2-methyl-4-naphth-2-yl-indenyl) hafnium dimethyl; [tri-t-butyl-ammonium]⁺[(6-{isopropyloctylisopropylsiloxy}perfluoronapth-1-yl)bis(perfluorophenyl) (perfluorobiphenylborate]⁻/ diphenylmethylene(cylcopentadienyl) (2,7-methyl-fluorenyl) hafnium dimethyl; [tri-t-butyl-ammonium]⁺[(6-(tri-(isopropyl)siloxy}-perfluorofluoren-2-yl)bis(perfluorobiphenyl) (4,5,7-trifluoronaphthylborate]⁻/ di(4-n-butylphenyl)methylene (2,7-di-t-butyl fluorenyl) (indenyl) hafnium dimethyl; [tri-t-butyl-ammonium]⁺[(7-{tri-(isopropyl)siloxy}perfluoroanthracen-1-yl) (4,5,7-trifluoronaphthyl) (perfluoropyrenyl) (perfluorophenyl)borate]⁻/ diphenylmethyl (fluorenyl) (cyclopentadienyl) zirconium dimethyl; [tri-t-butyl-ammonium]⁺[(7-{tri-(isopropyl)siloxy}perfluorofluoren-1-yl) (perfluorobiphenyl) (perfluoronaphthyl) (pentalfluoropyrenyl)borate]⁻/ diphenylmethyl (fluorenyl) (cyclopentadienyl) zirconium dimethyl; [tri-t-butyl-ammonium]⁺[(7-{tri-(isopropyl)siloxy}perfluoropyren-1-yl) (perfluorobiphenyl) (2,3,6-trifluorophenyl) (2',3',5'-trifluorobiphenyl)aluminate]⁻/ di(4-n-propylphenyl)methylene (2,7-di-t-butyl-5-methylfluorenyl) (fluorenyl) hafnium dimethyl; [tri-t-butyl-phosphonium]⁺[(2'-{tri-(isopropyl)siloxy}-perfluorobiphen-4-yl) (2',3',5'-trifluorobiphenyl) (4,5,6-trifluoronaphthyl) (perfluorophenyl)aluminate]⁻/ diphenylmethylene(cylcopentadienyl) (2,7-methyl-fluorenyl) hafnium dimethyl; [tri-t-butyl-phosphonium]⁺[(4-{isopropyl(tri-n-propylsilylhexyl)isopropylsiloxy}perfluorophenyl)bis(5,6,7,8-tetrafluoronaphthyl) (perfluorobiphenylborate]⁻/ dimethylsilyl bis(naphthylmethylindenyl) hafnium dimethyl; [tri-t-butyl-phosphonium]⁺[(5-{tri-(isopropyl)siloxy}perfluoronapth-2-yl) (perfluorophenyl) (perfluoropyrenyl) (4,5,6-trifluoronaphthyl)aluminate]⁻/ dimethylsilyl(tetramethylcyclopentadienyl) (dodecylamido) hafnium dihydride; [tri-t-butyl-phosphonium]⁺[(5-{tri-(isopropyl)siloxy}perfluoronapth-3-yl) (2,3,5-trifluorophenyl) (5,6,7,8-tetrafluoronaphthyl) (perfluorobiphenyl)borate]⁻/ dimethylsilyl (indenyl) (fluorenyl) hafnium dihydride; [tri-t-butyl-phosphonium]⁺[(6-{di-(isopropyl)ethylsiloxy}perfluoronaphth-2-yl) (2',3',5'-trifluorobiphenyl) (perfluorobiphenyl) (5,6,7,8-tetrafluoronaphthyl)borate]⁻/ dimethylsilylbis(2-methylbenzindenyl) zirconium dimethyl; [tri-t-butyl-phosphonium]⁺[(6-{di-(isopropyl)ethylsiloxy}perfluoronaphth-2-yl) (2',3',5'-trifluorobiphenyl) (perfluorobiphenyl) (5,6,7,8-tetrafluoronaphthyl)borate]⁻/ diphenylmethylene (2,7-di-t-butyl fluorenyl) (fluorenyl) hafnium dimethyl; [tri-t-butyl-phosphonium]⁺[(7-{tri-(isopropyl)siloxy}perfluorofluoren-2-yl) (perfluorophenyl) (2,3,4-trifluorophenyl) (perfluorobiphenyl)aluminate]⁻/ diphenylmethylene (cyclopentadienyl) (2,7-dimethyl fluorenyl) hafnium dimethyl; [tri-t-butyl-phosphonium]⁺[(7-{tri-(isopropyl)siloxy}perfluoronapth-1-yl)bis(perfluorophenyl) (pentafluoroanthracenyl)borate/⁻/ bis(4-(triethylsilyl)phenyl)methylene(cyclopentadienyl) (fluorenyl)hafnium dimethyl; [trityl]⁺[(2'-{isopropyl(triethylsilylhexyl)cyclohexylsiloxy}perfluorobiphen-4-yl) (4,5,7-trifluoronaphthyl) (perfluorofluorenyl) (perfluorophenyl)borate]⁻/ (4-n-propylphenyl) (4-isopropylphenyl)sitylenebis(fluorenyl) hafnium di-t-butyl; [trityl]⁺[(2'-{isopropyl(triethylsilylhexyl)isopropylsiloxy}fluorobiphen-4-yl) (perfluoronaphthyl) (perfluoropyrenyl) (perfluorobiphenyl)borate]⁻/ dimethylsilyl bis(phenylmethylindenyl) hafnium dimethyl; [trityl]⁺[(2'-{isopropyl(triethylsilylhexyl)isopropylsiloxy}fluorobiphen-4-yl) (perfluoronaphthyl) (perfluoropyrenyl) (perfluorobiphenyl)borate]⁻/ diphenylmethylene(cylcopentadienyl) (2,7-methyl-fluorenyl) hafnium dimethyl; [trityl]⁺[(2'-{isopropyl(trimethylsilylethyl) (2,2-dimethyloctyl)siloxy}perfluorobiphen-4-yl) (4,5,6,7-tetrafluoronaphthyl) (perfluoropyrenyl) (perfluorophenyl)borate]⁻/ (4-n-propylphenyl) (4-methylphenyl)methylene(fluorenyl) (indenyl) hafnium dimethyl; [trityl]⁺[(2'-{isopropyl(trimethylsilylethyl) (2,2-dimethyloctyl)siloxy}perfluorobiphen-4-yl) (4,5,6,7-tetrafluoronaphthyl) (perfluoropyrenyl) (perfluorophenyl)borate]⁻/ (tetramethyl-cyclopentadienyl) (n-propylcyclopentadienyl) zirconium dimethyl; [trityl]⁺[(2'-{isopropyl(trimethylsilylethyl) (2,2-dimethyloctyl)siloxy}perfluorobiphen-4-yl) (4,5,6,7-tetrafluoronaphthyl) (perfluoropyrenyl) (perfluorophenyl)borate]⁻/ isopropyl (cyclopentadienyl) (fluorenyl) hafnium dimethyl; [trityl]⁺[(2'-{tri-(isopropyl)siloxy}perfluorobiphen-4-yl) (perfluorobiphenyl) (4,5,7-trifluoronaphthyl) (perfluorophenyl)borate]⁻/ bis(trimethylsilyl) titanium dimethyl; [trityl]⁺[(2'-{tri-(isopropyl)siloxyl}perfluorobiphen-4-yl) (perfluorobiphenyl) (4,5,7-trifluoronaphthyl) (perfluorophenyl)borate]⁻/ di(4-n-propylphenyl)methylene (2,7-di-t-butyl-5-methylfluorenyl) (fluorenyl) hafnium dimethyl; [trityl]⁺[(2'-{tri-(isopropyl)siloxy}-perfluorobiphen-4-yl) (perfluorobiphenyl) (perfluorophenyl) (4,5,6-trifluoronaphthyl)borate]⁻/ (tetramethyl-cyclopentadienyl) (n-propylcyclopentadienyl) zirconium dimethyl; [trityl]⁺[(2'-{tri-(isopropyl)siloxy}perfluorobiphen-4-yl)bis(5,6,7,8-tetrafluoronaphthyl) (pentafluoroanthracenyl)borate]⁻/ bis(4-(triethylsilyl)phenyl)methylene(cyclopentadienyl) (2,7-di-t-butyl-fluorenyl)hafnium dimethyl; [trityl]⁺[(2'-{tri-(isopropyl)siloxy}perfluorobiphen-4-yl)bis(perfluoropyrenyl) (perfluorofluorenyl)borate]⁻/ (tetramethyl-cyclopentadienyl) (n-propylcyclopentadienyl) zirconium dimethyl; [trityl]⁺[(3'-{(3-ethylnonyl) (t-butyl) (triethylsilylethyl)siloxy}perfluorobiphen-4-yl) (perfluorophenyl) (2,3,6-trifluorophenyl) (perfluorobiphenyl)aluminate]⁻/ dimethylsilyl (tetramethylcyclopentadienyl) (t-butylamino) titanium dimethyl; [trityl]⁺[(3-{(triethylsilylpropyl)hexylisopropylsiloxy}perfluorophenyl) (perfluorophenyl) (2,3,4-trifluorophenyl) (perfluoronaphthyl)aluminate]⁻/ (4-n-butylphenyl) (4-t-butylphenyl)methylene (2,7-di-t-butyl-fluorenyl) (cyclopentadienyl) hafnium dimethyl; [trityl]⁺[(3-{(triethylsilylpropyl)hexylisopropylsiloxy}perfluorophenyl) (perfluorophenyl) (2,3,4-trifluorophenyl) (perfluoronaphthyl)aluminate]⁻/ dimethylsilyl (indenyl) (fluorenyl) hafnium dihydride; [trityl]⁺[(3-{(methyldiethylsilyloctyl)isopropyl(t-butyl)siloxy}fluorophenyl) (perfluorobiphenyl) (perfluorophenyl) (4,5,7-trifluoronaphthyl)borate]⁻/ bis(trimethylsilyl) titanium dimethyl; [trityl]⁺[(3-{(methyldiethylsilyloctyl)isopropyl(t-butyl)siloxy}fluorophenyl) (perfluorobiphenyl) (perfluorophenyl) (4,5,7-trifluoronaphthyl)borate]⁻/ dimethylsily-bisindenyl hafnium dimethyl; [trityl]⁺[(3-{(methyldiethylsilyloctyl)isopropyl(t-butyl)siloxy}fluorophenyl) (perfluorobiphenyl)(perfluorophenyl)(4,5,7-trifluoronaphthyl)borate]⁻/ pentamethylcyclopentadienyl titanium trimethyl; [trityl]⁺[(3-{(triethylsilylethyl)isopropyl(methyldiethylsilyloctyl)siloxy}perfluorophenyl) (tetrafluorofluorenyl) (perfluoropyrenyl) (perfluorophenyl)aluminate]⁻/ (4-n-butylphenyl) (4-t-butylphenyl)methylene (2,7-di-t-butyl-fluorenyl) (cyclopentadienyl) hafnium dimethyl; [trityl]⁺[(3'-{benzyl(trimethylsilylethyl)isopropylsiloxy}perfluorobiphen-4-yl)bis(perfluorophenyl) (perfluorofluorenyl)aluminate]⁻/ (4-n-propylphenyl) (4-isopropylphenyl)methylene (fluorenyl) (cyclopentadienyl) hafnium dimethyl; [trity]⁺[(3-{benzylnonylisopropylsitoxy}perfluorophenyl) (perfluorophenyl) (pentalfluoropyrenyl) (2,3,6-trifluorophenyl)aluminate]⁻/ dimethylsilyl bis(2-propyl-indenyl) hafnium dimethyl; [trityl]⁺[(3-{benzylnonylisopropylsiloxy}perfluorophenyl) (perfluorophenyl) (pentalfluoropyrenyl) (2,3,6-trifluorophenyl)aluminate]⁻/ diphenylmethylene (2,7-di-n-butyl fluorenyl) (cyclopentadienyl) hafnium dimethyl; [trityl]⁺[(3-{benzylnonylisopropylsiloxy}perfluorophenyl) (perfluorophenyl) (pentalfluoropyrenyl) (2,3,6-trifluorophenyl)aluminate]⁻/ diphenylmethylene (2,7-di-t-butyl-5-methylfluorenyl) (cyclopentadienyl) hafnium dimethyl; [trityl]⁺[(3-{di-((methyldiethylsilyloctyl))cyclohexylsiloxy}-perfluorophenyl) (perfluorobiphenyl) (perfluorofluorenyl) (4,5,7-trifluoronaphthyl)borate]⁻/ (4-n-butylphenyl) (4-t-butylphenyl)methylene (2,7-di-t-butyl-fluorenyl) (indenyl) hafnium dimethyl; [trityl]⁺[(3-{di-((methyldiethylsilyloctyl))cyclohexylsiloxy}perfluorophenyl) (perfluorobiphenyl) (perfluorofluorenyl) (4,5,7-trifluoronaphthyl)borate]⁻/ di(4-n-butylphenyl)methylene (2,7-di-t-butyl fluorenyl) (indenyl) hafnium dimethyl; [trityl]⁺[(3'-{isopropyl(triethylsilylethyl)isopropylsiloxy}perfluorobiphen-4-yl) (perfluoroanthracenyl) (tetrafluorofluorenyl) (perfluorobiphenyl)aluminate]⁻/ diphenylmethylene (cyclopentadienyl) (2,7-di-t-butyl fluorenyl) hafnium dimethyl; [trityl]⁺[(3'-{isopropyl(triethylsilylethyl)isopropylsiloxy}perfluorobiphen-4-yl) (perfluoroanthracenyl) (tetrafluorofluorenyl) (perfluorobiphenyl)aluminate]⁻/ methylphenylmethylene bis(fluorenyl) hafnium dimethyl; [trityl]⁺[(3-{isopropyloctyl(triethylsilylethyl)siloxy}perfluorophenyl) (perfluoroanthracenyl) (perfluorofluorenyl) (perfluorophenyl)borate]⁻/diphenylmethylene (2,7-di-t-butyl fluorenyl) (fluorenyl) hafnium dimethyl; [trityl]⁺[(3'-{tri-(isopropyl)siloxy}fluorobiphen-4-yl) (pentafluoroanthracenyl) (perfluorofluorenyl) (perfluoronaphthyl)aluminate]⁻/ diphenylmethylene (cyclopentadienyl) (2,7-di-t-butyl fluorenyl) hafnium dimethyl; [trityl]⁺[(3-{tri-(isopropyl)siloxy}fluorophenyl) (perfluorofluorenyl) (tetrafluorofluorenyl) (perfluorophenyl)borate]⁻/ (4-n-propylphenyl) (4-methylphenyl)methylene(fluorenyl) (indenyl) hafnium dimethyl; [trityl]⁺[(3-{tri-(isopropyl)siloxy}fluorophenyl) (perfluorofluorenyl) (tetrafluorofluorenyl)(perfluorophenyl)borate]⁻/(pentamethylcyclopentadienyl) (cyclopentadienyl)zirconium dimethyl; [trityl]⁺[(3-{tri-(isopropyl)siloxy}fluorophenyl) (perfluorofluorenyl) (tetrafluorofluorenyl) (perfluorophenyl)borate]⁻/ diphenylmethylene (2,7-dit-butyl-5-methylfluorenyl) (cyclopentadienyl) hafnium dimethyl; [trityl]⁺[(3-{tri-(isopropyl)siloxy}fluorophenyl) (perfluorophenyl) (tetrafluorofluorenyl) (perfluoroanthracenyl)borate]⁻/ bis(4-(triethylsilyl)phenyl)methylene(cyclopentadienyl) (fluorenyl)hafnium dimethyl; [trityl]⁺[(3'-(tri-(isopropyl)siloxy}perfluorobiphen-4-yl) (perfluorophenyl) (perfluorobiphenyl) (pentafluoroanthracenyl)borate]⁻/ (tetramethyl-cyclopentadienyl) (n-propylcyclopentadienyl) zirconium dimethyl; [trityl]⁺[(3'-{tri-(isopropyl)siloxy}perfluorobiphen-4-yl) (tetrafluorofluorenyl) (4,5,6,7-tetrafluoronaphthyl) (perfluorobiphenyl)borate]⁻/ dimethylsilyl bisindenyl hafnium dimethyl; [trityl]⁺[(3'-{tri-(isopropyl)siloxy}perfluorobiphen-4-yl)bis(pentalfluoropyrenyl)(perfluorophenyl)borate]⁻/ (tetramethyl-cyclopentadienyl) (n-propylcyclopentadienyl) zirconium dimethyl; [trityl]⁺[(3'-{tri-(isopropyl)siloxy}perfluorobiphen-4-yl)bis(pentalfluoropyrenyl) (perfluorophenyl)borate]⁻/ dimethylsilyl bis(2-methyl-4-phenyl-indenyl) hafnium dimethyl; [trityl]⁺[(3'-{tri-(isopropyl)siloxy}perfluorobiphen-4-yl)bis(pentalfluoropyrenyl) (perfluorophenyl)borate]⁻/ dimethylsilyl bis(2-propyl-indenyl) hafnium dimethyl; [trityl]⁺[(3'-{tri-(isopropyl)siloxy}-perfluorobiphen-4-yl)bis(perfluorobiphenyl) (perfluorophenyl)borate]⁻/ bis(4-(triethylsilyl)phenyl)methylene(cyclopentadienyl) (2,7-di-t-butyl-fluorenyl)hafnium dimethyl; [trityl]⁺[(3'-{tri-(isopropyl)siloxy}perfluorobiphen-4-yl)bis(perfluorobiphenyl) (perfluorophenyl)borate]⁻/ dimethylsilyl(tetramethylcyclopentadienyl) (tert-butylamido) titanium dichloride; [trityl]⁺[(3-{tri-(isopropyl)siloxy}perfluorophenyl) (perfluorofluorenyl) (perfluorophenyl) (2,3,6-trifluorophenyl)borate]⁻/ methylene (2,7-di-t-butyl fluorenyl) (fluorenyl) hafnium dimethyl; [trity]⁺[(3-{tri-(isopropyl)siloxy}perfluorophenyl) (perfluoronaphthyl) (perfluorophenyl) (pentafluoroanthracenyl)borate]⁻/ dimethylsilyl bis(2-methyl-4-phenyl-indenyl) hafnium dimethyl; [trityl]⁺[(4'-{(3-ethylnonyl) (tri-(isopropyl)silyloctyl)isopropylsiloxy}-fluorobiphen-3-yl)bis(perfluorophenyl) (perfluoropyrenylborate]⁻/ (tetramethyl-cyclopentadienyl) (n-propylcyclopentadienyl) zirconium dimethyl; [trityl]⁺[(4'-{(3-ethylnonyl)(tri-(isopropyl)silyloctyl)isopropylsiloxy}fluorobiphen-3-yl)bis(perfluorophenyl) (perfluoropyrenylborate]⁻/ methylene (2,7-di-t-butyl fluorenyl) (fluorenyl) hafnium dimethyl; [trityl]⁺[(4-{(3-ethylnonyl)benzylisopropylsiloxy}perfluorophenyl) (2',3',5'-trifluorobiphenyl) (5,6,7,8-tetrafluoronaphthyl) (2,3,5-trifluorophenyl)aluminate]⁻/ dimethylsilyl(tetramethylcyclopentadienyl) (dodecylamido) hafnium dihydride; [trityl]⁺[(4-{(3-ethylnonyl)benzylisopropylsiloxy}perfluorophenyl) (2',3',5'-trifluorobiphenyl) (5,6,7,8-tetrafluoronaphthyl) (2,3,5-trifluorophenyl)aluminate]⁻/ diphenylmethylene (2,7-di-t-butyl-5-methylfluorenyl) (cyclopentadienyl) hafnium dimethyl; [trityl]⁺[(4-{( triethylsilylpropyl)isopropyl(triethylsilylmethyl)siloxy}perfluorophenyl)bis(perfluorophenyl) (perfluorobiphenylborate]⁻/ dimethylsilyl(tetramethylcyclopentadienyl) (dodecylamido) hafnium dimethyl; [trityl]⁺[(4'-{(t-butyl) (2,2-dimethyloctyl) (t-butyl)siloxy)perfluorobiphen-3-yl)bis(2,3,4-trifluorophenyl) (perfluoropyrenyl)borate]⁻/ bis(4-(triethylsily)phenyl)methylene(cyclopentadienyl) (2,7-di-t-butyl-fluorenyl)hafnium dimethyl; [trityl]⁺[(4-{(t-butyl)isopropyl(triethylsilylhexyl)siloxy}perfluorophenyl) (2,3,6-trifluorophenyl) (perfluorophenyl) (perfluorobiphenyl)borate]⁻/ diphenylmethylene(cylcopentadienyl) (fluorenyl) hafnium dimethyl; [trity]⁺[(4-{(triethylsilylethyl) (trimethylsilylethyl)benzylsiloxy}-perfluorophenyl)bis(perfluorofluorenyl) (perfluorophenyl)borate]⁻/ diphenylmethylene(cylcopentadienyl) (2,7-di-t-butyl-fluorenyl) hafnium dimethyl; [trityl]⁺[(4-{benzylnonyl(methyldiethylsilyloctyl)siloxy}perfluorophenyl) (2,3,6-trifluorophenyl) (2,3,4-trifluorophenyl) (2',3',5'-trifluorobiphenyl)borate]⁻/ (4-n-propylphenyl) (4-methylphenyl)methylene(fluorenyl) (indenyl) hafnium dimethyl; [trityl]⁺[(4'-{di-(isopropyl) (trimethylsilylethyl)siloxy}perfluorobiphen-4-yl) (perfluorofluorenyl) (perfluoronaphthyl) (perfluorophenyl)borate]⁻/ diphenylmethylene (indenyl) (2,7-di-t-butyl fluorenyl) hafnium dibenzyl; [trityl]⁺[(4'-{di-(isopropyl) (trimethylsilylethyl)siloxy}perfluorobiphen-4-yl) (perfluorofluorenyl) (perfluoronaphthyl) (perfluorophenyl)borate]⁻/ silacyclobutyl(tetramethylcyclopentadienyl) (n-propylcyclopentadienyl) zirconium dimethyl; [trityl]⁺[(4-{hexylisopropyl(tri-(isopropyl)silyloctyl)siloxy}perfluorophenyl) (pentafluoroanthracenyl) (perfluorofluorenyl) (perfluorobiphenyl)borate]⁻/ *bis*(trimethylsilyl) titanium dimethyl; [trityl]⁺[(4-{hexylisopropyl(tri-(isopropyl)silyloctyl)siloxy}perfluorophenyl) (pentafluoroanthracenyl) (perfluorofluorenyl) (perfluorobipheny)borate]⁻/ di(4-n-propylphenyl)methylene (2,7-di-t-butyl-5-methylfluorenyl) (fluorenyl) hafnium dimethyl; [trityl]⁺[(4-{isopropyl(methyldiethylsilyloctyl)nonylsiloxy}perfluorophenyl)bis(perfluorophenyl) (perfluorobiphenyl)borate]⁻/ (4-n-propylphenyl) (4-isopropylphenyl)silylenebis(fluorenyl) hafnium di-t-butyl; [trityl]⁺[(4-{isopropyl(triethylsilylethyl) (triethylsilylhexyl)siloxy}-perfluorophenyl) (2,3,5-trifluorophenyl) (perfluoroanthracenyl) (perfluorophenyl)borate]⁻/ (tetramethyl-cyclopentadienyl) (n-propylcyclopentadienyl) zirconium dimethyl; (trityl]⁺[(4'-{tri-(isopropyl)siloxy}perfluorobiphen-3-yl)bis(perfluorobiphenyl) (perfluorophenylborate]⁻/ (4-n-propylphenyl) (4-isopropylphenyl)methylene (fluorenyl) (cyclopentadienyl) hafnium dimethyl; [trityl]⁺[(4'-{tri-(isopropyl)siloxy}perfluorobiphen-3-yl)bis(perfluorophenyl) (perfluoroanthracenyl)aluminate]⁻/ methylene (2,7-di-t-butyl fluorenyl) (fluorenyl) hafnium dimethyl; [trityl]⁺[(4'-{tri-(isopropyl)siloxy}perfluorobiphen-4-yl) (pentafluoroanthracenyl) (4,5,6-trifluoronaphthyl) (perfluorobipheny)aluminate]⁻/dimethylsilyl (tetramethylcyclopentadienyl) (adamantyl-1-amino) titanium dimethyl; [trityl]⁺[(4-{tri-(isopropyl)siloxy}perfluorophenyl) (2',3',4'-trifluorobiphenyl) (4,5,6-trifluoronaphthyl) (perfluorophenyl)borate]⁻/ di(4-n-propylphenyl)methylene (2,7-di-t-butyl-5-methylfluorenyl) (fluorenyl) hafnium dimethyl; [trityl]⁺[(4-{tri-(isopropyl)siloxy}perfluorophenyl) (2,3,5-trifluorophenyl) (2',3',4'-trifluorobiphenyl) (2,3,6-trifluorophenyl)borate]⁻/ dibutylsilyl (fluorenyl) (cyclopentadienyl) hafnium dimethyl; [trityl]⁺[(4-{tri-(isopropyl)siloxy}perfluorophenyl) (2,3,5-trifluorophenyl) (perfluoropyrenyl) (perfluorophenyl)borate]⁻/ dimethylsilyl (tetramethylcyclopentadienyl) (adamantyl-1-amino) titanium dimethyl; [trityl]⁺[(4-{tri-(isopropyl)siloxy}perfluorophenyl) (pentalfluoropyrenyl) (perfluorobiphenyl) (perfluorophenyl)borate]⁻/ dimethylsilylbis(tetrahydroindenyl) zirconium dichloride; [trityl]⁺[(4-{tri-(isopropyl)siloxy}perfluorophenyl) (perfluorobiphenyl) (2',3',5'-trifluorobiphenyl) (pentafluoroanthracenyl)aluminate]⁻/ dimethylsilyl bis(2-methyl-indenyl) hafnium dimethyl; [trityl]⁺[(4-{tri-(isopropyl)siloxy}perfluorophenyl) (perfluorobiphenyl) (perfluorophenyl) (perfluorofluorenyl)borate]⁻/ diphenylmethyl (cylcopentadienyl) (2,7-dimethylfluorenyl) hafnium dimethyl; [trityl]⁺[(4-{tri-(isopropyl)siloxy}perfluorophenyl) (perfluorobiphenyl) (perfluorophenyl) (perfluorofluorenyl)borate]⁻/ methylphenylmethylene bis(fluorenyl) hafnium dimethyl; [trityl]⁺[(4-{tri-(isopropyl)siloxy}perfluorophenyl) (perfluoronaphthyl) (perfluorophenyl) (4,5,6,7-tetrafluoronaphthyl)borate]⁻/ (pentamethylcyclopentadienyl) (cyclopentadienyl)zirconium dimethyl; [trityl]⁺[(4-{tri-(isopropyl)siloxy}perfluorophenyl) (perfluorophenyl) (perfluorobiphenyl) (2,3,5-trifluorophenyl)borate]⁻/ dimethylsilyl (tetramethylcyclopentadienyl) (t-butylamino) titanium dimethyl; [trityl]⁺[(4-{tri-(isopropyl)siloxy}perfluorophenyl) (perfluoropyrenyl) (perfluorophenyl) (perfluorobiphenyl)borate]⁻/ dimethylsilyl(tetramethylcyclopentadienyl) (dodecylamido) hafnium dihydride; [trityl]⁺[(4-{tri-(isopropyl)siloxy}perfluorophenyl)bis(perfluoroanthracenyl) (pentafluoroanthracenylborate]⁻/ di(4-n-butylphenyl)methylene (2,7-di-t-butyl fluorenyl) (indenyl) hafnium dimethyl; [trityl]⁺[(4-{tri-(isopropyl)siloxy}-perfluorophenyl)bis(perfluorobiphenyl) (tetrafluorofluorenyl)borate]⁻/ (4-n-propylphenyl) (4-methylphenyl)methylene(fluorenyl) (indenyl) hafnium dimethyl; [trityl]⁺[(5-{ (3-ethylnonyl) (methyldiethylsilyloctyl)isopropylsiloxy}fluoroinden-1-yl) (perfluorophenyl) (perfluorobiphenyl) (5,6,7,8-tetrafluoronaphthyl)aluminate]⁻/ bis(4-(triethylsilyl)phenyl)methylene(cyclopentadienyl) (2,7-di-t-butyl-fluorenyl)hafnium dimethyl; [trityl]⁺[(5-{(2,2-dimethyloctyl) (triethylsilylethyl) (2,2-dimethyloctyl)siloxy}perfluoroinden-1-yl) (perfluorophenyl) (perfluoroanthracenyl) (4,5,6-trifluoronaphthyl)borate]⁻/ pentamethyl cyclopentadienyl titanium isopropoxide; [trityl]⁺[(5-{(methyldiethylsilyloctyl)hexyl (3-ethylnonyl)siloxy}perfluoronapth-1-yl) (perfluorophenyl) (2',3',4'-trifluorobiphenyl) (perfluoropyrenyl)borate]⁻/ diphenylmethylene (cyclopentadienyl) (2,7-di-t-butyl fluorenyl) hafnium dimethyl; [trityl]⁺[(5-{(t-butyl)isopropylcyclohexylsiloxy}perfluoronaphth-3-yl)bis(perfluorophenyl) (2,3,6-trifluorophenyl)borate]⁻/ bis(1,3-dibutyl-methyl-cyclopentadienyl) zirconium dimethyl; [trityl]⁺[(5-{(t-butyl)octylisopropylsiloxy}perfluoronapth-1-yl)bis(2,3,5-trifluorophenyl) (pentafluoroanthracenylborate]⁻/ (4-n-butylphenyl) (4-t-butylphenyl)methylene (fluorenyl) (cyclopentadienyl) hafnium dimethyl; [trityl]⁺[(5-{(t-butyl)octylisopropylsiloxy}-perfluoronapth-1-yl)bis(2,3,5-trifluorophenyl) (pentafluoroanthracenylborate]⁻/ dimethylsilyl (indenyl) (fluorenyl) hafnium dihydride; [trityl]⁺[(5-{(tri-(isopropyl)silyloctyl) (3-ethylnonyl) (2,2-dimethyloctyl)siloxy}perfluoroinden-1-yl) (perfluorophenyl) (perfluoropyrenyl) (perfluorofluorenyl)borate]⁻/ bis(4-triethylsilylphenyl)methylene(cyclopentadienyl) (fluorenyl)hafnium dimethyl; [trityl]⁺[(5-{(tri-(isopropyl)silyloctyl) (3-ethylnonyl) (2,2-dimethyloctyl)siloxy}perfluoronapth-1-yl) (perfluorophenyl) (4,5,7-trifluoronaphthyl) (tetrafluorofluorenyl)aluminate]⁻/ (4-n-propylphenyl) (4-methylphenyl)methylene(fluorenyl) (indenyl) hafnium dimethyl; [trityl]⁺[(5-{(tri-(isopropyl)silyloctyl) (3-ethylnonyl) (2,2-dimethyloctyl)siloxy}perfluoronapth-1-yl) (perfluorophenyl) (4,5,7-trifluoronaphthyl) (tetrafluorofluorenyl)aluminate]⁻/ dimethylsily (bisindenyl) zirconium dichloride; [trityl]⁺[(5-{(tri-(isopropyl)silyloctyl) (3-ethylnonyl) (2,2-dimethyloctyl)siloxy}perfluoronapth-1-yl) (perfluorophenyl) (4,5,7-trifluoronaphthyl) (tetrafluorofluorenyl)aluminate]⁻/ diphenylmethylene(cylcopentadienyl) (fluorenyl) hafnium dimethyl; [trityl]⁺[(5-{(triethylsilylethyl) (tri-(isopropyl)silyloctyl)isopropylsiloxy}fluoroinden-1-yl) (perfluorofluorenyl) (perfluorophenyl) (perfluoroanthracenyl)borate]⁻/ (4-n-propylphenyl) (4-methylphenyl)methylene(fluorenyl) (indenyl) hafnium dimethyl; [trityl]⁺[(5-{(triethylsilylethyl) (triethylsilylhexyl)isopropylsiloxy}perfluoroinden-1-yl)tris(perfluoroanthracenyl)borate]⁻/ diphenylmethylene (cyclopentadienyl) (2,7-dimethyl fluorenyl) hafnium dimethyl; [trityl]⁺[(5-{(triethylsilylethyl) (triethylsilylhexyl)isopropylsiloxy}perfluoroinden-1-yl)tris(perfluoroanthracenyl)borate]⁻/ isopropyl (cyclopentadienyl) (fluorenyl) hafnium dimethyl; [trityl]⁺[(5-{(triethylsilylethyl)hexylisopropylsiloxy}perfluoronapth-3-yl) (pentafluoroanthracenyl) (2,3,5-trifluorophenyl) (perfluoroanthracenyl)borate]⁻/ pentamethylcyclopentadienyl titanium trimethyl; [trityl]⁺[(5-{(triethylsilylmethyl)isopropyl(2,2-dimethyloctyl)siloxy}perfluoronapth-2-yl)bis(perfluorophenyl) (5,6,7,8-tetrafluoronaphthyl)aluminate]⁻/ bis(trimethylsilyl) titanium dimethyl; [trityl]⁺[(5-{(trimethylsilylethyl) (2,2-dimethyloctyl)isopropylsiloxy}perfluoronapth-3-yl) (4,5,6-trifluoronaphthyl) (perfluoropyrenyl) (perfluorobiphenyl)aluminate]⁻/ diphenylmethylene (indenyl) (2,7-di-t-butyl fluorenyl) hafnium dibenzyl; [trityl]⁺[(5-{(tri-n-propylsilylhexyl) (methyldiethylsilyloctyl)isopropylsiloxy}perfluoronapth-3-yl) (2',3',4'-trifluorobiphenyl) (perfluorophenyl) (perfluorobiphenyl)borate]⁻/ dimethylsilylbis(2-methylbenzindenyl) zirconium dimethyl; [trityl]⁺[(5-{(tri-n-propylsilylhexyl)isopropyl( triethylsilylpropyl)siloxy}perfluoronapth-1-yl)bis(pentafluoroanthracenyl) (perfluoronaphthyl)borate]⁻/ dimethylsily (bisindenyl) zirconium dichloride; [trityl]⁺[(5-{(tri-n-propylsilylhexyl)isopropyl( triethylsilylpropyl)siloxy}-perfluoronapth-1-yl)bis(pentafluoroanthracenyl) (perfluoronaphthyl)borate]⁻/ dimethylsilyl(tetramethylcyclopentadienyl) (tert-butylamido) titanium dichloride; [trityl]⁺[(5-{benzylisopropylhexylsiloxy}perfluoroinden-1-yl) (pentafluoroanthracenyl) (perfluorofluorenyl) (4,5,7-trifluoronaphthyl)borate]⁻/ diphenylmethylene (indenyl) (2,7-di-t-butyl fluorenyl) hafnium dibenzyl; [trityl]⁺[(5-{benzylisopropylhexylsiloxy}perfluoroinden-1-yl) (pentafluoroanthracenyl) (perfluorofluorenyl) (4,5,7-trifluoronaphthyl)borate]⁻/ diphenylmethylene(cylcopentadienyl) (fluorenyl) hafnium dimethyl; [trityl]⁺[(5-{benzylnonyl(methyldiethylsilyloctyl)siloxy}-fluoronapth-1-yl)tris(perfluorophenyl)borate]⁻/ diphenylmethylene (cyclopentadienyl) (2,7-di-t-butyl fluorenyl) hafnium dimethyl; [trityl]⁺[(5-{benzylnonyl(methyldiethylsilyloctyl)siloxy}-fluoronapth-1-yl)tris(perfluorophenyl)borate]⁻/ methylene bis(fluorenyl) hafnium dimethyl; [trityl]⁺[(5-{di-((methyldiethylsilyloctyl))cyclohexylsiloxy}perfluoroinden-1-yl) (perfluorophenyl) (5,6,7,8-tetrafluoronaphthyl) (2,3,4-trifluorophenyl)borate]⁻/ diphenylmethylene (2,7-di-t-butyl-5-methylfluorenyl) (cyclopentadienyl) hafnium dimethyl; [trityl]⁺[(5-{hexyl(methyldiethylsilyloctyl)isopropylsiloxy}perfluoronapth-1-yl) (perfluorobiphenyl) (tetrafluorofluorenyl) (perfluoroanthracenyl)aluminate]⁻/ dimethylsilyl (indenyl) (fluorenyl) hafnium dihydride; [trityl]⁺[(5-{hexylisopropylnonylsiloxy}fluoroinden-2-yl) (perfluorobiphenyl) (4,5,6,7-tetrafluoronaphthyl) (perfluorophenyl)aluminate]⁻/ (4-n-butylphenyl) (4-t-butylphenyl)methylene(2,7-dimethyl-fluorenyl) (indenyl) hafnium dibenzyl; [trityl]⁺[(5-{isopropy)(t-buty)cyclohexylsiloxy}perfluoroinden-1-yl) (perfluoroanthracenyl) (perfluorophenyl) (pentafluoroanthracenyl)borate]⁻/ dinapthylmethylene (cyclopentadienyl) (fluorenyl) hafnium dimethyl; [trityl]⁺[(5-{isopropyl(t-butyl)nonylsiloxy}perfluoronapth-2-yl) (pentalfluoropyrenyl) (perfluorophenyl) (4,5,7-trifluoronaphthyl)borate]⁻/ diphenylmethylene(cylcopentadienyl) (fluorenyl) hafnium dimethyl; [trityl]⁺[(5-{isopropyl(tri-(isopropyl)silyloctyl) (3-ethylnonyl)siloxy}perfluoroinden-2-yl) (perfluoronaphthyl) (perfluorobiphenyl) (4,5,7-trifluoronaphthyl)aluminate]⁻/ methylene (2,7-di-t-butyl fluorenyl) (fluorenyl) hafnium dimethyl; [trityl]⁺[(5-{isopropyl(triethylsilylhexyl) (2,2-dimethyloctyl)siloxy}-perfluoronapth-1-yl) (perfluorobiphenyl) (perfluorophenyl) (2,3,6-trifluorophenyl)borate]⁻/ di(4-n-butylphenyl)methylene (2,7-di-t-butyl fluorenyl) (indenyl) hafnium dimethyl; [trityl]⁺[(5-{isopropylbenzylnonylsiloxy}perfluoronapth-1-yl) (perfluorobiphenyl) (perfluoroanthracenyl) (4,5,6,7-tetrafluoronaphthyl)borate]⁻/ diphenylmethyl (cylcopentadienyl) (2,7-di-t-butyl-fluorenyl) hafnium dimethyl; [trityl]⁺[(5-{isopropylcyclohexyl (3-ethylnonyl)siloxy}-perfluoroinden-1-yl) (perfluorophenyl) (perfluoroanthracenyl) (perfluoropyrenyl)borate]⁻/ dimethylsilyl(tetramethylcyclopentadienyl) (adamantylamido) titanium dichloride; [trityl]⁺[(5-{nonylisopropyl(tri-n-propylsilylhexyl)siloxy}perfluoroinden-2-yl) (2,3,5-trifluorophenyl) (perfluorophenyl) (2',3',5'-trifluorobiphenyl)borate]⁻/ dimethylsilyl bis(methylindenyl) hafnium dimethyl; [trityl]⁺[(5-{tri-(isopropyl)siloxy}perfluoroinden-1-yl) (pentafluoroanthracenyl) (perfluorobiphenyl) (perfluorophenyl)borate]⁻/ (4-n-butylphenyl) (4-t-butylphenyl)methylene (2,7-di-t-butyl-fluorenyl) (indenyl) hafnium dimethyl; [trityl]⁺[(5-{tri-(isopropyl)siloxy}-perfluoroinden-1-yl) (perfluorophenyl) (perfluoroanthracenyl) (2',3',4'-trifluorobiphenyl)aluminate]⁻/ isopropyl (cyclopentadienyl) (fluorenyl) hafnium dimethyl; [trityl]⁺[(5-{tri-(isopropyl)siloxy}perfluoroinden-2-yl) (2',3',4'-trifluorobiphenyl) (perfluorofluorenyl) (perfluorobiphenyl)borate]⁻/ dimethylsily-bisindenyl hafnium dimethyl; [trityl]⁺[(5-{tri-(isopropyl)siloxy}perfluoroinden-2-yl) (2,3,4-trifluorophenyl) (perfluoroanthracenyl) (pentalfluoropyrenyl)borate]⁻/ di(4-n-propylphenyl)methylene (2,7-di-t butyl-5-methylfluorenyl) (fluorenyl) hafnium dimethyl; [trityl]⁺[(5-{tri-(isopropyl)siloxy}-perfluoroinden-2-yl) (perfluorophenyl) (2',3',5'-trifluorobiphenyl) (2,3,4-trifluorophenyl)borate]⁻/ dimethylsilyl (bisindenyl) zirconium dichloride; [trityl]⁺[(5-{tri-(isopropyl)siloxy}perfluoroinden-2-yl)bis(perfluorobiphenyl) (perfluorofluorenyl)borate]⁻/ dimethylsilyl bis(phenylmethylindenyl) hafnium dimethyl; [trityl]⁺[(5-{tri-(isopropyl)siloxy}perfluoroinden-2-yl)bis(perfluorophenyl) (perfluorobiphenyl)borate]⁻/ bis(1,3-dibutyl-methyl-cyclopentadienyl) zirconium dimethyl; [trityl]⁺[(5-{tri-(isopropyl)siloxy}perfluoroinden-2-yl)bis(perfluoropyrenyl) (perfluorobiphenylborate]⁻/ (4-n-butylphenyl) (4-t-butylphenyl)methylene (2,7-di-t-butyl-fluorenyl) (cyclopentadienyl) hafnium dimethyl; [trityl]⁺[(5-{tri-(isopropyl)siloxy}perfluoroinden-2-yl)bis(perfluoropyrenyl) (perfluorobiphenylborate]⁻/ pentamethyl cyclopentadienyl tribenzyl titanium; [trityl]⁺[(5-{tri-(isopropyl)siloxy}perfluoronaphth-3-yl) (4,5,6-trifluoronaphthyl) (5,6,7,8-tetrafluoronaphthyl) (perfluoroanthracenyl)borate]⁻/ (4-n-butylphenyl) (4-t-butylphenyl)methylene (fluorenyl) (cyclopentadienyl) hafnium dimethyl; [trityl]⁺[(5-{tri-(isopropyl)siloxy}perfluoronapth-1-yl) (perfluorophenyl) (perfluorobiphenyl) (2,3,6-trifluorophenyl)aluminate]⁻/ (4-n-propylphenyl) (4-isopropylphenyl)methylene (fluorenyl) (cyclopentadienyl) hafnium dimethyl; [trityl]⁺[(5-{tri-(isopropyl)siloxy}perfluoronapth-1-yl) (perfluorophenyl) (perfluorobiphenyl) (2,3,6-trifluorophenyl)aluminate]⁻/ dimethylsilyl bis(naphthylmethylindenyl) hafnium dimethyl; [trityl]⁺[(5-{tri-(isopropyl)siloxy}perfluoronapth-1-yl)bis(perfluorophenyl) (pentafluoroanthracenyl)borate]⁻/ dipheny[methylene(cylcopentadienyl) (2,7-methyl-fluorenyl) hafnium dimethyl; (trityl]⁺[(5-{tri-(isopropyl)siloxy}perfluoronapth-2-yl) (2',3',5'-trifluorobiphenyl) (5,6,7,8-tetrafluoronaphthyl) (2,3,4-trifluorophenyl)aluminate]⁻/ (4-n-butylphenyl) (4-t-butylphenyl)methylene (2,7-di-t-butyl-fluorenyl) (indenyl) hafnium dimethyl; [trityl]⁺[(5-{tri-(isopropyl)siloxy}perfluoronapth-2-yl) (perfluorofluorenyl) (2',3',5'-trifluorobiphenyl) (perfluoropyrenyl)borate]⁻/ methylene (2,7-di-t-butyl fluorenyl) (fluorenyl) hafnium dimethyl; [trityl]⁺[(5-{tri-(isopropyl)siloxy}perfluoronapth-2-yl) (perfluorophenyl) (perfluorobiphenyl) (2,3,4-trifluorophenyl)aluminate]⁻/ (4-n-butylphenyl) (4-t- butylphenyl)methylene(fluorenyl) (indenyl) hafnium dimethyl; [trityl]⁺[(5-{tri-(isopropyl)siloxy}perfluoronapth-2-yl)bis(perfluorophenyl) (perfluorofluorenylborate]⁻/ diphenylmethylene (2,7-di-t-butyl fluorenyl) (fluorenyl) hafnium dimethyl; [trityl]⁺[(5-{tri-(isopropyl)siloxy}perfluoronapth-3-yl) (pentafluoroanthracenyl) (perfluoropyrenyl) (perfluorobiphenyl)borate]⁻/ dimethylsily-bisindenyl hafnium dimethyl; [trityl]⁺[(5-{tri-(isopropyl)siloxy}perfluoronapth-3-yl) (perfluoronaphthyl) (4,5,6-trifluoronaphthyl) (2',3',5'-trifluorobiphenyl)aluminate]⁻/ (4-n-propylphenyl) (4-methylphenyl)methylene(fluorenyl) (indenyl) hafnium dimethyl; [trityl]⁺[(5-{tri-(isopropyl)siloxy}perfluoronapth-3-yl) (perfluoronaphthyl) (perfluoroanthracenyl) (perfluorophenyl)aluminate]⁻/ bis(4-(triethylsilyl)phenyl)methylene(cyclopentadienyl) (fluorenyl)hafnium dimethyl; [trityl]⁺[(5-{tri-(isopropyl)siloxy}perfluoronapth-3-yl) (perfluoronaphthyl) (perfluoroanthracenyl) (perfluorophenyl)aluminate]⁻/ diphenylmethyl (cylcopentadienyl) (2,7-dimethylfluorenyl) hafnium dimethyl; [trityl]⁺[(6-{ (3-ethylnonyl)benzylisopropylsiloxy}perfluoroanthracen-1-yl) (2',3',4'-trifluorobiphenyl) (perfluorophenyl) (2,3,5-trifluorophenyl)aluminate]⁻/ diphenylmethylene(cylcopentadienyl) (2,7-di-t-butyl-fluorenyl) hafnium dimethyl; [trityl]⁺[(6-{ (3-ethylnonyl)isopropyl(tri-n-propylsilylhexyl)siloxy}perfluoroanthracen-2-yl) (4,5,7-trifluoronaphthyl) (perfluorobiphenyl) (perfluorofluorenyl)aluminate]⁻/ diphenylmethylene (2,7-di-t-butyl-5-methylfluorenyl) (cyclopentadienyl) hafnium dimethyl; [trityl]⁺[(6-{( triethylsilylpropyl)benzylisopropylsiloxy}perfluoroanthracen-1-yl)bis(perfluorophenyl) (perfluorobiphenylborate]⁻/ diphenylmethylene (cyclopentadienyl) (2,7-di-t-butyl fluorenyl) hafnium dimethyl; [trityl]⁺[(6-{(2,2-dimethyloctyl)isopropyl(triethylsilylethyl)siloxy}-perfluoroanthracen-1-yl)bis(perfluoroanthracenyl) (4,5,7-trifluoronaphthylborate]⁻/ diphenylmethyl (cylcopentadienyl) (2,7-dimethylfluorenyl) hafnium dimethyl; [trityl]⁺[(6-{(methyldiethylsilyloctyl)(triethylsilylpropyl)isopropylsiloxy}fluoroanthracen-1-yl)bis(perfluoroanthracenyl) (perfluorophenylborate]⁻/ bis(4-triethylsilylphenyl)methylene(cyclopentadienyl) (fluorenyl)hafnium dimethyl; [trityl]⁺[(6-{(tri-(isopropyl)silyloctyl)isopropyl(methyldiethylsilyloctyl)siloxy}perfluoroanthracen-1-yl) (perfluorophenyl) (tetrafluorofluorenyl) (perfluorobiphenyl)aluminate]⁻/ methylphenylmethylene bis(fluorenyl) hafnium dimethyl; [trityl]⁺[(6-{(trimethylsilylethyl)isopropyl( triethylsilylpropyl)siloxy}perfluorofluoren-1-yl) (2,3,6-trifluorophenyl) (perfluorofluorenyl) (perfluorophenyl)borate]⁻/ di(4-n-propylphenyl)methylene (2,7-di-t-butyl-5-methylfluorenyl) (fluorenyl) hafnium dimethyl; [trityl]⁺[(6-{(trimethylsilylethyl)isopropyl( triethylsilylpropyl)siloxy}perfluorofluoren-1-yl) (2,3,6-trifluorophenyl) (perfluorofluorenyl) (perfluorophenyl)borate]⁻/ dimethylsilyl bis(naphthylmethylindenyl) hafnium dimethyl; [trityl]⁺[(6-{(trimethylsilylethyl)isopropyl( triethylsilylpropyl)siloxy}perfluorofluoren-1-yl) (2,3,6-trifluorophenyl) (perfluorofluorenyl) (perfluorophenyl)borate]⁻/ silacyclobutyl(tetramethylcyclopentadienyl) (n-propylcyclopentadienyl) zirconium dimethyl ; [trityl]⁺[(6-{(trimethylsilylethyl)isopropyl(trimethylsilylethyl)siloxy}fluoronapth-2-yl) (perfluoroanthracenyl) (perfluorophenyl) (5,6,7,8-tetrafluoronaphthyl)aluminate]⁻/ (4-n-propylphenyl) (4-isopropylphenyl)silylenebis(fluorenyl) hafnium di-t-butyl; [trityl]⁺[(6-{(trimethylsilylethyl)isopropyl(trimethylsilylethyl)siloxy}fluoronapth-2-yl) (perfluoroanthracenyl) (perfluorophenyl) (5,6,7,8-tetrafluoronaphthyl)aluminate]⁻/ isopropyl (cyclopentadienyl) (fluorenyl) hafnium dimethyl; [trityl]⁺[(6-{(tri-n-propylsilylhexyl)isopropyl(tri-(isopropyl)silyloctyl)siloxy}perfluoroanthracen-1-yl) (2,3,4-trifluorophenyl) (perfluorobiphenyl) (perfluoronaphthyl)borate]⁻/ dimethylsilyl (tetramethylcyclopentadienyl) (adamantyl-1-amino) titanium dimethyl; [trityl]⁺[(6-{benzylisopropyl(triethylsilylmethyl)siloxy}perfluoronapth-1-yl) (perfluorophenyl) (tetrafluorofluorenyl) (2,3,5-trifluorophenyl)borate]⁻/ dimethylsilyl(tetramethylcyclopentadienyl) (adamantylamido) titanium dichloride; [trityl]⁺[(6-{cyclohexylisopropyl(tri-(isopropyl)silyloctyl)siloxy}perfluoroanthracen-2-yl)bis(perfluorophenyl) (2',3',4'-trifluorobiphenyl)aluminate]⁻/ (4-n-propylphenyl) (4-methylphenyl)methylene(fluorenyl) (indenyl) hafnium dimethyl; [trityl]⁺[(6-{cyclohexylisopropyl(tri-(isopropyl)silyloctyl)siloxy}-perfluoroanthracen-2-yl)bis(perfluorophenyl) (2',3',4'-trifluorobiphenyl)aluminate] ¹ dinapthylmethylene (cyclopentadienyl) (fluorenyl) hafnium dimethyl; [trityl]⁺[(6-{di-((2,2-dimethyloctyl))isopropylsiloxy}perfluorofluoren-2-yl) (tetrafluorofluorenyl) (2,3,6-trifluorophenyl) (perfluoronaphthyl)borate]⁻/ dimethylsily-bisindenyl hafnium dimethyl; [trityl]⁺[(6-{di-((methyldiethylsilyloctyl)) (triethylsilylmethyl)siloxy}perfluoroanthracen-1-yl) (pentalfluoropyrenyl) (perfluorofluorenyl) (perfluoroanthracenyl)borate]⁻/ (4-n-butylphenyl) (4-t-butylphenyl)methylene (2,7-di-t-butyl-fluorenyl) (cyclopentadienyl) hafnium dimethyl; [trityl]⁺[(6-{di-((methyldiethylsilyloctyl)) (triethylsilylmethyl)siloxy}perfluoroanthracen-1-yl) (pentalfluoropyrenyl) (perfluorofluorenyl) (perfluoroanthracenyl)borate]⁻/ di(4-n-butylphenyl)methylene (2,7-dimethyl fluorenyl) (cyclopentadienyl) hafnium dimethyl; [trityl]⁺[(6-{di-((tri-(isopropyl)silyloctyl))isopropylsiloxy}perfluoronapth-1-yl) (perfluorobiphenyl) (2',3',4'-trifluorobiphenyl) (perfluorophenyl)borate]⁻/ di(4-n-butylphenyl) methylene (fluorenyl) (indenyl) hafnium dimethyl; [trityl]⁺[(6-{di-(hexyl)isopropylsiloxy}perfluorofluoren-1-yl) (2,3,6-trifluorophenyl) (2',3',4'-trifluorobiphenyl) (pentafluoroanthracenyl)borate]-/ (4-n-butylphenyl) (4-t-butylphenyl)methylene (2,7-di-t-butyl-fluorenyl) (cyclopentadienyl) hafnium dimethyl; [trityl]⁺[(6-{di-(hexyl)isopropylsiloxy}perfluorofluoren-1-yl) (2,3,6-trifluorophenyl) (2',3',4'-trifluorobiphenyl) (pentafluoroanthracenyl)borate]⁻/ di(4-n-butylphenyl) methylene (fluorenyl) (indenyl) hafnium dimethyl; [trityl]⁺[(6-{di-(hexyl)isopropylsiloxy}perfluorofluoren-1-yl) (2,3,6-trifluorophenyl) (2',3',4'-trifluorobiphenyl) (pentafluoroanthracenyl)borate]⁻/ dimethylsilyl bis(phenylmethylindenyl) hafnium dimethyl; [trityl]⁺[(6-{hexyl(methyldiethylsilyloctyl)isopropylsiloxy}perfluoronaphth-2-yl)bis(perfluorobiphenyl) (perfluorophenylaluminate]⁻/ silacyclobutyl(tetramethylcyclopentadienyl) (n-propylcyclopentadienyl) zirconium dimethyl; [trityl]⁺[(6-{hexylisopropyl( triethylsilylpropyl)siloxy}perfluoroanthracen-1-yl) (perfluoroanthracenyl) (2,3,4-trifluorophenyl) (perfluoropyrenyl)borate]⁻/ diphenylmethyl (cylcopentadienyl) (fluorenyl) hafnium dimethyl; [trityl]⁺[(6-{hexylisopropyl(tri-(isopropyl)silyloctyl)siloxy}perfluoroanthracen-2-yl) (perfluorophenyl) (perfluorobiphenyl) (pentalfluoropyrenyl)borate]⁻/ (pentamethylcyclopentadienyl) (cyclopentadienyl)zirconium dimethyl; [trityl]⁺[(6-{hexylisopropyl(tri-(isopropyl)silyloctyl)siloxy}perfluoroanthracen-2-yl) (perfluorophenyl) (perfluorobiphenyl) (pentalfluoropyrenyl)borate]⁻/ pentamethylcyclopentadienyl titanium trimethyl; [trityl]⁺[(6-{isopropyl(t-butyl)isopropylsiloxy}perfluoroanthracen-1-yl) (perfluorophenyl) (perfluorobiphenyl) (tetrafluorofluorenyl)aluminatel]⁻/ (4-n-butylphenyl) (4-t-butylphenyl)methylene (fluorenyl) (cyclopentadienyl) hafnium dimethyl; [trityl]⁺[(6-{isopropyl(t-butyl)isopropylsiloxy}perfluoroanthracen-1-yl) (perfluorophenyl) (perfluorobiphenyl) (tetrafluorofluorenyl)aluminate]⁻/ dimethylsilyl bisindenyl hafnium dimethyl; [trityl]⁺[(6-{isopropyl(trimethylsilylethyl) (2,2-dimethyloctyl)siloxy}-perfluoroanthracen-2-yl)bis(perfluoroanthracenyl) (pentafluoroanthracenyl)borate]⁻/ di(4-n-butylphenyl)methylene (2,7-di-t-butyl fluorenyl) (cyclopentadienyl) hafnium dimethyl; [trityl]⁺[(6-{isopropyl(tri-n-propylsilylhexyl) ( triethylsilylpropyl)siloxy}perfluorofluoren-1-yl) (2,3,6-trifluorophenyl) (perfluorobiphenyl) (2,3,4-trifluorophenyl)borate]⁻/ diphenylmethyl (cylcopentadienyl) (fluorenyl) hafnium dimethyl; [trityl]⁺[(6-{isopropyl(tri-n-propylsilylhexyl) ( triethylsilylpropyl)siloxy}perfluoronapth-1-yl) (perfluoropyrenyl) (pentalfluoropyrenyl) (perfluorobiphenyl)borate]⁻/ bis(4-(triethylsilyl)phenyl)methylene(cyclopentadienyl) (2,7-di-t-butyl-fluorenyl)hafnium dimethyl; [trityl]⁺[(6-{tri-(isopropyl)siloxy}perfluoroanthracen-1-yl) (4,5,6,7-tetrafluoronaphthyl) (perfluorofluorenyl) (2,3,6-trifluorophenyl)aluminate]⁻/ (4-n-propylphenyl) (4-methylphenyl)methylene(fluorenyl) (indenyl) hafnium dimethyl; [trityl]⁺[(6-{tri-(isopropyl)siloxy}perfluoroanthracen-1-yl) (pentafluoroanthracenyl) (2,3,5-trifluorophenyl) (perfluoroanthracenyl)aluminate]⁻/ dimethylsilyl bis(phenylmethylindenyl) hafnium dimethyl; [trityl]⁺[(6-{tri-(isopropyl)siloxy}perfluoroanthracen-1-yl) (pentafluoroanthracenyl) (perfluoropyrenyl) (perfluorophenyl)borate]⁻/ di(4-n-butylphenyl)methylene (2,7-dimethyl fluorenyl) (cyclopentadienyl) hafnium dimethyl; [trityl]⁺[(6-{tri-(isopropyl)siloxy}-perfluoroanthracen-1-yl) (perfluorobiphenyl) (perfluoronaphthyl) (perfluorophenyl)borate]⁻/ isopropyl (cyclopentadienyl) (fluorenyl) hafnium dimethyl; [trityl]⁺[(6-{tri-(isopropyl)siloxy}-perfluoroanthracen-2-yl) (2',3',4'-trifluorobiphenyl) (perfluoroanthracenyl) (4,5,7-trifluoronaphthyl)aluminate]⁻/ dibutylsilyl (fluorenyl) (cyclopentadienyl) hafnium dimethyl; [trityl]⁺[(6-{tri-(isopropyl)siloxy}perfluoroanthracen-2-yl) (2',3',4'-trifluorobiphenyl) (perfluoroanthracenyl) (4,5,7-trifluoronaphthyl)aluminate]⁻/ dimethylsilylbis(2-methylbenzindenyl) zirconium dimethyl; [trityl]⁺[(6-{tri-(isopropyl)siloxy}perfluoroanthracen-2-yl) (perfluorobiphenyl) (perfluorophenyl) (4,5,6,7-tetrafluoronaphthyl)aluminate]⁻/ bis(4-(triethylsilyl)phenyl)methylene(cyclopentadienyl) (fluorenyl)hafnium dimethyl; [trityl]⁺[(6-{tri-(isopropyl)siloxy}perfluorofluoren-1-yl) (2,3,5-trifluorophenyl) (perfluorobiphenyl) (perfluorophenyl)borate]⁻/ dimethylsilyl bis(phenylmethylindenyl) hafnium dimethyl; [trityl]⁺[(6-{tri-(isopropyl)siloxy}perfluorofluoren-1-yl) (4,5,6,7-tetrafluoronaphthyl) (perfluorophenyl) (2,3,5-trifluorophenyl)borate]⁻/ diphenylmethylene (2,7-di-n-butyl fluorenyl) (cyclopentadienyl) hafnium dimethyl; [trityl]⁺[(6-{tri-(isopropyl)siloxy}perfluorofluoren-1-yl)tris(perfluorophenyl)borate]⁻/ dimethylsilyl bis(phenylmethylindenyl) hafnium dimethyl; [trityl]⁺[(6-{tri-(isopropyl)siloxy}perfluorofluoren-1-yl)tris(perfluorophenyl)borate]⁻/ dimethylsilyl(tetramethylcyclopentadienyl) (dodecylamido) hafnium dimethyl; [trityl]⁺[(6-{tri-(isopropyl)siloxy}perfluorofluoren-2-yl) (perfluoroanthracenyl) (perfluoropyrenyl) (perfluorophenyl)borate]⁻/ (4-n-butylphenyl) (4-t-butylphenyl)methylene(2,7-dimethylfluorenyl) (indenyl) hafnium dibenzyl; [trityl]⁺[(6-{tri-(isopropyl)siloxy}perfluorofluoren-2-yl) (perfluoroanthracenyl) (perfluoropyrenyl) (perfluorophenyl)borate]⁻/ dimethylsilyl bis(naphthylmethylindenyl) hafnium dimethyl; [trityl]⁺[(6-{tri-(isopropyl)siloxy}perfluorofluoren-2-yl) (perfluorobiphenyl) (perfluorofluorenyl) (4,5,6,7-tetrafluoronaphthyl)borate]⁻/ (4-alkylphenyl) (4-t-butylphenyl)methylene(cylcopentadienyl) (fluorenyl) hafnium dimethyl; [trityl]⁺[(6-{tri-(isopropyl)siloxy}perfluorofluoren-2-yl) (perfluorobiphenyl) (perfluorofluorenyl) (4,5,6,7-tetrafluoronaphthyl)borate]⁻/ di(4-n-butylphenyl)methylene (2,7-di-t-butyl fluorenyl) (cyclopentadienyl) hafnium dimethyl; [trityl]⁺[(6-{tri-(isopropyl)siloxy}perfluorofluoren-2-yl) (perfluorobiphenyl) (perfluorophenyl) (perfluorofluorenyl)aluminate]⁻/ (4-n-butylphenyl) (4-t-butylphenyl)methylene (2,7-di-t-butyl-fluorenyl) (indenyl) hafnium dimethyl; [trityl]⁺[(6-(tri-(isopropyl)siloxy}perfluorofluoren-2-yl) (perfluoronaphthyl) (2,3,6-trifluorophenyl) (perfluorophenyl)borate]⁻/ methylphenylmethylene bis(fluorenyl) hafnium dimethyl; [trityl]⁺[(6-{tri-(isopropyl)siloxy}perfluorofluoren-2-yl) (perfluorophenyl) (perfluorobiphenyl) (2',3',5'-trifluorobiphenyl)aluminate]⁻/ dimethylsilyl bis(2-methyl-indenyl) hafnium dimethyl; [trityl]⁺[(6-{tri-(isopropyl)siloxy}perfluorofluoren-2-yl) (perfluorophenyl) (perfluorobiphenyl) (2',3',5'-trifluorobiphenyl)aluminate]⁻/ isopropyl (cyclopentadienyl) (fluorenyl) hafnium dimethyl; [trityl]⁺[(6-{tri-(isopropyl)siloxy}perfluorofluoren-2-yl)bis(perfluorophenyl) (perfluoropyrenylaluminate]⁻/ methylphenylmethylene bis(fluorenyl) hafnium dimethyl; [trityl]⁺[(6-{tri-(isopropyl)siloxy}perfluoroinden-2-yl) (4,5,6,7-tetrafluoronaphthyl) (2',3',5'-trifluorobiphenyl) (perfluorobiphenyl)borate]⁻/ bis(4-(triethylsilyl)phenyl)methylene(cyclopentadienyl) (2,7-di-t-butyl-fluorenyl)hafnium dimethyl; [trityl]⁺[(6-{tri-(isopropyl)siloxy}perfluoroinden-2-yl) (4,5,6-trifluoronaphthyl) (4,5,7-trifluoronaphthyl) (2',3',4'-trifluorobiphenyl)borate]⁻/ dimethylsilyl (indenyl) (fluorenyl) hafnium dihydride; [trityl]⁺[(6-{tri-(isopropyl)siloxy}perfluoroinden-2-yl) (pentafluoroanthracenyl) (4,5,6-trifluoronaphthyl) (perfluorophenyl)borate]⁻/ (tetramethyl-cyclopentadienyl) (n-propylcyclopentadienyl) zirconium dimethyl; [trityl]⁺[(6-{tri-(isopropyl)siloxy}perfluoroinden-2-yl) (pentalfluoropyrenyl) (5,6,7,8-tetrafluoronaphthyl) (perfluoropyrenyl)borate]⁻/ dimethylsilyl bis(2-methyl-4-naphth-2-yl-indenyl) hafnium dimethyl; [trityl]⁺[(6-{tri-(isopropyl)siloxy}-perfluoroinden-2-yl) (pentalfluoropyrenyl) (perfluorophenyl) (perfluorofluorenyl)aluminate]⁻/ diphenylmethyl (fluorenyl) (cyclopentadienyl) hafnium dimethyl; [trityl]⁺[(6-{tri-(isopropyl)siloxy}perfluoronapth-1-yl)bis(tetrafluorofluorenyl) (perfluorobiphenyl)borate]⁻/ dimethylsilyl (indenyl) (fluorenyl) hafnium dihydride; [trityl]⁺[(6-{tri-(isopropyl)siloxy}-perfluoronapth-1-yl)bis(tetrafluorofluorenyl) (perfluorobiphenyl)borate]⁻/ pentamethyl cyclopentadienyl tribenzyl titanium; [trityl]⁺[(6-{tri-(isopropyl)siloxy}perfluoronapth-2-yl) (2,3,4-trifluorophenyl) (perfluorofluorenyl) (perfluorophenyl)borate]⁻/ diphenylmethyl (cylcopentadienyl) (2,7-di-t-butyl-fluorenyl) hafnium dimethyl; [trityl]⁺[(6-{tri-(isopropyl)siloxy}-perfluoronapth-2-yl)bis(perfluorophenyl) (perfluorobiphenyl)borate]⁻/ methylphenylmethylene bis(fluorenyl) hafnium dimethyl; [trityl]⁺[(6-{tri-(isopropyl)siloxy}perfluoronapth-3-yl) (5,6,7,8-tetrafluoronaphthyl) (perfluorofluorenyl) (perfluorobiphenyl)borate]⁻/ diphenylmethyl (cylcopentadienyl) (fluorenyl) hafnium dimethyl; [trityl]⁺[(6-{tri-(isopropyl)siloxy}-perfluoronapth-3-yl) (tetrafluorofluorenyl) (perfluorophenyl) (perfluorobiphenyl)borate]⁻/ diphenylmethylene (cyclopentadienyl) (2,7-dimethyl fluorenyl) hafnium dimethyl; [trityl]⁺[(7-{ (3-ethylnonyl) ( triethylsilylpropyl)isopropylsiloxy}perfluorofluoren-1-yl) (perfluorofluorenyl) (pentafluoroanthracenyl) (2,3,6-trifluorophenyl)borate]⁻/ methylene (2,7-di-t-butyl fluorenyl) (fluorenyl) hafnium dimethyl; [trityl]⁺[(7-{ (3-ethylnonyl) (t-butyl) (triethylsilylethyl)siloxy}-perfluoronapth-3-yl) (tetrafluorofluorenyl) (2',3',5'-trifluorobiphenyl) (perfluorophenyl)borate]⁻/ diphenylmethylene(cylcopentadienyl) (fluorenyl) hafnium dimethyl; [trityl]⁺[(7-{ (3-ethylnonyl) (tri-(isopropyl)silyloctyl)isopropylsiloxy}perfluorofluoren-2-yl) (2,3,5-trifluorophenyl) (2',3',4'-trifluorobiphenyl) (perfluorobiphenyl)borate]⁻/ bis(1,3-dibutyl-methyl-cyclopentadienyl) zirconium dimethyl; [trityl]⁺[(7-{( triethylsilylpropyl) (triethylsilylmethyl) (3-ethylnonyl)siloxy}-perfluoropyren-1-yl)tris(perfluorophenyl)borate]⁻/ bis(1,3-dibutyl-methyl-cyclopentadienyl) zirconium dimethyl; [trityl]⁺[(7-{(2,2-dimethyloctyl) (triethylsilylethyl)isopropylsiloxy}-perfluorofluoren-2-yl) (pentalfluoropyrenyl) (tetrafluorofluorenyl) (perfluorobiphenyl)borate]⁻/ diphenylmethyl (cylcopentadienyl) (fluorenyl) hafnium dimethyl; [trityl]⁺[(7-{(methyldiethylsilyloctyl)isopropylnonylsiloxy}perfluoropyren-2-yl) (pentalfluoropyrenyl) (perfluoronaphthyl) (2,3,4-trifluorophenyl)borate]⁻/ diphenylmethyl (cylcopentadienyl) (2,7-di-t-butyl-fluorenyl) hafnium dimethyl; [trityl]⁺[(7-{(methyldiethylsilyloctyl)isopropylnonylsiloxy}-perfluoropyren-2-yl) (pentalfluoropyrenyl) (perfluoronaphthyl) (2,3,4-trifluorophenyl)borate]⁻/ diphenylmethyl (fluorenyl) (cyclopentadienyl) hafnium dimethyl; [trityl]⁺[(7-{(t-butyl) (methyldiethylsilyloctyl) (tri-n-propylsilylhexyl)siloxy}perfluoroinden-2-yl) (4,5,7-trifluoronaphthyl) (perfluorophenyl) (perfluorofluorenyl)aluminate]⁻/ (tetramethyl-cyclopentadienyl) (n-propylcyclopentadienyl) zirconium dimethyl; [trityl]⁺[(7-{(tri-(isopropyl)silyloctyl) (3-ethylnonyl) (2,2-dimethyloctyl)siloxy}perfluoronapth-2-yl) (2,3,5-trifluorophenyl) (2',3',5'-trifluorobiphenyl) (4,5,6-trifluoronaphthyl)borate]⁻/ dimethylsilyl bis(2-methyl-4-phenyl-indenyl) hafnium dimethyl; [trityl]⁺[(7-{(tri-(isopropyl)silyloctyl) (3-ethylnonyl) (2,2-dimethyloctyl)siloxy}perfluoronapth-2-yl) (2,3,5-trifluorophenyl) (2',3',5'-trifluorobiphenyl) (4,5,6-trifluoronaphthyl)borate]⁻/ dimethylsilyl bis(phenylmethylindenyl) hafnium dimethyl; [trityl]⁺[(7-{(triethylsilylethyl) (methyldiethylsilyloctyl)nonylsiloxy}perfluoronapth-1-yl) (perfluoropyrenyl) (perfluoronaphthyl) (perfluoroanthracenyl)aluminate]⁻/ diphenylmethylene(cylcopentadienyl) (2,7-methyl-fluorenyl) hafnium dimethyl; [trityl]⁺[(7-{(triethylsilylethyl)isopropylbenzylsiloxy}perfluoroanthracen-1-yl) (perfluoropyrenyl) (perfluorobiphenyl) (pentalfluoropyrenyl)borate]⁻/ (4-n-butylphenyl) (4-t-butylphenyl)methylene (2,7-di-t-butyl-fluorenyl) (indenyl) hafnium dimethyl; [trityl]⁺[(7-{(triethylsilylethyl)isopropylbenzylsiloxy}perfluoroanthracen-1-yl) (perfluoropyrenyl) (perfluorobiphenyl) (pentalfluoropyrenyl)borate]⁻/ dimethylsilyl bis(indenyl) hafnium dimethyl; [trityl]⁺[(7-{(triethylsilylethyl)isopropylbenzylsiloxy}perfluoroanthracen-1-yl) (perfluoropyrenyl) (perfluorobiphenyl) (pentalfluoropyrenyl)borate]⁻/ diphenylmethylene(cylcopentadienyl) (fluorenyl) hafnium dimethyl; [trityl]⁺[(7-{(triethylsilylmethyl)isopropyl(2,2-dimethyloctyl)siloxy}perfluoropyren-2-yl) (2',3',4'-trifluorobiphenyl) (perfluoronaphthyl) (4,5,6,7-tetrafluoronaphthyl)aluminate]⁻/ dimethylsilyl bisindenyl hafnium dimethyl; [trityl]⁺[(7-{(trimethylsilylethyl) (t-butyl) (triethylsilylethyl)siloxy}fluoropyren-1-yl) (2,3,5-trifluorophenyl) (perfluoropyrenyl) (perfluorophenyl)aluminate]⁻/ dimethylsilyl bis(phenylmethylindenyl) hafnium dimethyl; [trityl]⁺[(7-{(trimethylsilylethyl) (t-butyl) (triethylsilylethyl)siloxy}fluoropyren-1-yl) (2,3,5-trifluorophenyl) (perfluoropyrenyl) (perfluorophenyl)aluminate]⁻/ diphenylmethyl (fluorenyl) (cyclopentadienyl) zirconium dimethyl; [trityl]⁺[(7-{(trimethylsilylethyl) (t-butyl) (triethylsilylethyl)siloxy}fluoropyren-1-yl) (2,3,5-trifluorophenyl) (perfluoropyrenyl) (perfluorophenyl)aluminate]⁻/ methylene (indenyl) (2,7-di-t-butyl-fluorenyl) hafnium dimethyl; [trityl]⁺[(7-{(tri-n-propylsilylhexyl)isopropyl(tri-(isopropyl)silyloctyl)siloxy}perfluoronapth-3-yl) (perfluorofluorenyl) (perfluorobiphenyl) (perfluorophenyl)borate]⁻/ bis(4-triethylsilylphenyl)methylene(cyclopentadienyl) (fluorenyl)hafnium dimethyl; [trityl]⁺[(7-{(tri-n-propylsilylhexyl)isopropylnonylsiloxy}perfluoronapth-1-yl) (4.5,7-trifluoronaphthyl) (pentalfluoropyrenyl) (perfluoronaphthyl)aluminate]⁻/ (4-n-butylphenyl) (4-t-butylphenyl)methylene (2,7-di-t-butyl-fluorenyl) (cyclopentadienyl) hafnium dimethyl; [trityl]⁺[(7-{benzylisopropylcyclohexylsiloxy}perfluoronapth-1-yl) (4,5,6,7-tetrafluoronaphthyl) (perfluorofluorenyl) (perfluorophenyl)borate]⁻/ di(4-n-butylphenyl)methylene (2,7-di-t-butyl fluorenyl) (cyclopentadienyl) hafnium dimethyl; [trityl]+[(7-{benzylisopropylcyclohexylsiloxy}-perfluoronapth-1-yl) (4,5,6,7-tetrafluoronaphthyl) (perfluorofluorenyl) (perfluorophenyl)borate]⁻/ dimethylsilylbis(tetrahydroindenyl) zirconium dichloride; [trityl]⁺[(7-{benzylisopropylnonylsiloxy}perfluorofluoren-1-yl) (5,6,7,8-tetrafluoronaphthyl) (perfluorobiphenyl) (perfluoronaphthyl)aluminate]⁻/ (4-n-butylphenyl) (4-t-butylphenyl)methylene (2,7-di-t-butyl-fluorenyl) (cyclopentadienyl) hafnium dimethyl; [trityl]⁺[(7-{benzylisopropylnonylsiloxy}perfluorofluoren-1-yl) (5,6,7,8-tetrafluoronaphthyl) (perfluorobiphenyl) (perfluoronaphthyl)aluminate]⁻/ (4-n-butylphenyl) (4-t-butylphenyl)methylene (2,7-di-t-butyl-fluorenyl) (indenyl) hafnium dimethyl; [trityl]⁺[(7-{benzylisopropylnonylsiloxy}perfluorofluoren-1-yl) (5,6,7,8-tetrafluoronaphthyl) (perfluorobiphenyl) (perfluoronaphthyl)aluminate]⁻/ methylphenylmethylene bis(fluorenyl) hafnium dimethyl; [trityl]⁺[(7-{benzylnonyl(methyldiethylsilyloctyl)siloxy}perfluoronapth-2-yl)bis(perfluorophenyl) (2',3',4'-trifluorobiphenyl)aluminate]⁻/ methylphenylmethylene bis(fluorenyl) hafnium dimethyl; [trityl]⁺[(7-{di-((methyldiethylsilyloctyl))isopropylsiloxy}-perfluoronapth-2-yl) (perfluorobiphenyl) (perfluorophenyl) (4,5,6,7-tetrafluoronaphthyl)borate]⁻/ (4-n-butylphenyl) (4-t-butylphenyl)methylene (fluorenyl) (cyclopentadienyl) hafnium dimethyl; [trityl]⁺[(7-{di-((tri-(isopropyl)silyloctyl))isopropylsiloxy}perfluoronapth-3-yl)bis(perfluoropyrenyl) (2,3,6-trifluorophenyl)aluminate]⁻/ (4-n-butylphenyl) (4-t-butylphenyl)methylene (fluorenyl) (cyclopentadienyl) hafnium dimethyl; [trityl]⁺[(7-{di-((tri-(isopropyl)silyloctyl))isopropylsiloxy}perfluoronapth-3-yl)bis(perfluoropyrenyl) (2,3,6-trifluorophenyl)aluminate]⁻/ bis(4-triethylsilylphenyl)methylene(cyclopentadienyl) (fluorenyl)hafnium dimethyl; [trityl]⁺[(7-{di-((tri-(isopropyl)silyloctyl))isopropylsiloxy}-perfluoronapth-3-yl)bis(perfluoropyrenyl) (2,3,6-trifluorophenyl)aluminate]⁻/ di(4-n-butylphenyl) methylene (fluorenyl) (indenyl) hafnium dimethyl; [trityl]⁺[(7-{di-((triethylsilylhexyl))isopropylsiloxy}perfluoroinden-2-yl) (perfluorobiphenyl) (perfluorophenyl) (2',3',5'-trifluorobiphenyl)borate]⁻/ dimethylsilyl bis(2-methyl-4-naphth-2-yl-indenyl) hafnium dimethyl; [trityl]⁺[(7-{di-((triethylsilylhexyl))isopropylsiloxy}perfluoronapth-2-yl) (perfluorofluorenyl) (perfluorophenyl) (perfluoropyrenyl)borate]⁻/ dinapthylmethylene (cyclopentadienyl) (fluorenyl) hafnium dimethyl; [trityl]⁺[(7-{di-((tri-n-propylsilylhexyl)) (triethylsilylethyl)siloxy}perfluoronapth-2-yl)bis(perfluorobiphenyl) (perfluoroanthracenylborate]⁻/ dimethylsilylbis(2-methylbenzindenyl) zirconium dimethyl; [trityl]⁺[(7-{di-(isopropyl) (triethylsilylhexyl)siloxy}fluoropyren-2-yl) (2,3,4-trifluorophenyl) (perfluorofluorenyl) (2,3,5-trifluorophenyl)borate]⁻/ di(4-n-butylphenyl)methylene (2,7-di-t-butyl fluorenyl) (cyclopentadienyl) hafnium dimethyl; [trityl]⁺[(7-{di-(isopropyl) (triethylsilylhexyl)siloxy}fluoropyren-2-yl) (2,3,4-trifluorophenyl) (perfluorofluorenyl) (2,3,5-trifluorophenyl)borate]⁻/ dibutylsilyl (fluorenyl) (cyclopentadienyl) hafnium dimethyl; [trityl]⁺[(7-{ethyl(methyldiethylsilyloctyl)isopropylsiloxy}perfluoronaphth-3-yl) (perfluoroanthracenyl) (4,5,7-trifluoronaphthyl) (perfluorophenyl)borate]⁻/ dibutylsilyl (fluorenyl) (cyclopentadienyl) hafnium dimethyl; [trityl]⁺[(7-{ethyl(methyldiethylsilyloctyl)isopropylsiloxy}perfluoronaphth-3-yl) (perfluoroanthracenyl) (4,5,7-trifluoronaphthyl) (perfluorophenyl)borate]⁻/ diphenylmethyl (fluorenyl) (cyclopentadienyl) zirconium dimethyl; [trityl]⁺[(7-{hexyl(tri-n-propylsilylhexyl)isopropylsiloxy}-perfluoroinden-2-yl) (perfluorofluorenyl) (2',3',4'-trifluorobiphenyl) (perfluorophenyl)borate]⁻/ dimethylsilyl (tetramethylcyclopentadienyl) (t-butylamino) titanium dimethyl; [trityl]⁺[(7-{isopropyl (3-ethylnonyl)isopropylsiloxy}perfluorofluoren-2-yl) (tetrafluorofluorenyl) (2',3',5'-trifluorobiphenyl) (4,5,6,7-tetrafluoronaphthyl)borate]⁻/ diphenylmethylene (cyclopentadienyl) (2,7-di-t-butyl fluorenyl) hafnium dimethyl; [trityl]⁺[(7-{isopropyl(t-butyl) (triethylsilylmethyl)siloxy}perfluoroinden-2-yl) (perfluorophenyl) (perfluoropyrenyl) (2,3,5-trifluorophenyl)borate]⁻/ (4-n-butylphenyl) (4-t-butylphenyl)methylene (2,7-di-t-butyl-fluorenyl) (cyclopentadienyl) hafnium dimethyl ; [trityl]⁺[(7-{isopropyl(t-butyl) (triethylsilylmethyl)siloxy}perfluoroinden-2-yl) (perfluorophenyl) (perfluoropyrenyl) (2,3,5-trifluorophenyl)borate]⁻/ bis(4-(triethylsilyl)phenyl)methylene(cyclopentadienyl) (2,7-di-t-butyl-fluorenyl)hafnium dimethyl; [trityl]⁺[(7-{isopropyl(t-butyl) (triethylsilylmethyl)siloxy}perfluoronapth-3-yl) (perfluoroanthracenyl) (perfluorophenyl) (pentafluoroanthracenyl)borate]⁻/ dimethylsilyl(tetramethylcyclopentadienyl) (dodecylamido) hafnium dihydride; (trityl]⁺[(7-{isopropyl(t-butyl)nonylsiloxy}perfluoronapth-2-yl)bis(perfluorophenyl) (4,5,6-trifluoronaphthy)borate]⁻/ (4-alkylphenyl)(4-t-butylphenyl)methylene(cylcopentadienyl) (fluorenyl) hafnium dimethyl; [trityl]⁺[(7-{isopropyl(triethylsilylethyl)cyclohexylsiloxy}-perfluoroinden-2-yl) (2,3,5-trifluorophenyl) (perfluorobiphenyl) (pentalfluoropyrenyl)borate]⁻/ diphenylmethyl (fluorenyl) (cyclopentadienyl) hafnium dimethyl; [trityl]⁺[(7-{isopropyl(triethylsilylhexyl) (triethylsilylmethyl)siloxy}perfluorofluoren-1-yl) (5,6,7,8-tetrafluoronaphthyl) (4,5,7-trifluoronaphthyl) (perfluorophenyl)borate]⁻/ diphenylmethylene (cyclopentadienyl) (2,7-di-t-butyl fluorenyl) hafnium dimethyl ; [trityl]⁺[(7-{isopropyl(trimethylsilylethyl)isopropylsiloxy}perfluoronapth-1-yl) (perfluorobiphenyl) (perfluorophenyl) (4,5,7-trifluoronaphthyl)borate]⁻/ (pentamethylcyclopentadienyl) (cyclopentadienyl)zirconium dimethyl; [trityl]⁺[(7-{isopropyl(trimethylsilylethyl)isopropylsiloxy}perfluoronapth-1-yl) (perfluorobiphenyl) (perfluorophenyl) (4,5,7-trifluoronaphthyl)borate]⁻/ diphenylmethylene(cylcopentadienyl) (2,7-methyl-fluorenyl) hafnium dimethyl; [trityl]⁺[(7-{isopropyl(tri-n-propylsilylhexyl) (triethylsilylhexyl)siloxy}perfluoroinden-2-yl) (2,3,5-trifluorophenyl) (perfluoropyrenyl) (pentafluoroanthracenyl)aluminate]⁻/ di(4-n-butylphenyl)methylene (2,7-dimethyl fluorenyl) (cyclopentadienyl) hafnium dimethyl; [trityl]⁺[(7-{isopropylcyclohexylisopropylsiloxy}-perfluoronapth-2-yl) (perfluorophenyl) (2',3',5'-trifluorobiphenyl) (perfluorofluorenyl)boratel]⁻/ dibutylsilyl (fluorenyl) (cyclopentadienyl) hafnium dimethyl; [trityl]⁺[(7-{isopropylhexyl(t-butyl)siloxy}perfluoropyren-2-yl)bis(perfluorofluorenyl) (2',3',-5'-trifluorobiphenyl)borate]⁻/ bis(trimethylsilyl) titanium dimethyl; [trityl]⁺[(7-{isopropylnonyl(triethylsilylpropyl)siloxy}-fluorofluoren-2-yl) (2,3,6-trifluorophenyl) (perfluorophenyl) (perfluorofluorenyl)borate]⁻/ bis(trimethylsilyl) titanium dimethyl; [trityl]⁺[(7-{isopropyloctyl(methyldiethylsilyloctyl)siloxy}-perfluoropyren-1-yl) (perfluorophenyl) (tetrafluorofluorenyl) (perfluorobiphenyl)borate]⁻/ (4-n-propylphenyl) (4-isopropylphenyl)silylenebis(fluorenyl) hafnium di-t-butyl; [trityl]⁺[(7-{isopropyloctyl(triethylsilylethyl)siloxy}perfluoronapth-2-yl) (perfluorofluorenyl) (perfluorobiphenyl) (perfluorophenyl)borate]⁻/ diphenylmethylene (2,7-di-n-butyl fluorenyl) (cyclopentadienyl) hafnium dimethyl; [trityl]⁺[(7-{nonyl(triethylsilylpropyl)isopropylsiloxy}-perfluoropyren-2-yl) (4,5,7-trifluoronaphthyl) (perfluoropyrenyl) (perfluorophenyl)aluminate]⁻/ (4-alkylphenyl) (4-t-butylphenyl)methylene(cylcopentadienyl) (fluorenyl) hafnium dimethyl; [trityl]⁺[(7-{octylisopropyl(triethylsilylethyl)siloxy}perfluoronapth-1-yl) (pentafluoroanthracenyl) (2',3',5'-trifluorobiphenyl) (4,5,6-trifluoronaphthyl)aluminate]⁻/ dimethylsilyl(tetramethylcyclopentadienyl) (tert-butylamido) titanium dichloride; [trityl]⁺[(7-{tri-(isopropyl)siloxy}perfluoroanthracen-1-yl) (5,6,7,8-tetrafluoronaphthyl) (2,3,4-trifluorophenyl) (perfluorophenyl)borate]⁻/ dimethylsilyl (indenyl) (fluorenyl) hafnium dihydride; [trityl]⁺((7-{tri-(isopropyl)siloxy}perfluoroanthracen-1-yl)(pentafluoroanthracenyl) (perfluorobiphenyl) (perfluorophenyl)borate]⁻/ bis(4-(triethylsilyl)phenyl)methylene(cyclopentadienyl) (fluorenyl)hafnium dimethyl; [trityl]⁺[(7-{tri-(isopropyl)siloxy}perfluoroanthracen-1-yl) (perfluorophenyl) (4,5,6,7-tetrafluoronaphthyl) (perfluorobiphenyl)aluminate]⁻/ dimethylsilylbis(2-methylbenzindenyl) zirconium dimethyl; [trityl]⁺[(7-{tri-(isopropyl)siloxy}-perfluoroanthracen-1-yl)bis(2',3',5'-trifluorobiphenyl) (2',3',4'-trifluorobiphenyl)borate]⁻/ dimethylsilyl(tetramethylcyclopentadienyl) (dodecylamido) hafnium dihydride; [trityl]⁺[(7-{tri-(isopropyl)siloxy}perfluoroanthracen-1-yl)bis(2',3',5'-trifluorobiphenyl) (2',3',4'-trifluorobiphenyl)borate]⁻/ methylene (indenyl) (2,7-di-t-butyl-fluorenyl) hafnium dimethyl; [trityl}⁺[(7-{tri-(isopropyl)siloxy}perfluorofluoren-1-yl) (perfluorofluorenyl) (perfluorophenyl) (5,6,7,8-tetrafluoronaphthyl)aluminate]⁻/ bis(4-(triethylsilyl)phenyl)methylene(cyclopentadienyl) (2,7-di-t-butyl-fluorenyl)hafnium dimethyl; [trityl]⁺[(7-{tri-(isopropyl)siloxy}perfluorofluoren-1-yl) (perfluorophenyl) (perfluoropyrenyl) (4,5,6-trifluoronaphthyl)borate]⁻/ diphenylmethylene (cyclopentadienyl) (2,7-dimethyl fluorenyl) hafnium dimethyl; [trityl]⁺[(7-{tri-(isopropyl)siloxy}perfluorofluoren-1-yl) (tetrafluorofluorenyl) (2',3',4'-trifluorobiphenyl) (perfluoropyrenyl)aluminate]⁻/ di(4-n-butylphenyl) methylene (fluorenyl) (indenyl) hafnium dimethyl; [trityl]⁺[(7-{tri-(isopropyl)siloxy}perfluorofluoren-1-yl)bis(perfluorobiphenyl) (5,6,7,8-tetrafluoronaphthyl)borate]⁻/ dimethylsilyl bis(2-methyl-4-naphth-2-yl-indenyl) hafnium dimethyl; [trityl]⁺[(7-{tri-(isopropyl)siloxy}perfluorofluoren-1-yl)bis(perfluorobiphenyl) (perfluorophenyl)borate]⁻/ bis(4-(triethylsilyl)phenyl)methylene(cyclopentadienyl) (fluorenyl)hafnium dimethyl; [trityl]⁺[(7-{tri-(isopropyf)siloxy}perfluorofluoren-1-yl)bis(perfluorobiphenyl) (perfluorophenyl)borate]⁻/ diphenylmethylene (cyclopentadienyl) (2,7-dimethyl fluorenyl) hafnium dimethyl; [trityl]⁺[(7-{tri-(isopropyl)siloxy}perfluorofluoren-1-yl)bis(perfluorophenyl) (perfluorofluorenyl)borate]⁻/ dimethylsilyl bisindenyl hafnium dimethyl; [trityl]⁺[(7-{tri-(isopropyl)siloxy}perfluorofluoren-1-yl)bis(perfluorophenyl) (tetrafluorofluorenyl)borate]⁻/ (4-n-butylphenyl) (4-t-butylphenyl)methylene (2,7-di-t-butyl-fluorenyl) (cyclopentadienyl) hafnium dimethyl; [trityl]⁺[(7-{tri-(isopropyl)siloxy}-perfluorofluoren-1-yl)bis(perfluorophenyl) (tetrafluorofluorenyl)borate]⁻/ dimethytsilyl (tetramethylcyclopentadienyl) (adamantyl-1-amino) titanium dimethyl; [trityl]⁺[(7-{tri-(isopropyl)siloxy}perfluorofluoren-2-yl)(2',3',5'-trifluorobiphenyl) (4,5,6,7-tetrafluoronaphthyl) (perfluorofluorenyl)borate]⁻/ (4-n-butylphenyl) (4-t-butylphenyl)methylene(2,7-dimethylfluorenyl) (indenyl) hafnium dibenzyl; [trityl]⁺[(7-{tri-(isopropyl)siloxy}perfluorofluoren-2-yl) (2,3,5-trifluorophenyl) (perfluoroanthracenyl) (perfluorobiphenyl)borate]⁻/ diphenylmethylene(cylcopentadienyl) (2,7-di-t-butyt-fluorenyl) hafnium dimethyl; [trityl]⁺[(7-{tri-(isopropyl)siloxy}perfluorofluoren-2-yl) (perftuorophenyl) (2,3,4-trifluorophenyl) (perfluorobiphenyl)aluminate]⁻/ di(4-n-butylphenyl)methylene (2,7-di-t-butyl fluorenyl) (cyclopentadienyl) hafnium dimethyl; [trityl]⁺[(7-{tri-(isopropyl)siloxy}perfluorofluoren-2-yl)bis(perfluoronaphthyl) (perfluoropyrenyl)borate]⁻/ dimethylsilyl (tetramethylcyclopentadienyl) (adamantyl-1-amino) titanium dimethyl; [trityl]⁺[(7-{tri-(isopropyl)siloxy}perfluorofluoren-2-yl)bis(perfluorophenyl) (2',3',5'-trifluorobiphenyl)borate]⁻/ dimethylsilylbis(2-methylbenzindenyl) zirconium dimethyl; [trityl]⁺[(7-{tri-(isopropyl)siloxy}-perfluoroinden-2-yl) (4,5,7-trifluoronaphthyl) (2,3,4-trifluorophenyl) (perfluorobiphenyl)borate]⁻/ bis(4-(triethylsilyl)phenyl)methylene(cyclopentadienyl) (fluorenyl)hafnium dimethyl; [trityl]⁺[(7-{tri-(isopropyl)siloxy}perfluoroinden-2-yl) (perfluorofluorenyl) (perfluorobiphenyl) (4,5,7-trifluoronaphthyl)borate]⁻/ di(4-n-butylphenyl) methylene (fluorenyl) (indenyl) hafnium dimethyl; [trityl]⁺[(7-{tri-(isopropyl)siloxy}perfluoroinden-2-yl) (perfluorophenyl) (perfluorobiphenyl) (tetrafluorofluorenyl)borate]⁻/ dimethylsilyl bis(naphthylmethylindenyl) hafnium dimethyl; [trityl]⁺[(7-{tri-(isopropyl)siloxy}perfluoroinden-2-yl) (perfluorophenyl) (perfluorobiphenyl) (tetrafluorofluorenyl)borate]⁻/ diphenylmethyl (cylcopentadienyl) (fluorenyl) hafnium dimethyl; [trityl]⁺[(7-{tri-(isopropyl)siloxy}perfluoronapth-1-yl) (4,5,6,7-tetrafluoronaphthyl) (perfluorofluorenyl) (2,3,6-trifluorophenyl)borate]⁻/ di(4-n-butylphenyl)methylene (2,7-dimethyl fluorenyl) (cyclopentadienyl) hafnium dibenzyl; [trityl]⁺[(7-{tri-(isopropyl)siloxy}perfluoronapth-1-yl) (pentalfluoropyrenyl) (perfluorophenyl) (perfluorofluorenyl)borate]⁻/ bis(4-(triethylsilyl)phenyl)methylene(cyclopentadienyl) (fluorenyl)hafnium dimethyl; [trityl]⁺[(7-{tri-(isopropyl)siloxy}perfluoronapth-1-yl) (perfluorofluorenyl) (2,3,6-trifluorophenyl) (4,5,7-trifluoronaphthyl)borate]⁻/ dimethylsilyl bis(2-methyl-4-phenyl-indenyl) hafnium dimethyl; [trityl]⁺[(7-[tri-(isopropyl)siloxy}perfluoronapth-1-yl)bis(perfluoropyrenyl) (2,3,4-trifluorophenylborate]⁻/ di(4-n-butylphenyl)methylene (2,7-di-t-butyl fluorenyl) (cyclopentadienyl) hafnium dimethyl; [trityl]⁺[(7-{tri-(isopropyl)siloxy}-perfluoronapth-1-yl)bis(perfluoropyrenyl) (2,3,4-trifluorophenylborate]⁻/ diphenylmethylene (2,7-di-n-butyl fluorenyl) (cyclopentadienyl) hafnium dimethyl; [trityl]⁺[(7-{tri-(isopropyl)siloxy}-perfluoronapth-2-yl) (2,3,4-trifluorophenyl) (perfluorophenyl) (2,3,6-trifluorophenyl)borate]⁻/ dimethylsilyl (tetramethylcyclopentadienyl) (t-butylamino) titanium dimethyl; [trityl]⁺[(7-{tri-(isopropyl)siloxy}perfluoronapth-2-yl) (2,3,4-trifluorophenyl) (perfluorophenyl) (2,3,6-trifluorophenyl)borate]⁻/ pentamethyl cyclopentadienyl tribenzyl titanium; [trityl]⁺[(7-{tri-(isopropyl)siloxy}perfluoronapth-3-yl) (perfluorobiphenyl) (perfluoropyrenyl) (4,5,6-trifluoronaphthyl)borate]⁻/ methylene (2,7-di-t-butyl fluorenyl) (fluorenyl) hafnium dimethyl; [trityl]⁺[(7-{tri-(isopropyl)siloxy}perfluoronapth-3-yl) (perfluorofluorenyl) (2',3',5'-trifluorobiphenyl) (5,6,7,8-tetrafluoronaphthyl)borate]⁻/ di(4-n-butylphenyl)methylerie (2,7-dimethyl fluorenyl) (cyclopentadienyl) hafnium dibenzyl; [trityl]⁺[(7-{tri-(isopropyl)siloxy}-perfluoronapth-3-yl) (perfluorofluorenyl) (2',3',5'-trifluorobiphenyl) (5,6,7,8-tetrafluoronaphthyl)borate]⁻/ dimethylsilyl bis(2-propyl-indenyl) hafnium dimethyl; [trityl]⁺[(7-{tri-(isopropyl)siloxy}perfluoropyren-1-yl) (4,5,6-trifluoronaphthyl) (perfluoroanthracenyl) (perfluorofluorenyl)borate]⁻/ diphenylmethyl (fluorenyl) (cyclopentadienyl) hafnium dimethyl; [trityl]⁺[(7-{tri-(isopropyl)siloxy}perfluoropyren-1-yl) (5,6,7,8-tetrafluoronaphthyl) (perfluorobiphenyl) (perfluoropyrenyl)borate]⁻/ diphenylmethyl (cylcopentadienyl) (fluorenyl) hafnium dimethyl; [trityl]⁺[(7-{tri-(isopropyl)siloxy}perfluoropyren-1-yl) (pentalfluoropyrenyl) (perfluoroanthracenyl) (perfluorobiphenyl)borate]⁻/ diphenylmethyl (cylcopentadienyl) (2,7-dit-butyl-fluorenyl) hafnium dimethyl; [trityl]⁺[(7-{tri-(isopropyl)siloxy}perfluoropyren-1-yl) (pentalfluoropyrenyl) (perfluoroanthracenyl) (perfluorobiphenyl)borate]⁻/ methylphenylmethylene bis(fluorenyl) hafnium dimethyl; [trityl]⁺[(7-{tri-(isopropyl)siloxy}-perfluoropyren-1-yl) (perfluoroanthracenyl) (perfluorophenyl) (2',3',5'-trifluorobiphenyl)borate]⁻/ di(4-n-butylphenyl)methylene (2,7-di-t-butyl fluorenyl) (cyclopentadienyl) hafnium dimethyl; [trityl]⁺[(7-ftri-(isopropyl)siloxy}perfluoropyren-1-yl) (perfluorophenyl) (5,6,7,8-tetrafluoronaphthyl) (perfluoropyrenyl)aluminate]⁻/ methylphenylmethylene bis(fluorenyl) hafnium dimethyl; [trityl]⁺[(7-{tri-(isopropyl)siloxy}perfluoropyren-1-yl) (perfluoropyrenyl) (4,5,7-trifluoronaphthyl) (2,3,5-trifluorophenyl)borate]⁻/ dinapthylmethylene (cyclopentadienyl) (fluorenyl) hafnium dimethyl; [trityl]⁺[(7-{tri-(isopropyl)siloxy}perfluoropyren-1-yl)bis(perfluorophenyl) (perfluorobiphenyl)aluminate]⁻/ (4-n-propylphenyl) (4-methylphenyl)methylene(fluorenyl) (indenyl) hafnium dimethyl; [trityl]⁺[(7-{tri-(isopropyl)siloxy}perfluoropyren-1-yl)bis(perfluorophenyl) (perfluorobiphenyl)aluminate]⁻/ dimethylsily-bisindenyl hafnium dimethyl; [trityl]⁺[(7-{tri-(isopropyl)siloxy}perfluoropyren-1-yl)bis(perfluorophenyl) (perfluorobiphenyl)aluminate]⁻/ isopropyl (cyclopentadienyl) (fluorenyl) hafnium dimethyl; [trityl]⁺[(7-{tri-(isopropyl)siloxy}perfluoropyren-1-yl)tris(perfluorophenyl)borate]⁻/ (4-n-butylphenyl) (4-t-butylphenyl)methylene (2,7-di-t-butyl-fluorenyl) (indenyl) hafnium dimethyl; [trityl]⁺[(7-{tri-(isopropyl)siloxy}perfluoropyren-1-yl)tris(perfluorophenyl)borate]⁻/ bis(trimethylsilyl) titanium dimethyl; [trityl]⁺[(7-{tri-(isopropyl)siloxy}perfluoropyren-1-yl)tris(perfluorophenyl)borate]⁻/ dimethylsilyl(tetramethylcyclopentadienyl) (tert-butylamido) titanium dichloride; [trityl]⁺[(7-{tri-(isopropyl)siloxy}perfluoropyren-2-yl) (perfluorophenyl) (perfluoropyrenyl) (2,3,6-trifluorophenyl)borate]⁻/dimethylsilyi(tetramethylcyclopentadienyl) (tert-butylamido) titanium dichloride; [trityl]⁺[(7-{tri-(isopropyl)siloxy}perfluoropyren-2-yl)bis(perfluorophenyl)⁻ (perfluorobiphenyl)aluminate]⁻/ dimethylsily-bisindenyl hafnium dimethyl; [trityl]⁺[(8-{(methyldiethylsilyloctyl)hexyl (3-ethylnonyl)siloxy}fluoronapth-3-yl) (perfluorobiphenyl) (5,6,7,8-tetrafluoronaphthyl) (perfluorophenyl)aluminate]⁻/ diphenylmethylene(cylcopentadienyl) (2,7-methyl-fluorenyl) hafnium dimethyl; [trityl]⁺[(8-{(triethylsilylethyl)isopropylbenzylsiloxy}perfluoropyren-2-yl)bis(tetrafluorofluorenyl) (4,5,6-trifluoronaphthyl)borate]⁻/ diphenylmethylene(cylcopentadienyl) (fluorenyl) hafnium dimethyl; [trityl]⁺[(8-{di-(isopropyl) (triethylsilylpropyl)siloxy}perfluoropyren-2-yl) (perfluorophenyl) (tetrafluorofluorenyl) (perfluoropyrenyl)borate]⁻/ pentamethyl cyclopentadienyl titanium isopropoxide; [trityl]⁺[(8-{isopropyl(2,2-dimethyloctyl)isopropylsiloxy}perfluoronapth-3-yl)tris(perfluorophenyl)aluminate]⁻/ pentamethylcyclopentadienyl titanium trimethyl; [trityl]⁺[(8-{isopropyi(triethylsilylhexyl) (2,2-dimethyloctyl)siloxy}perfluoropyren-2-yl) (perfluorofluorenyl) (4,5,6-trifluoronaphthyl) (perfluorophenyl)aluminate]⁻/ (4-n-propylphenyl) (4-isopropylphenyl)silylenebis(fluorenyl) hafnium di-t-butyl; [trityl]⁺[(8-{isopropyl(tri-n-propylsilylhexyl) (triethylsilylhexyl)siloxy}perfluoronapth-3-yl) (2',3',4'-trifluorobiphenyl) (5,6,7,8-tetrafluoronaphthyl) (perfluoropyrenyl)borate]⁻/ di(4-n-propylphenyl)methylene (2,7-di-t-butyl-5-methylfluorenyl) (fluorenyl) hafnium dimethyl; [trityl]⁺[(8-{tri-(isopropyl)siloxy}-perfluoronapth-3-yl) (4,5,6,7-tetrafluoronaphthyl) (perfluorobiphenyl) (2,3,6-trifluorophenyl)aluminate]⁻/ (pentamethylcyclopentadienyl) (cyclopentadienyl)zirconium dimethyl; [trityl]⁺[(8-{tri-(isopropyl)siloxy}perfluoronapth-3-yl) (4,5,6,7-tetrafluoronaphthyl) (perfluorobiphenyl) (2,3,6-trifluorophenyl)aluminate]⁻/ dimethylsilyl(tetramethylcyclopentadienyl) (t-butylamido) zirconium dimethyl; [trityl]⁺[(8-{tri-(isopropyl)siloxy}perfluoronapth-3-yl) (4,5,6,7-tetrafluoronaphthyl) (perfluorobiphenyl) (2,3,6-trifluorophenyl)aluminate]⁻/ methylene bis(fluorenyl) hafnium dimethyl; [trityl]⁺[(8-{tri-(isopropyl)siloxy}perfluoronapth-3-yl) (5,6,7,8-tetrafluoronaphthyl) (perfluorophenyl) (perfluorofluorenyl)borate]⁻/ (4-alkylphenyl) (4-t-butylphenyl)methylene(cylcopentadienyl) (fluorenyl) hafnium dimethyl; [trityl]⁺[(8-{tri-(isopropyl)siloxy}perfluoronapth-3-yl) (perfluorobiphenyl) (5,6,7,8-tetrafluoronaphthyl) (perfluorophenyl)borate]⁻/ diphenylmethylene (cyclopentadienyl) (2,7-dimethyl fluorenyl) hafnium dimethyl; [trityl]⁺[(8-{tri-(isopropyl)siloxy}-perfluoronapth-3-yl) (perfluorobiphenyl) (perfluorofluorenyl) (2',3',5'-trifluorobiphenyl)aluminate]⁻/ (4-n-butylphenyl) (4-t-butylphenyl)methylene(2,7-dimethylfluorenyl) (indenyl) hafnium dibenzyl; [trityl]⁺[(8-{tri-(isopropyl)siloxy}perfluoronapth-3-yl) (perfluorobiphenyl) (perfluorofluorenyl) (2',3',5'-trifluorobiphenyl)aluminate]⁻/ methylphenylmethylene bis(fluorenyl) hafnium dimethyl; [trityl]⁺[(8-{tri-(isopropyl)siloxy}-perfluoronapth-3-yl)bis(5,6,7,8-tetrafluoronaphthyl) (2,3,4-trifluorophenyl)borate]⁻/ dimethylsilyl bis(naphthylmethylindenyl) hafnium dimethyl; [tritylt[(8-{tri-(isopropyl)siloxy}-perfluoropyren-2-yl) (2,3,6-trifluorophenyl) (perfluoroanthracenyl) (pentalfluoropyrenyl)borate]⁻/ dimethylsilyl bis(methylindenyl) hafnium dimethyl; [trityl]⁺[(8-{tri-(isopropyl)siloxy}-perfluoropyren-2-yl) (4,5,6-trifluoronaphthyl) (perfluorophenyl) (pentafluoroanthracenyl)borate]⁻/ dimethylsily-bisindenyl hafnium dimethyl; [trityl]⁺[(8-{tri-(isopropyl)siloxy}perfluoropyren-2-yl) (perfluorobiphenyl) (5,6,7,8-tetrafluoronaphthyl) (perfluoropyrenyl)aluminate]⁻/ (4-alkylphenyl) (4-t-butylphenyl)methylene(cylcopentadienyl) (fluorenyl) hafnium dimethyl; [trityl]⁺[(8-{tri-(isopropyl)siloxy}perfluoropyren-2-yl) (perfluorobiphenyl) (perfluoronaphthyl) (pentalfluoropyrenyl)borate] (4-n-butylphenyl) (4-t-butylphenyl)methylene(fluorenyl) (indenyl) hafnium dimethyl; [trityl]⁺[(8-{tri-(isopropyl)siloxy}-perfluoropyren-2-yl) (perfluorobiphenyl) (perfluoronaphthyl) (pentalfluoropyrenyt)borate]⁻/ dimethylsilyl bis(indenyl) hafnium dimethyl; [trityl]⁺[(8-{tri-(isopropyl)siloxy}perfluoropyren-2-yl)bis(pentafluoroanthracenyl) (perfluorofluorenylborate]⁻/ di(4-n-butylphenyl)methylene (2,7-dimethyl fluorenyl) (cyclopentadienyl) hafnium dibenzyl; [trityl]⁺[(8-{tri-(isopropyl)siloxy}-perfluoropyren-2-yl)bis(pentafluoroanthracenyl) (perfluorofluorenylborate]⁻/ di(4-n-butylphenyl)methylene (2,7-dimethyl fluorenyl) (cyclopentadienyl) hafnium dimethyl; [trityl]⁺[(8-{tri-(isopropyl)siloxy}perfluoropyren-2-yl)bis(pentafluoroanthracenyl) (perfluorofluorenylborate]⁻/ dimethylsilyl bis(2-methyl-4-phenyl-indenyl) hafnium dimethyl; [trityl]⁺[(8-{tri-(isopropyl)siloxy}perfluoropyren-2-yl)bis(perfluorobiphenyl) (perfluorofluorenylborate]⁻/ di(4-n-butylphenyl)methylene (2,7-dimethyl fluorenyl) (cyclopentadienyl) hafnium dimethyl

### EXAMPLES

The following examples illustrate the foregoing discussion. All parts, proportions and percentages are by weight unless otherwise indicated. All examples were carried out in dry, oxygen-free environments and solvents. Although the examples may be directed to certain invention embodiments, they do not limit the invention in any specific respect. In these examples certain abbreviations are used. These include standard chemical abbreviations for the elements and certain commonly accepted abbreviations, such as : Me = methyl, Et = ethyl, n-Pr = normal-propyl, t-Bu = tertiary-butyl, Ph = phenyl, pfp = pentafluorophenyl, Cp = cyclopentadienyl, Ind = indenyl, Flu = fluorenyl, TMS = trimethylsilyl, TES = triethylsilyl and THF (or thf) = tetrahydrofuran.

All molecular weights are weight average unless otherwise noted. Molecular weights (weight average molecular weight (Mw) and number average molecular weight (Mn) were measured by Gel Permeation Chromatography (GPC) using a Waters 150 Gel Permeation Chromatograph equipped with a differential refractive index (DRI) and low angle light scattering (LS) detectors and were calibrated using polystyrene standards. Samples were run in 1,2,4-trichlorobenzene (135°C) using three Polymer Laboratories PC Gel mixed B columns in series. This general technique is discussed in "Liquid Chromatography of Polymers and Related Materials III'" J. Cazes Ed., Marcel Decker, 1981, page 207. No corrections for column spreading were employed; however, data on generally accepted standards, e.g. National Bureau of Standards Polyethylene 1475, demonstrated a precision with 0.2 units for Mw/Mn as calculated from elution times.

### Catalyst Preparation

### Example 1.

Synthesis of HC₆F₄OSi(iPr)₃: One equivalent of potassium hydride suspended in THF was added to a THF solution of 2,3,5,6-tetrafluorophenol (5 grams). Gas evolved. After stirring for 1 hour, one equivalent of triisopropylchlorosilane was added. Then, the reaction was stirred for 16 hours. After this, the solvent was replaced with pentane. Next, the resulting precipitate was filtered off. The product was purified by column chromatography (silica gel, hexanes): yield = 6.864 grams, 71 %. ¹H NMR (CDCl₃, 25° C): δ 6.65 (m, 1H), 1.29 (hp, 3H), 1.09 (d, 18H). ¹⁹F NMR (CDCl₃, 25° C): δ -142.4 (m, 2F), -159.1 (m, 2F).

### Example 2.

Synthesis of [Li(Et₂O)_{2.5}][B(C₆F₄OSi(iPr)₃)₄]: One equivalent of BuLi (1.6 M, hexane) was added to a cold diethyl ether solution of HC₆F₄OSi(iPr)₃ (6.864 grams). After stirring for 1 hour, one quarter equivalent of boron trichloride was added. The solution was allowed to slowly reach room temperature, and then was stirred for 16 hours. LiCI was filtered off. The solution that passed through the filter was reduced to approximately 30% of its original volume, and pentane was added to cause precipitation. The mixture was chilled at -35° C for 16 hours, and the product was filtered off (B[C₆F₄OSi(iPr)₃]₄Li(Et₂O)_{2.5}): yield = 6.804 grams, 86 %. ¹H NMR (CDCl₃, 25° C): δ 3.42 (q, 10H), 1.27 (hp, 12H), 1.15 (t, 15H), 1.05 (d, 72H). ¹⁹F NMR (CDCl₃, 25° C): δ -135.9 (m, 2F), -163.8 (m, 2F).

### Example 3.

Synthesis of [C₆H₅N(Bu)₂H][B(C₆F₄OSi(₁Pr)₃)₄]: One equivalent of C₆H₅N(Bu)₂HCl in dichloromethane was added to a dichloromethane solution of (B[C₆F₄OSi(iPr)₃]₄Li(Et₂O)_{2.5}) (5.974 grams). The reaction was stirred for 2 hours. LiCI was filtered off, and the solution volume was reduced to approximately 30 %. Pentane was added to cause precipitation. The mixture was chilled to -35° C for 16 hours. The product was filtered off. [C₆H₅N(Bu)₂H][B(C₆F₄OSi(iPr)₃)₄]: yield = 5.488 grams, 91 %. ¹H NMR (Toluene-d₈, 25° C): δ 7.29 (t, 2H), 7.12 (t, 1H), 6.88 (d, 2H), 3.15 (4H), 1.36-0.80 (m, 98H). ¹⁹F NMR (Toluene-d₈, 25° C): δ -129.6 (d, 8F), -157.0 (d, 8F).

### Polymerization reactions

Ethylene and propylene were copolymerized in a 2 liter, continuous stirred tank reactor operating at 100° C using bis(*para*-triethylsilyl-phenyl) methylene (2, 7-(di-*tert*-butyl) fluorenyl) (cyclopentadienyl) hafnium dimethyl as the metallocene catalyst. The compound of Example 3 was the cocatalyst activator. Runs 1 and 2 of Tables 1a and 1b are representative. For Run 1, the catalyst system was preactivated in toluene. For Run 2, the catalyst system was preactivated in hexane. The collection times listed on Table 1 ("Time") refer to the time after which the polymer solutions were collected. A 25% (wt) solution of tri-n-octyl aluminium was used as scavenger. The scavenger-to-catalyst ratio for these key reactions was 17. The polymers were precipitated with isopropyl alcohol and dried in a vacuum oven at 75 °C. The ethylene percentages in the samples were determined by IR (calibrated to NMR).

**Table 1a. Copolymerization Reactions of Ethylene and Propylene.**

| Run | Conc1 | Time2 | poly rate3 | %C2 | C2=feed | C3=feed | catalyst feed | 2=Conv4 | C3=Conv4 |
|---|---|---|---|---|---|---|---|---|---|
| | % | min | g/hr | in EP | g/hr | g/hr | g/hr | % | % |
| 1 | 5.6 | 30 | 216 | 73.5 | 198 | 114 | 0.0145 | 80.3 | 50.3 |
| 2 | 5.7 | 30 | 219 | 73.5 | 198 | 114 | 0.0138 | 81.4 | 51.0 |

| | | | | | | | | | |
|---|---|---|---|---|---|---|---|---|---|
| ¹ weight percent of polymer in solution. ² Time collecting sample. ³ The rate at which polymer was produced. ⁴ Percent of monomers converted. | | | | | | | | | |

**Table 1b. Copolymerization Reactions of Ethylene and Propylene.**

| Run | Wt.⁵ G | Catalyst productivity Kg/mole | Mn⁶ (x10⁻³) Daltons | PDI⁶ |
|---|---|---|---|---|
| 1 | 1931 | 14146 | 102 | 1.63 |
| 2 | 1924.7 | 15038 | 94 | 1.67 |

| | | | | |
|---|---|---|---|---|
| ⁵ Grams of polymer solution collected during the time given on column 3 of Table 1a. ⁶ Determined by GPC. | | | | |

## Claims

1. A composition of matter comprising a cation [Ct]⁺ and a anion [A]⁻, wherein the anion comprises a Group-13 element connected to at least one independently selected fluoroaryl ligand, wherein, at least one of the independently-selected fluoroaryl ligands is parasubstituted with a siloxy group represented by the symbols -OSiR₃, wherein each R is independently a C₁-C₃₀ hydrocarbyl or hydrocarbylsilyl substituent.

2. The composition of matter of claim 1 represented by the formula:
[Ct]⁺ [M(ArF)ₙ((ArF)OSiR₃)₄-n]⁻,
wherein
(a) [Ct]⁺ is an activating cation;
(b) M is boron or aluminum;
(c) ArF are each, independently, fluoroaryl groups, wherein each fluoroaryl group has at least one fluorine substitution;
(d) R are each, independently, C₁-C₂₀ hydrocarbyl or hydrocarbylsilyl substituent attached to the Si atom through a secondary or tertiary carbon atom; and
(e) n is 0 or 3.

3. The composition of claim 2 where [Ct]⁺ is one of anilinium cations, ammonium cations, trityl carbenium cations, Group-11 metal cations, silylium cations, the cations of the hydrated salts of Group-1 or -2 metals, and derivatives of anilinium, ammonium, trityl carbenium, and silylium cations containing C₁-C₂₀ hydrocarbyl, hydrocarbylsilyl, or hydrocarbylamine substituents for one or more hydrogen atoms of the cations.

4. The composition of claim 3 wherein ArF is a (per)fluorinated aryl group wherein at least one aryl group is phenyl, biphenyl, or naphthyl.

5. The composition of claim 4 wherein each R is a C₁-C₁₀, branched, or cyclic, aliphatic hydrocarbyl or hydrocarbylsilyl substituent.

6. The composition of claim 5 wherein at least one R is alkyltrialkylsilyl and the alkyl groups of the alkyltrialkylsilyl are independently selected from 1-20 carbon atom radicals.

7. The composition of matter of claim 5 wherein the fluoroaryl ligands are perfluorophenyl, wherein each aryl hydrogen atom, unless substituted with the siloxy substituent defined in claim 1, is substituted with fluorine or fluorocarbyl substituents.

8. The composition of matter of claim 7 wherein each of the fluoroaryl ligands is para-substituted with a siloxy group.

9. A composition of matter represented by the formula :
[Ct]⁺ [M(ArF)ₙ((ArF)OSiR₃)₄₋ₙ]⁻,
wherein
(a) [Ct]⁺ is an anilinium or ammonium cation;
(b) M is boron or aluminum
(c) ArF is a fluorinated aryl group wherein the aryl moiety is one of phenyl, biphenyl, and naphthyl;
(d) each R is a C₁-C₂₀ hydrocarbyl substituent attached to the Si atom through a secondary carbon atom;
(e) n is 0 or 3.

10. The composition of claim 9 wherein n = 0 and each R is isopropyl.

11. The composition of claim 9 wherein n = 3 and each R is isopropyl.

12. The use of the composition of one or more of claims 1 to 11 as co-catalyst precursor for an organometallic catalyst precursor to form an active olefin polymerization catalyst in solution polymerization.

13. The use of claim 12, wherein the metal of the organometallic catalyst precursor is selected from the group of Group-3 to 10 transition metal compounds containing at least one metal ligand abstractable by the co-catalyst precursor.

14. A process for preparing polyolefins by solution polymerization wherein an ionic catalyst system based on an organometallic transition metal cationic compound stabilized by the anion of the composition according to one or more of claims 1 to 11 is used.

## Patentansprüche

1. Stoffzusammensetzung, die ein Kation [Ct]⁺ und ein Anion [A]⁻ umfasst, wobei das Anion ein Element aus Gruppe 13 umfasst, das an mindestens einen unabhängig ausgewählten Fluorarylliganden gebunden ist, wobei mindestens einer der unabhängig ausgewählten Fluorarylliganden mit einer Siloxygruppe para-substituiert ist, die durch die Symbole -OSiR₃ wiedergegeben wird, wobei R unabhängig ein C₁- bis C₃₀-Kohlenwasserstoff oder ein Kohlenwasserstoffsylilsubstituent ist.

2. Stoffzusammensetzung nach Anspruch 1, die durch die Formel:
[Ct]⁺[M(ArF)ₙ ((ArF)OSiR₃)₄₋ₙ]⁻
wiedergegeben wird, in der
(a) [Ct]⁺ ein aktivierendes Kation ist,
(b) M Bor oder Aluminium ist,
(c) ArF jeweils unabhängig Fluorarylgruppen sind, von denen jede mindestens eine Fluorsubstitution aufweist,
(d) R jeweils unabhängig ein C₁- bis C₂₀-Kohlenwasserstoff oder Kohlenwasserstoffsilylsubstituent sind, der an das Si-Atom über ein sekundäres oder tertiäres Kohlenstoffatom gebunden ist, und
(e) n 0 oder 3 ist.

3. Zusammensetzung nach Anspruch 2, wobei [Ct]⁺ eines von **Aniliniumkationen, Ammoniumkationen,** Tritylcarbeniumkationen, Metallkationen aus Gruppe 11, Silyliumkationen, die Kationen der hydrierten Salze von Metallen aus Gruppe 1 oder Gruppe 2 und Derivate von Anilinium-, Ammonium-, Tritylcarbenium- und Silyliumkationen ist, die C₁- bis C₂₀-Kohlenwasserstoff-, Kohlenwasserstoffsilyl- oder Kohlenwasserstoffaminsubstituenten- für ein oder mehrere Wasserstoffatome des Kations enthalten.

4. Zusammensetzung nach Anspruch 3, wobei ArF eine (per)fluorierte Arylgruppe ist, wobei mindestens eine Arylgruppe Phenyl, Biphenyl oder Naphthyl ist.

5. Zusammensetzung nach Anspruch 4, wobei jedes R ein verzweigter oder cyclischer aliphatischer C₁- bis C₁₀-Kohlenwasserstoff- oder Kohlenwasserstoffsilylsubstituent ist.

6. Zusammensetzung nach Anspruch 5, wobei mindestens ein R Alkyltrialkylsilyl ist und die Alkylgruppen des Alkyltrialkylsilyls unabhängig ausgewählt sind aus Resten mit 1 bis 20 Kohlenstoffatomen.

7. Stoffzusammensetzung nach Anspruch 5, wobei die Fluorarylliganden Perfluorphenyl sind, wobei jedes Arylwasserstoffatom, so es nicht mit dem in Anspruch 1 definierten Siloxysubstituent substituiert ist, mit Fluor oder Fluorkohlenstoffsubstituenten substituiert ist.

8. Stoffzusammensetzung nach Anspruch 7, wobei jeder der Fluorarylliganden mit einer Siloxygruppe para-substituiert ist.

9. Eine Stoffzusammensetzung, die durch die Formel:
[Ct]⁺[M(ArF)ₙ ((ArF)OSiR₃)₄₋ₙ]⁻
wiedergegeben wird, in der
(a) [Ct]⁺ ein Anilinium- oder Ammoniumkation ist,
(b) M Bor oder Aluminium ist,
(c) ArF eine fluorierte Arylgruppe ist, in der die Aryleinheit eines von Phenyl, Biphenyl und Naphthyl ist,
(d) jedes R ein C₁- bis C₂₀-Kohlenwasserstoffsubstituent ist, der an das Si-Atom über ein sekundäres Kohlenstoffatom gebunden ist,
(e) n 0 oder 3 ist.

10. Zusammensetzung nach Anspruch 9, wobei n = 0 und jedes R Isopropyl ist.

11. Zusammensetzung nach Anspruch 9, wobei n = 3 und jedes R Isopropyl ist.

12. Verwendung der Zusammensetzung nach einem oder mehreren der Ansprüche 1 bis 11 als Co-Katalysatorvorläufer für einen organometallischen Katalysatorvorläufer, um einen bei Lösungspolymerisation aktiven Olefinpolymerisationskatalysator zu bilden.

13. Verwendung nach Anspruch 12, wobei das Metall des organometallischen Katalysatorvorläufers ausgewählt ist aus der Gruppe der Übergangsmetallverbindungen aus Gruppe 3 bis 10, die mindestens einen durch den Co-Katalysatorvorläufer abstrahierbaren Metallliganden aufweisen.

14. Verfahren zur Herstellung von Polyolefinen durch Lösungspolymerisation, bei dem ein ionisches Katalysatorsystem verwendet wird, das auf einer kationischen organometallischen Übergangsmetallverbindung beruht, die durch das Anion der Zusammensetzung gemäß einem oder mehreren der Ansprüche 1 bis 11 stabilisiert wird.

## Revendications

1. Composition de matière comprenant un cation [Ct]⁺ et un anion [A]⁻, dans laquelle l'anion comprend un élément du Groupe 13 relié à au moins un ligand fluoroaryle choisi indépendamment, dans laquelle, au moins un des ligands fluoroaryle choisis indépendamment est substitué en para par un groupe siloxy représenté par les symboles -OSiR₃, dans lesquels chaque radical R est indépendamment un substituant hydrocarbyle ou hydrocarbylsilyle en C₁-C₃₀.

2. Composition de matière selon la revendication 1 représentée par la formule :
[Ct]⁺ [M(ArF)ₙ((ArF)OSiR₃)₄₋ₙ]⁻,
dans laquelle
(a) [Ct]⁺ est un cation d'activation ;
(b) M représente le bore ou l'aluminium ;
(c) chacun des symboles ArF représente, indépendamment, un groupe fluoroaryle, dans lequel chaque groupe fluoroaryle possède au moins une substitution fluor ;
(d) chacun des symboles R représente, indépendamment, un substituant hydrocarbyle ou hydrocarbylsilyle en C₁-C₂₀ fixé à l'atome Si par l'intermédiaire d'un atome de carbone secondaire ou tertiaire ; et
(e) n est égal à 0 ou à 3.

3. Composition selon la revendication 2 dans laquelle [Ct]⁺ est un des cations anilinium, des cations ammonium, des cations tritylcarbénium, des cations d'un métal du Groupe 11, des cations silylium, des cations des sels hydratés de métaux du Groupe 1 ou 2, et des dérivés de cations anilinium, ammonium, tritylcarbénium et silylium contenant des substituants hydrocarbyle, hydrocarbylsilyle ou hydrocarbylamine en C₁-C₂₀ à la place d'un ou plusieurs atomes d'hydrogène des cations.

4. Composition selon la revendication 3 dans laquelle ArF est un groupe aryle (per)fluoré dans lequel au moins un groupe aryle est un groupe phényle, biphényle ou naphtyle.

5. Composition selon la revendication 4 dans laquelle chaque radical R est un substituant hydrocarbyle ou hydrocarbylsilyle aliphatique en C₁-C₁₀, ramifié ou cyclique.

6. Composition selon la revendication 5 dans laquelle au moins un radical R est un groupe alkyltrialkylsilyle et les groupes alkyle du radical alkyltrialkylsilyle sont choisis indépendamment parmi des radicaux à 1-20 atome de carbone.

7. Composition de matière selon la revendication 5 dans laquelle les ligands fluoroaryle sont des groupes perfluorophényle, dans lesquels chaque atome d'hydrogène du groupe aryle, à moins d'être substitué par le substituant siloxy défini dans la revendication 1, est substitué par des substituants fluor ou fluorocarbyle.

8. Composition de matière selon la revendication 7 dans laquelle chacun des ligands fluoroaryle est substitué en para par un groupe siloxy.

9. Composition de matière représentée par la formule :
[Ct]⁺ [M(ArF)ₙ((ArF)OSiR₃)₄₋ₙ]⁻,
dans laquelle
(a) [Ct]⁺ est un cation anilinium ou ammonium ;
(b) M représente le bore ou l'aluminium ;
(c) ArF est un groupe aryle fluoré dans lequel le groupement aryle est un des groupes phényle, biphényle et naphtyle ;
(d) chaque radical R est un substituant hydrocarbyle en C₁-C₂₀ fixé à l'atome Si par l'intermédiaire d'un atome de carbone secondaire ;
(e) n est égal à 0 ou à 3.

10. Composition selon la revendication 9 dans laquelle n = 0 et chaque radical R est un groupe isopropyle.

11. Composition selon la revendication 9 dans laquelle n = 3 et chaque radical R est un groupe isopropyle.

12. Utilisation de la composition selon une ou plusieurs des revendications 1 à 11 en tant que précurseur de co-catalyseur pour un précurseur de catalyseur organométallique pour former un catalyseur de polymérisation d'oléfine actif dans une polymérisation en solution.

13. Utilisation selon la revendication 12, dans laquelle le métal du précurseur de catalyseur organométallique est choisi dans le groupe des composés de métaux de transition des Groupes 3 à 10 contenant au moins un ligand métallique pouvant être soustrait par le précurseur de co-catalyseur.

14. Procédé de préparation de polyoléfines par polymérisation en solution dans lequel on utilise un système de catalyseur ionique à base de composé cationique de métal de transition organométallique stabilisé par l'anion de la composition selon une ou plusieurs des revendications 1 à 11.
